# EUROPEAN PATENT SPECIFICATION

(11) **EP 1 168 243 B1**
(45) Date of publication and mention of the grant of the patent: **09.06.2004**
(21) Application number: 01118152.6
(22) Date of filing: 27.09.1996
(51) Int. Cl.: G06T 5/20

(54) **Image processing method and apparatus**
Verfahren und Vorrichtung zur Bildverarbeitung
Méthode et appareil de traitement d'images

(30) Priority: 29.09.1995 JP 25208895; 29.09.1995 JP 25208995; 29.09.1995 JP 25209095; 12.12.1995 JP 32312195; 28.06.1996 JP 16906296; 28.06.1996 JP 16906396; 28.06.1996 JP 16906496; 28.06.1996 JP 16906596; 02.07.1996 JP 17249896; 11.07.1996 JP 18215596; 11.07.1996 JP 18215696
(43) Date of publication of application: 02.01.2002
(62) Divisional of application: 96115572.8
(73) Proprietor: Fuji Photo Film Co., Ltd., Kanagawa (JP)
(72) Inventor: Ito, Wataru c/o Fuji Photo Film Co., Ltd., Kanagawa-ken (JP); Yamada, Masahiko c/o Fuji Photo Film Co., Ltd., Kanagawa-ken (JP)
(74) Representative: Klunker . Schmitt-Nilson . Hirsch

(56) References cited:
- EP-A- 0 313 042
- WO-A-89/07799
- US-A- 4 903 205
- US-A- 5 051 902
- US-A- 5 425 113
- VANZO A ET AL: "AN IMAGE ENHANCEMENT TECHINQUE USING POLYNOMIAL FILTERS" PROCEEDINGS OF THE INTERNATIONAL CONFERENCE ON IMAGE PROCESSING (IC, AUSTIN, NOV. 13 - 16, 1994, vol. 2 OF 3, 13 November 1994 (1994-11-13), pages 477-481, XP000522677 INSTITUTE OF ELECTRICAL AND ELECTRONICS ENGINEERS

## Description

### BACKGROUND OF THE INVENTION

### Field of the Invention

This invention relates to an image processing method and apparatus.

### Description of the Prior Art

Techniques for obtaining an image signal, which represents an image, carrying out appropriate image processing on the image signal, and thereafter reproducing a visible image from the processed image signal have heretofore been carried out in various fields. For example, in methods for carrying out such techniques, an image is transformed into multi-resolution images by a Fourier transform, a wavelet transform, a sub-band transform, or the like, and the image signal representing the image is thereby decomposed into signals falling within a plurality of different frequency bands. Thereafter, of the decomposed signals, a signal falling within a desired frequency band is subjected to predetermined image processing.

As one of such methods, a method has been proposed, wherein an original image is transformed into multi-resolution images by utilizing an unsharp mask filter as in the technique using the wavelet transform, and image processing is then carried out on an unsharp image signal representing the unsharp image of each solution. The proposed method is utilized in image processing of radiation images, and the like.

Also, in the field of radiation image processing, when a radiation image (i.e., a tomographic image) of a tomographic plane is recorded with a tomographic image recording operation described in, for example, U.S.P. 4,581,535, it often occurs that the amount of transmitted radiation changes sharply at a portion, which is located at a position other than the tomographic plane. In such cases, an image pattern of such a portion occurs as an interfering pattern (or an interfering shadow) in the direction, along which the recording medium moves, and at a center region which is to be used in the radiation image. (Such an interfering pattern will hereinafter be referred to as the "flow pattern.") An image processing method for eliminating the flow pattern is proposed in, for example, Japanese Unexamined Patent Publication No. 3(1991)-276265. With the proposed image processing method, low frequency components corresponding to the flow pattern are removed from the image signal, which represents the radiation image obtained from the tomographic image recording operation, and an image free of the flow pattern is thereby obtained from the resulting image signal. The unsharp image signal described above can also be utilized in the process for eliminating the flow pattern.

The applicant proposed the methods for carrying out frequency emphasis processing on an image signal by utilizing an unsharp image signal in order that a visible radiation image having good image quality can be reproduced and used as an effective tool in, particularly, the accurate and efficient diagnosis of an illness. The methods for carrying out the frequency emphasis processing are disclosed in, for example, U.S. Patent Nos. 4,315,318 and 4,317,179. With the frequency emphasis processing, an unsharp mask image signal (hereinbelow often referred to as the unsharp image signal) Sus is subtracted from an original image signal Sorg, which has been detected from a radiation image. The obtained difference value is multiplied by an emphasis coefficient β. The resulting product is then added to the original image signal Sorg. In this manner, predetermined frequency components in the image can be emphasized. The frequency emphasis processing is represented by Formula (1) shown below.$\text{Sproc=Sorg+β×(Sorg-Sus)}$ wherein Sproc represents the signal obtained from the frequency emphasis processing, Sorg represents the original image signal, Sus represents the unsharp image signal, and β represents the emphasis coefficient.

The unsharp image signal Sus can be obtained by carrying out an operation with Formula (2)$\text{Sus= Σ Sorg/ (M×N)}$ on the image signal components of the original image signal Sorg, which represent MXN picture elements surrounding a middle picture element. By way of example, each of picture elements located at every second row and every second column in the array of picture elements constituting the image is taken as the middle picture element.

The unsharp image signal Sus representing an unsharp image, which results from the unsharp mask processing and has a resolution lower than the resolution of the original image, can also be obtained by utilizing an unsharp mask filter, which has a predetermined size, and calculating the mean value or the weighted mean value of the values of the picture elements located within the unsharp mask filter.

### SUMMARY OF THE INVENTION

An object of the present invention is to provide an image processing method, wherein frequency emphasis processing is carried out on an original image signal by utilizing a plurality of unsharp image signals such that no artifact may occur in a region in the vicinity of an edge in the image, and such that a processed image having good image quality may be obtained.

A further object of the present invention is to provide an apparatus for carrying out the image processing method.

EP-A-0 313 042 discloses an image processing method and image processing apparatus, which have certain features that are also used in the present invention as claimed. Specifically, this reference discloses to form a plurality of unsharp mask image signals, which have different frequency response characteristics, from the original image signal an output signal is made where grain noise in the original image is attenuated.

The present invention further provides an image processing apparatus, wherein a signal concerning high frequency components of an original image is added to an original image signal, which represents the original image, and the high frequency components of the original image are thereby emphasized, the apparatus comprising:
i) an unsharp mask image signal forming means for forming a plurality of unsharp mask image signals, which have different frequency response characteristics, from the original image signal,
ii) a band-limited image signal forming means for forming a plurality of band-limited image signals, each of which represents one of signals falling within a plurality of different frequency bands of the original image signal, from the original image signal and the plurality of said unsharp mask image signals, or from the plurality of said unsharp mask image signals,
iii) a conversion means for carrying out a converting process on at least a single band-limited image signal, which is among the plurality of said band-limited image signals, such that at least a portion of the band-limited image signal may become small, and thereby forming a plurality of converted image signals, and
iv) a frequency emphasis processing means for integrating the plurality of said converted image signals, and thereby obtaining the signal concerning the high frequency components of the original image, which signal is to be added to the original image signal.

With the image processing method and apparatus in accordance with the present invention, the converting process is carried out on at least a single band-limited image signal, which is among the plurality of the band-limited image signals, such that at least a portion of the band-limited image signal may become small. The plurality of the converted image signals are thereby formed. The converted image signals are then integrated, and the signal concerning the high frequency components of the original image, which signal is to be added to the original image signal, is thereby obtained. Therefore, a band-limited image signal having a signal value, the absolute value of which is comparatively large, can be converted into a signal, which has small influence upon the signal concerning the high frequency components to be added to the original image signal, and which has substantially the same characteristics as a signal obtained with an unsharp mask having a small size. Accordingly, in the region in the vicinity of an edge in the image, at which the image density changes sharply, the influence of a signal, which causes an artifact to occur, can be weakened. As a result, an image having no artifact and having good image quality can be obtained from the processing.

### BRIEF DESCRIPTION OF THE DRAWINGS

Figure 1 is a block diagram showing the concept behind the multi-resolution transforming apparatus in accordance with the present invention,
Figure 2 is a block diagram showing how a plurality of unsharp image signals are formed,
Figure 3 is an explanatory view showing a (one-dimensional) filter, which is used in the process for forming the unsharp image signals,
Figure 4 is an explanatory view showing how a filtering process is carried out,
Figure 5 is a graph showing frequency characteristics of filtering-processed image signals,
Figure 6 is an explanatory view showing a (two-dimensional) filter, which may be used in a filtering process means,
Figure 7 is an explanatory view showing a filter, which is used in an interpolating operation carried out on a filtering-processed image signal B1,
Figure 8 is an explanatory view showing how an interpolating operation is carried out,
Figure 9 is an explanatory view showing a filter, which is used in an interpolating operation carried out on a filtering-processed image signal B2, Figure 10 is an explanatory view showing how an interpolating operation is carried out,
Figure 11 is a graph showing frequency characteristics of unsharp image signals,
Figure 12 is a block diagram showing the concept behind the image processing apparatus in accordance with the present invention,
Figure 13 is a block diagram showing an embodiment of the image processing apparatus in accordance with the present invention,
Figure 14 is a graph showing examples of frequency characteristics of band-limited image signals,
Figure 15 is a graph showing an example of a function, which is used in a converting process carried out on a band-limited image signal in a conversion means,
Figure 16 is a graph showing an example of frequency characteristics of a processed image signal, which is obtained with the image processing apparatus in accordance with the present invention,
Figure 17 is a graph showing a different example of frequency characteristics of a processed image signal, which is obtained with the image processing apparatus in accordance with the present invention,
Figure 18 is a graph showing a different example of a function, which is used in a converting process carried out on a band-limited image signal in the conversion means,
Figure 19 is a graph showing different examples of frequency characteristics of band-limited image signals,
Figure 20 is a graph showing examples of functions used in a converting process carried out on band-limited image signals in accordance with the portions of an object, the images of which were recorded,
Figure 21 is a graph showing examples of functions used in a converting process carried out on band-limited image signals in accordance with the levels of frequency bands,
Figure 22 is a graph showing different examples of functions used in a converting process carried out on band-limited image signals in accordance with frequency bands,
Figure 23 is a graph showing frequency characteristics of a processed image signal, which is obtained with the functions shown in Figure 21,
Figure 24 is a graph showing frequency characteristics of a processed image signal, which is obtained with the functions shown in Figure 22,
Figure 25 is a graph showing examples of functions, which are used in a converting process carried out in the conversion means,
Figure 26 is a graph showing different examples of functions, which are used in a converting process carried out in the conversion means,
Figure 27 is a graph showing examples of functions, which have both of the characteristics of the functions shown in Figure 25 and the characteristics of the functions shown in Figure 26,
Figures 28A-1, 28B-1, and 28C-1 are graphs showing frequency characteristics with respect to respective frequency bands,

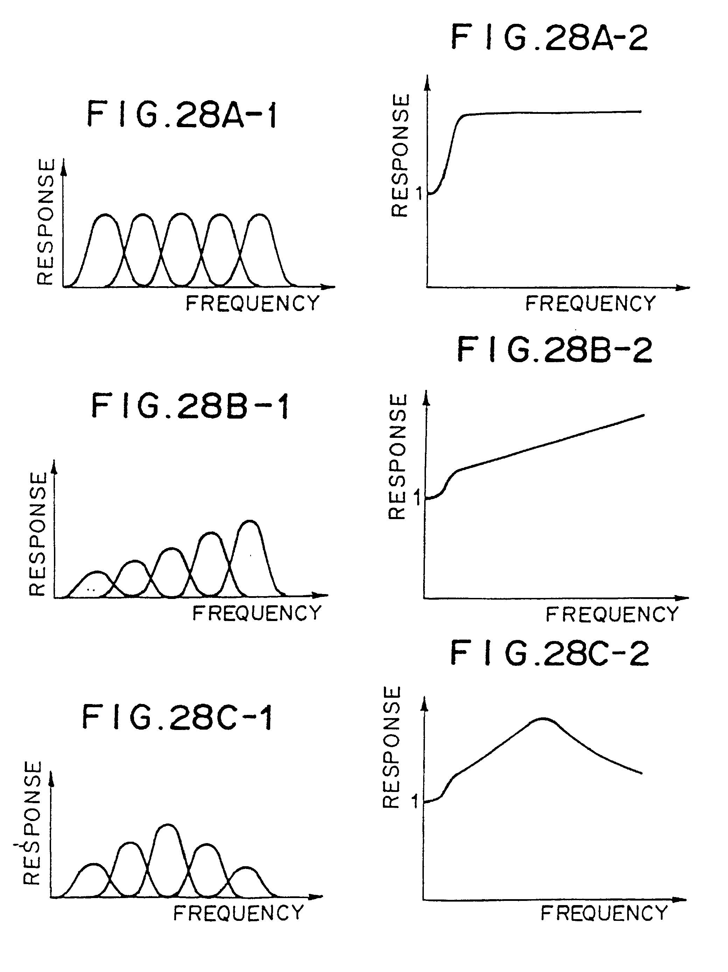

Figures 28A-2, 28B-2, and 28C-2 are graphs showing frequency characteristics with respect to the entire frequency band, which correspond respectively to Figures 28A-1, 28B-1, and 28C-1,

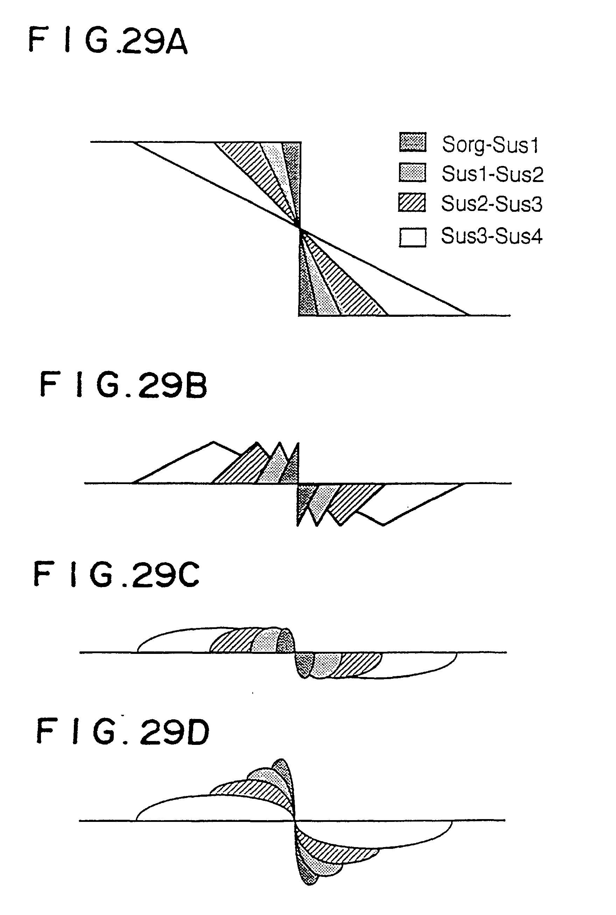

Figures 29A, 29B, 29C, and 29D are explanatory views showing the problems encountered when all of band-limited image signals are converted with a single kind of function,

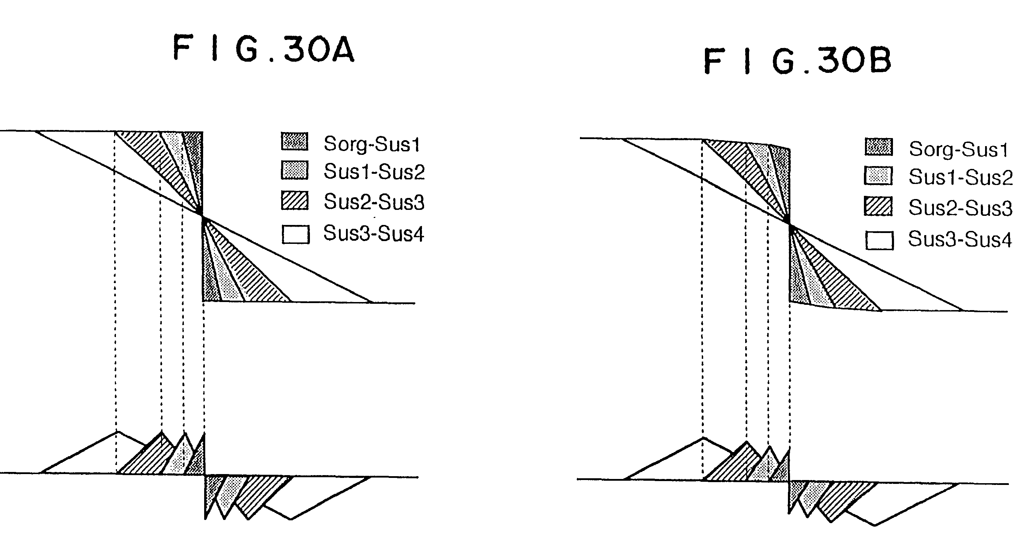

Figure 30A is an explanatory view showing ideal patterns of frequency components at an edge in the image,
Figure 30B is an explanatory view showing actual patterns of frequency components at an edge in the image,

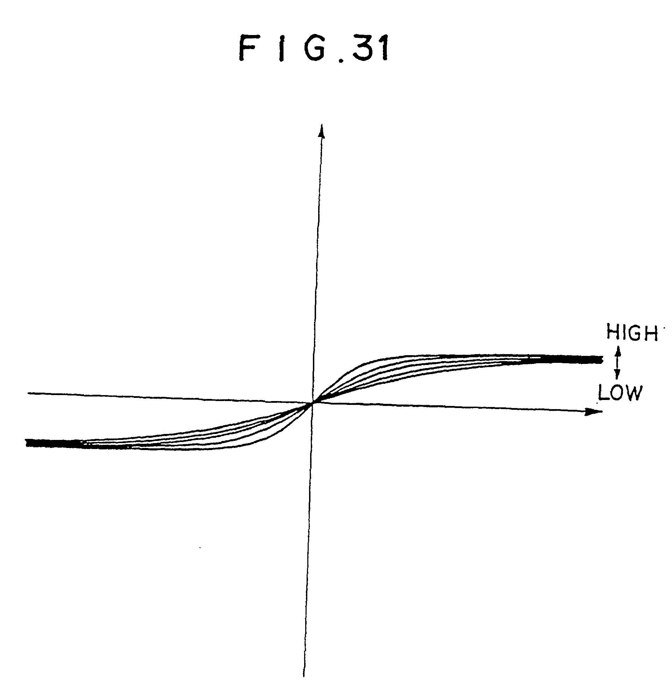

Figure 31 is a graph showing examples of functions, which are used for the conversion of band-limited image signals in cases where the value of an emphasis coefficient is small,

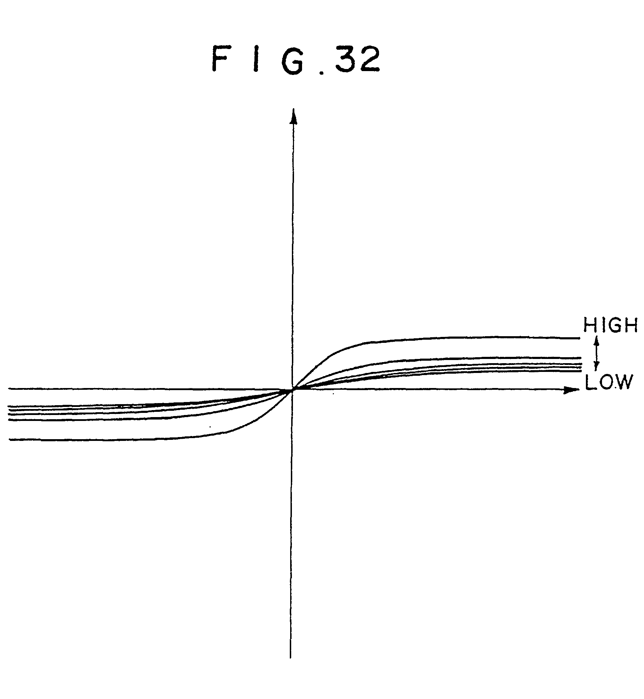

Figure 32 is a graph showing examples of functions, which are used for the conversion of band-limited image signals in cases where the value of an emphasis coefficient is large,

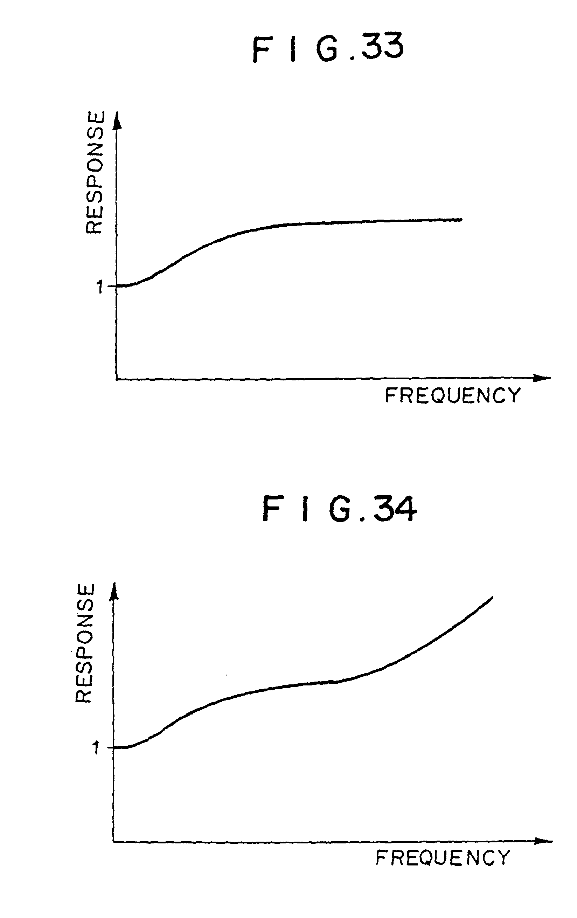

Figure 33 is a graph showing the response of an image signal, which is obtained when the functions shown in Figure 31 are used for the conversion,
Figure 34 is a graph showing the response of an image signal, which is obtained when the functions shown in Figure 32 are used for the conversion,

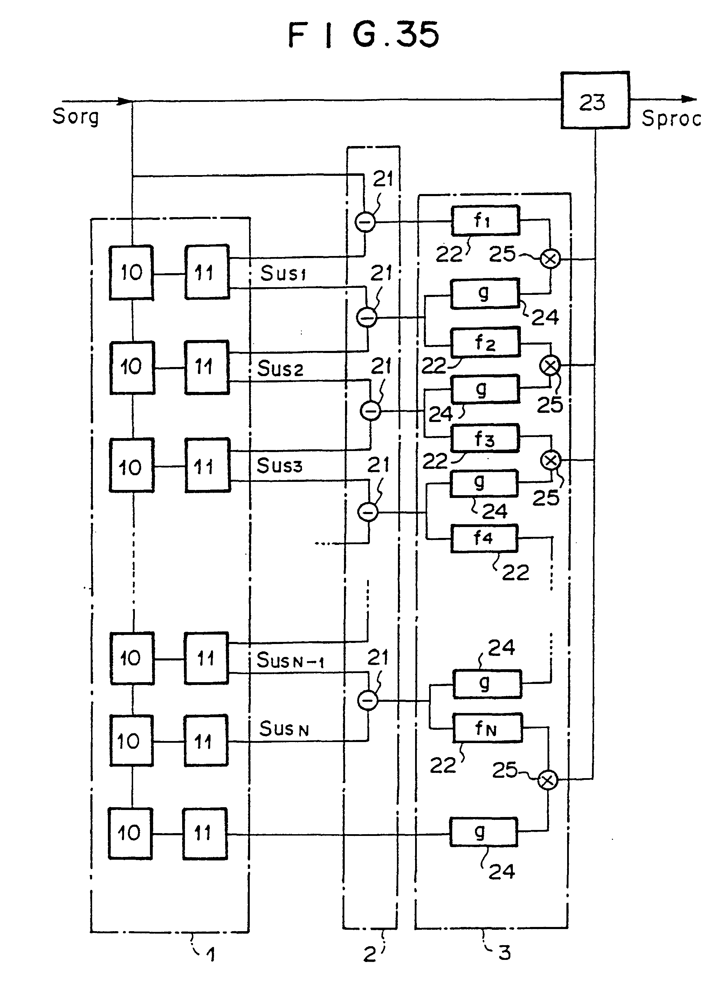

Figure 35 is a block diagram showing a different embodiment of the image processing apparatus in accordance with the present invention,

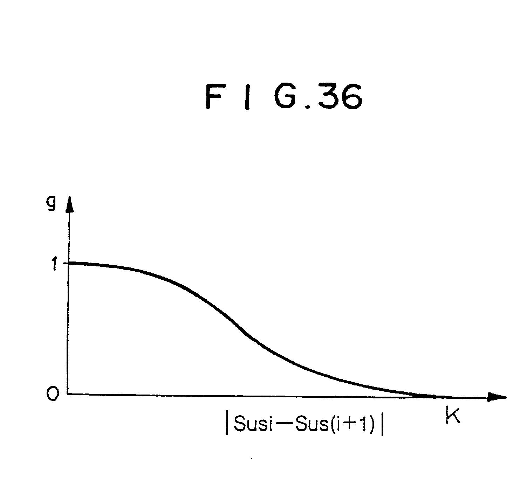

Figure 36 is a graph showing an example of a function, which is used in a magnification ratio signal forming means,

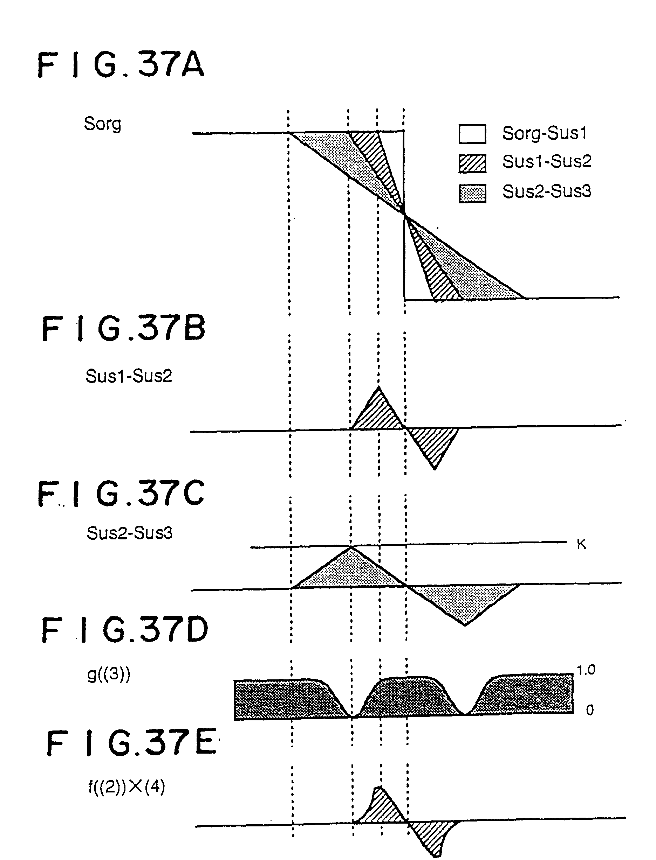

Figures 37A, 37B, 37C, 37D, and 37E are explanatory views showing the effects of the embodiment shown in Figure 35,
Figures 38A-1, 38B-1, 38C-1, 38D-1, 38E-1, and Figures 38A-2, 38B-2, 38C-2, 38D-2, 38E-2 are explanatory views showing the effects of the embodiment shown in Figure 35,

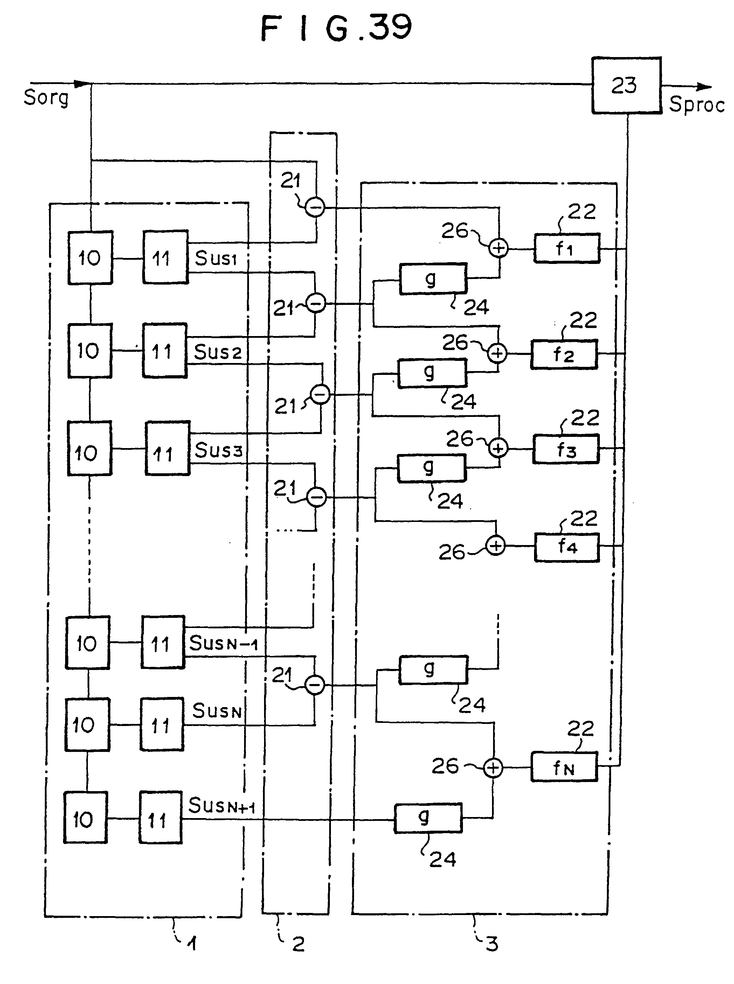

Figure 39 is a block diagram showing a further different embodiment of the image processing apparatus in accordance with the present invention,

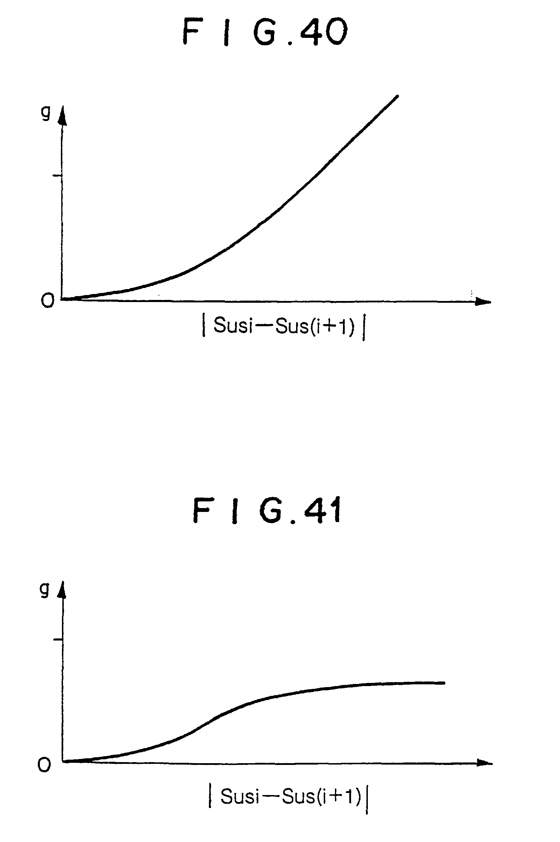

Figure 40 is a graph showing an example of a function for forming an auxiliary image signal by converting a band-limited image signal,
Figure 41 is a graph showing a different example of a function for forming an auxiliary image signal by converting a band-limited image signal,

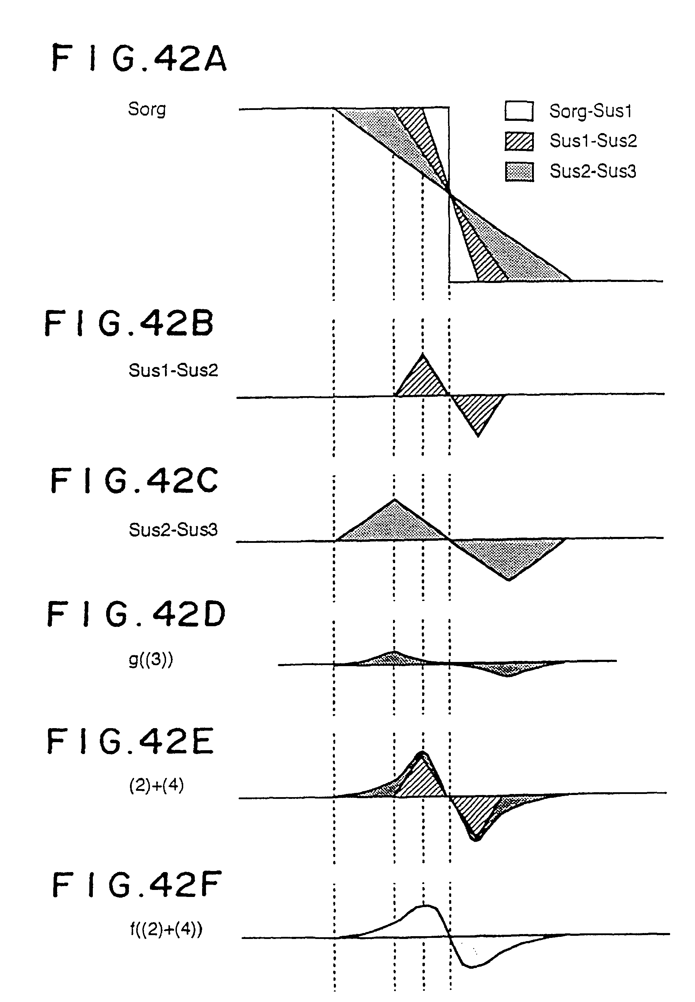

Figures 42A, 42B, 42C, 42D, 42E, and 42F are explanatory views showing the effects of the embodiment shown in Figure 39.

### DESCRIPTION OF THE PREFERRED EMBODIMENTS

The present invention will hereinbelow be described in further detail with reference to the accompanying drawings.

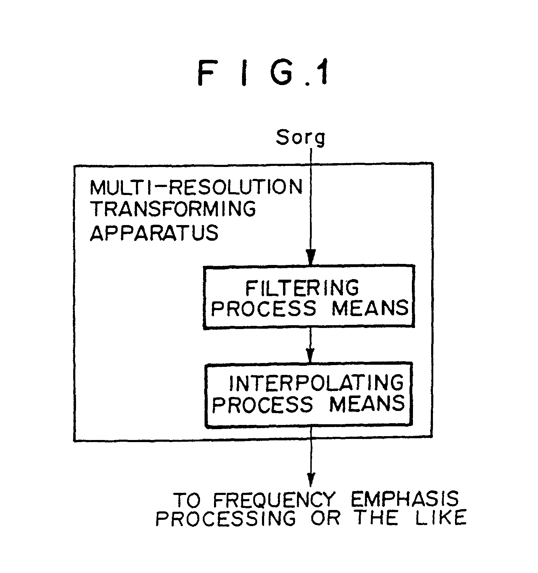

Figure 1 is a block diagram showing the concept behind the multi-resolution transforming apparatus in accordance with the present invention. As illustrated in Figure 1, the multi-resolution transforming apparatus comprises a filtering process means 10 and an interpolating process means 11. The filtering process means 10 carries a filtering process on a received original image signal Sorg. The filtering process is carried out by using a filter having a predetermined size and with respect to each of picture elements selected at predetermined intervals, a first filtering-processed image being thereby obtained. Thereafter, the filtering process means 10 carries out the filtering process with the filter, which has the predetermined size, on the first filtering-processed image, a second filtering-processed image being thereby obtained. In this manner, the filtering process means 10 successively carries out the filtering process on the respective filtering-processed images, which are thus obtained successively. The interpolating process means 11 carries out an interpolating operation process on the plurality of the filtering-processed images and thereby obtains multi-resolution unsharp image signals, each of which is constituted of the same number of picture elements as that of the picture elements constituting the original image, i.e. each of which has the same size as the size of the original image.

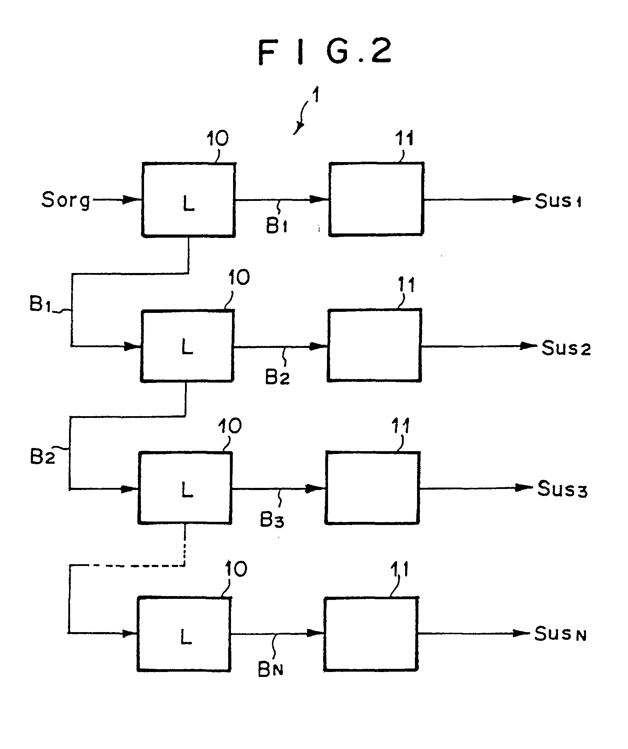

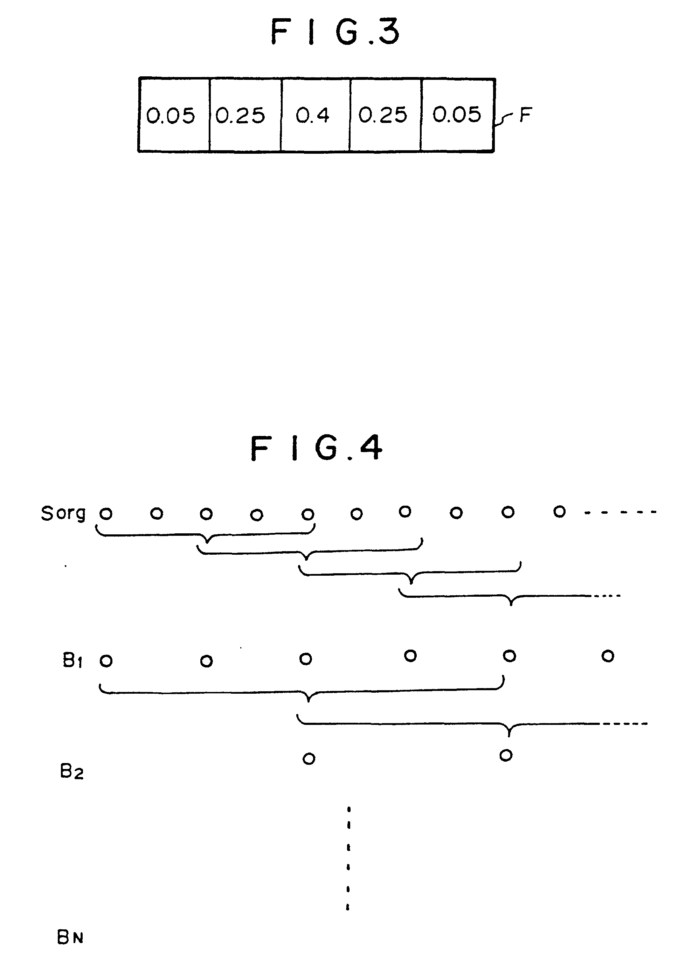

Figure 2 is a block diagram showing how the plurality of the unsharp image signals are formed in the multi-resolution transforming apparatus shown in Figure 1. As illustrated in Figure 2, the digital original image signal Sorg representing the original image is subjected to the filtering process, which is carried out with a low pass filter L in the filtering process means 10. As the low pass filter L, by way of example, a 5×1 grid-like filter F shown in Figure 3 may be used. The filter F approximately corresponds to a one-dimensional Gaussian distribution. The filter F may be represented by Formula$\text{f(t) = e} {\text{}}^{\text{-} \frac{{\text{t}}^{\text{2}}}{{\text{2σ}}^{\text{2}}}}$ wherein σ=1. The Gaussian signal has good locality characteristics both in the frequency space and in the spatial domain and is therefore utilized as the filter F.

The filtering process is carried out with the filter F along x and y directions in the array of picture elements of the original image. In this manner, the filtering process is carried out with respect to the entire original image signal Sorg.

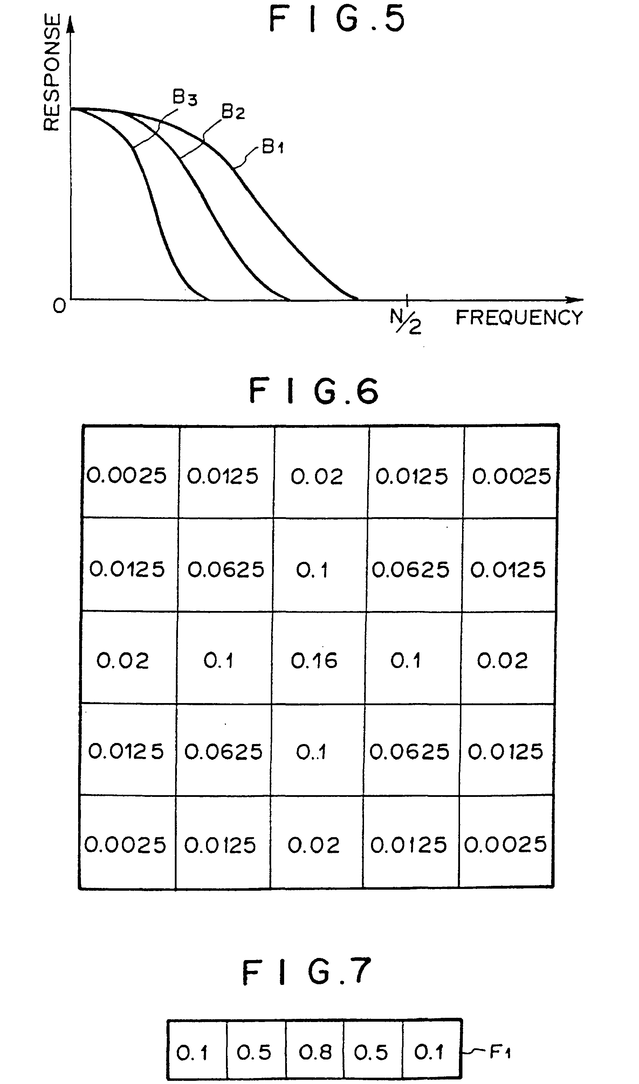

In the filtering process means 10, the filtering process with the filter F is carried out in the manner described below. Figure 4 is an explanatory view showing how the filtering process is carried out. As illustrated in Figure 4, the filtering process is carried out by using the filter F shown in Figure 3 and with respect to the image signal components of the original image signal Sorg, which represent the picture elements located at every second row and every second column in the array of picture elements of the original image. From the filtering process, a filtering-processed image signal B1 is obtained. The filtering-processed image signal B1 represents a filtering-processed image, which has a size 1/4 times (1/2 times in each of the x direction and the y direction) as large as the size of the original image. Thereafter, the filtering process is carried out on the filtering-processed image signal B1 by using the filter F. The filtering process is carried out with respect to the image signal components of the filtering-processed image signal B1, which represent the picture elements located at every second row and every second column in the array of picture elements of the filtering-processed image. The filtering process with the filter F is thus carried out successively, and n number of filtering-processed image signals Bk, where k=1 to n, are thereby obtained. Each of the filtering-processed image signals Bk represents the filtering-processed image, which has a size 1/2^{2k} times as large as the size of the original image. Also, the filtering-processed image signals Bk have the frequency characteristics shown in Figure 5. As illustrated in Figure 5, the filtering-processed image signals Bk have the response characteristics such that the high frequency components may have been eliminated successively as the value of k becomes large. In Figure 5, the response characteristics of only the three filtering-processed image signals Bk, where k=1, 2, and 3, are shown.

In the embodiment described above, the filtering process is carried out by using the one-dimensional filter F shown in Figure 3 and along the x direction and the y direction of the original image. Alternatively, as illustrated in Figure 6, the filtering process may be carried out on the original image signal Sorg and each of the filtering-processed image signals Bk by using a 5×5 two-dimensional filter.

Thereafter, in the interpolating process means 11 shown in Figure 2, the interpolating operation process is carried out on each of the filtering-processed image signals Bk. From the interpolating operation process, multi-resolution unsharp images having the same size as the size of the original image are obtained. How the interpolating operation process is carried out will be described hereinbelow.

As the interpolating operation technique, one of various techniques, such as a B spline technique, may be employed. In this embodiment, the filter F in accordance with the Gaussian signal is used as the low pass filter, and therefore a Gaussian signal is utilized as the interpolation coefficient for carrying out the interpolating operation. The interpolation coefficient utilizing the Gaussian signal is represented by Formula (5)$\text{I(t) = 2 · σ · e} {\text{}}^{\text{-} \frac{{\text{t}}^{\text{2}}}{{\text{2σ}}^{\text{2}}}}$ wherein σ=2^{k-1}.

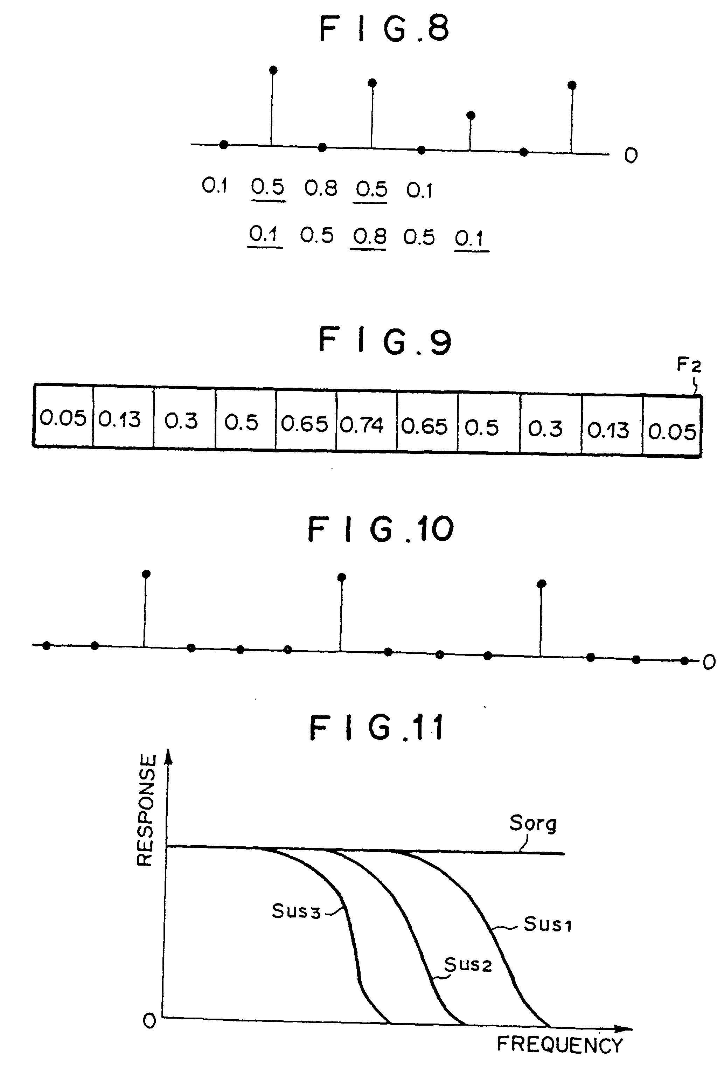

In the interpolating operation for the filtering-processed image signal B1, k=1 and therefore σ =1. In cases where σ=1 in Formula (5) shown above, the filter for carrying out the interpolating operation becomes identical with a 5×1 one-dimensional filter F1 shown in Figure 7. Firstly, a single picture element having a value of 0 is inserted between two adjacent picture elements in the filtering-processed image represented by the filtering-processed image signal B1. In this manner, the size of the filtering-processed image represented by the filtering-processed image signal B1 is enlarged to the same size as the size of the original image. Figure 8 illustrates the filtering-processed image signal B1, which has been obtained from the insertion of the picture elements having a value of 0, as a one-dimensional pattern. Thereafter, a filtering process is carried out on the filtering-processed image signal B1, which has been obtained from the insertion of the picture elements having a value of 0, by using the filter F1 shown in Figure 7.

The filter F1 shown in Figure 7 is the 5×1 filter. As illustrated in Figure 8, in the filtering-processed image represented by the filtering-processed image signal B1 obtained from the inserting operation, a single picture element having a value of 0 has been inserted between two adjacent picture elements. Therefore, the filtering process, which is carried out on the filtering-processed image signal B1 by using the filter F1, becomes substantially equivalent to the filtering process, which is carried out with two kinds of filters, i.e. a 2×1 filter (0.5, 0.5) and a 3×1 filter (0.1, 0.8, 0.1). From the filtering process, an unsharp image signal Sus1 is obtained, which is constituted of the same number of image signal components as that in the original image signal Sorg, i.e. which represents an unsharp image having the same size as that of the original image.

Thereafter, a filtering process is carried out on the filtering-processed image signal B2. In the interpolating operation for the filtering-processed image signal B2, k=2 and therefore σ=2. In cases where σ=2 in Formula (5) shown above, the filter for carrying out the interpolating operation becomes identical with a 11×1 one-dimensional filter F2 shown in Figure 9. Firstly, as illustrated in Figure 10, three picture elements having a value of 0 are inserted between two adjacent picture elements in the filtering-processed image represented by the filtering-processed image signal B2. In this manner, the size of the filtering-processed image represented by the filtering-processed image signal B2 is enlarged to the same size as the size of the original image. Thereafter, a filtering process is carried out on the filtering-processed image signal B2, which has been obtained from the insertion of the picture elements having a value of 0, by using the filter F2 shown in Figure 9.

The filter F2 shown in Figure 9 is the 11×1 filter. As illustrated in Figure 10, in the filtering-processed image represented by the filtering-processed image signal B2 obtained from the inserting operation, three picture elements having a value of 0 have been inserted between two adjacent picture elements. Therefore, the filtering process, which is carried out on the filtering-processed image signal B2 by using the filter F2, becomes substantially equivalent to the filtering process, which is carried out with four kinds of filters, i.e. a 2×1 filter (0.5, 0.5) and 3×1 filters (0.3, 0.65, 0.05), (0.13, 0.74, 0.13), and (0.05, 0.65, 0.3). From the filtering process, an unsharp image signal Sus2 is obtained, which is constituted of the same number of image signal components as that in the original image signal Sorg.

The filtering process described above is carried out on all of the filtering-processed image signals Bk. In the interpolating operation for the filtering-processed image signals Bk, a filter having a length of 3×2^{k}-1 is prepared in accordance with Formula (5). Also, 2^{k}-1 number of picture elements having a value of 0 are inserted between two adjacent picture elements of each filtering-processed image signal Bk, and the size of the filtering-processed image represented by the filtering-processed image signal Bk is thereby enlarged to the same size as that of the original image. Thereafter, the filtering process is carried out on the filtering-processed image signal Bk, which has been obtained from the insertion of the picture elements having a value of 0, by using the filter having a length of 3× 2^{k}-1.

The filtering process carried out with the filter having a length of 3×2^{k}-1 becomes equivalent to the filtering process, which is carried out by using a filter having a length of 2 or 3 with a period of 2^{k}. From the filtering process, n number of unsharp image signals Susk are obtained. When visible images are reproduced from the unsharp image signals Susk, multi-resolution unsharp images are obtained, which have different levels of resolution, i.e. which have different frequency response characteristics. As described above, even though the length of the filter becomes long, the filtering process becomes substantially equivalent to the filtering process carried out with a filter having a length of 2 or 3. Therefore, even though the length of the filter becomes long, the amount of operations does not become very large. Accordingly, the amount of operations can be kept small, and the multi-resolution unsharp image signals Susk can be obtained quickly.

In this embodiment, the filtering process is carried out along the x direction and the y direction of the image by using the one-dimensional filter having a length of 3×2^{k}-1. Alternatively, a two-dimensional filter may be prepared previously, the filtering process of each of the filtering-processed images may be carried out by using the two-dimensional filter, and the unsharp image signals Susk may thereby be obtained. In such cases, as the filter used in the filtering process for carrying out the interpolating operation on the filtering-processed image, a (3×2^{k}-1)×(3×2^{k}-1) filter is used. As in cases where the one-dimensional filter described above is used, the filtering process with the two-dimensional filter becomes equivalent to the filtering process, which is carried out by using a 2×2 or 3×3 filter with a period of 2^{k}. Therefore, as in cases where the one-dimensional filter described above is used, even though the size of the filter becomes large, the amount of operations for carrying out the filtering process does not become very large.

As described above, with the multi-resolution transforming method and apparatus in accordance with the present invention, even if the size of the filter used for the filtering process is not set to be large, the low-resolution images can be obtained in steps. Therefore, the problems can be prevented from occurring in that the amount of operations becomes large due to an increase in the size of the filter. As a result, the unsharp image signals can be obtained quickly. Also, the filtering process is carried out by repeatedly using the same filter. Therefore, it becomes unnecessary to use a plurality of filters having different sizes. Accordingly, it becomes unnecessary to provide a memory having a large capacity for storing the information representing the plurality of filters, and the multi-resolution transforming apparatus can be kept small in size.

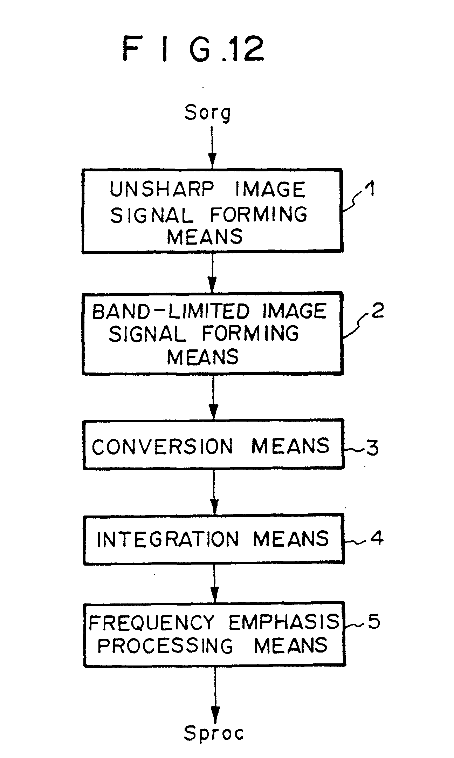

The unsharp image signals Susk having been obtained in the manner described above have the frequency characteristics shown in Figure 11. As illustrated in Figure 11, the unsharp image signals Susk have the frequency characteristics such that the high frequency components of the original image signal Sorg may have been eliminated successively as the value of k becomes large.

Embodiments of the image processing method and apparatus in accordance with the present invention, wherein processing for emphasizing predetermined frequency components of the original image signal is carried out by utilizing the unsharp image signals, will be described hereinbelow.

Figure 12 is a block diagram showing an embodiment of the image processing apparatus in accordance with the present invention, wherein the multi-resolution transforming apparatus shown in Figure 1 is provided as an unsharp image signal forming means. As illustrated in Figure 12, the image processing apparatus comprises an unsharp image signal forming means 1 for forming multi-resolution unsharp image signal Susk, where k=1 to n, which have different frequency response characteristics, from a received original image signal Sorg. The image processing apparatus also comprises a band-limited image signal forming means 2 for forming a plurality of band-limited image signals from the unsharp image signals Susk, which have been formed by the unsharp image signal forming means 1. The image processing apparatus further comprises a conversion means 3 for carrying out a converting process on at least a single band-limited image signal, which is among the plurality of the band-limited image signals having been formed by the band-limited image signal forming means 2, such that at least a portion of the band-limited image signal may become small. The image processing apparatus still further comprises an integration means 4 for integrating the converted band-limited image signals, which have been obtained from the conversion means 3, and thereby forming an integration signal. The image processing apparatus also comprises a frequency emphasis processing means 5 for multiplying the integration signal by a predetermined emphasis coefficient, adding the resulting product to the original image signal Sorg, and thereby obtaining a processed image signal Sproc, in which the high frequency components of the original image have been emphasized.

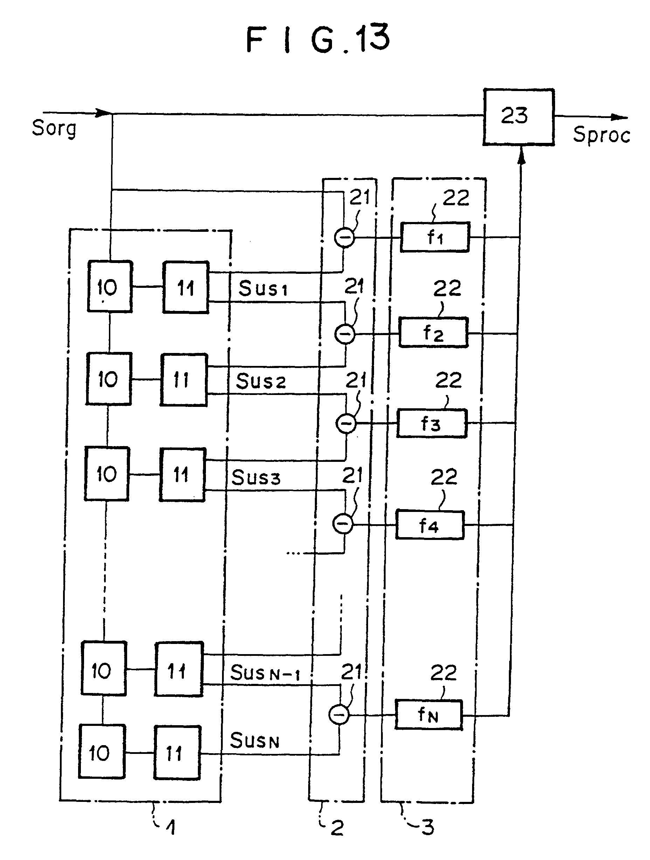

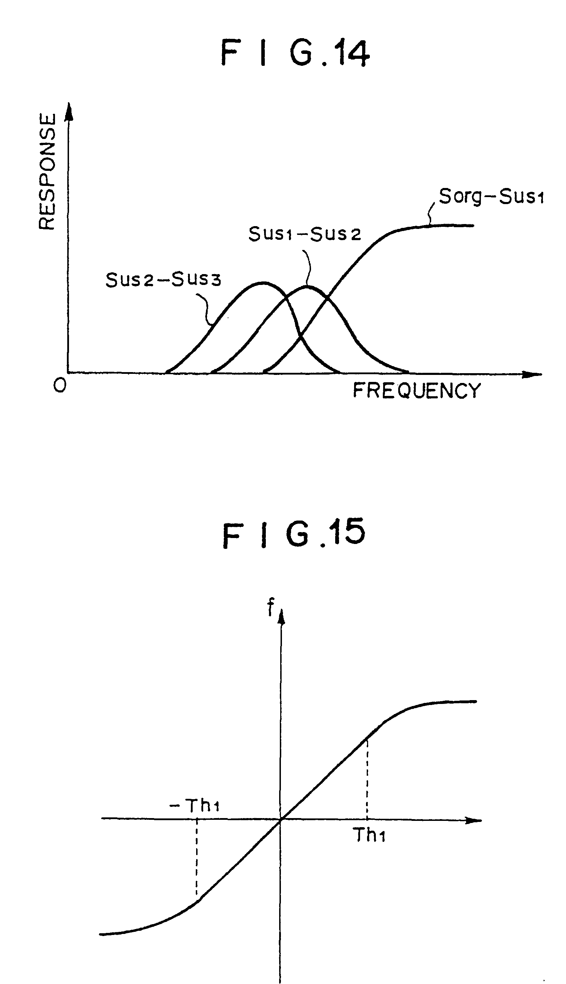

Figure 13 is a block diagram showing the entire constitution of the embodiment of the image processing apparatus. As illustrated in Figure 13, the plurality of the unsharp image signals Susk, which have been formed by the unsharp image signal forming means 1, are then processed in the band-limited image signal forming means 2 and the conversion means 3. Firstly, the band-limited image signals are formed from the original image signal Sorg and the plurality of the unsharp image signals Susk, which have been formed by the unsharp image signal forming means 1. Each of the band-limited image signals is obtained from a subtracter 21, which subtracts the unsharp image signals Susk of two adjacent frequency bands (as for the original image signal Sorg, Sorg and Sus1) from each other. Specifically, the values of Sorg - Sus1, Sus1 - Sus2, ..., SusN-1 - SusN are calculated successively, and the plurality of the band-limited image signals are thereby obtained. Figure 14 shows the frequency characteristics of the band-limited image signals. As illustrated in Figure 14, the band-limited image signals have the frequency characteristics such that they may represent the bands of low frequency components of the original image signal Sorg as the value of k of the unsharp image signal Susk becomes large.

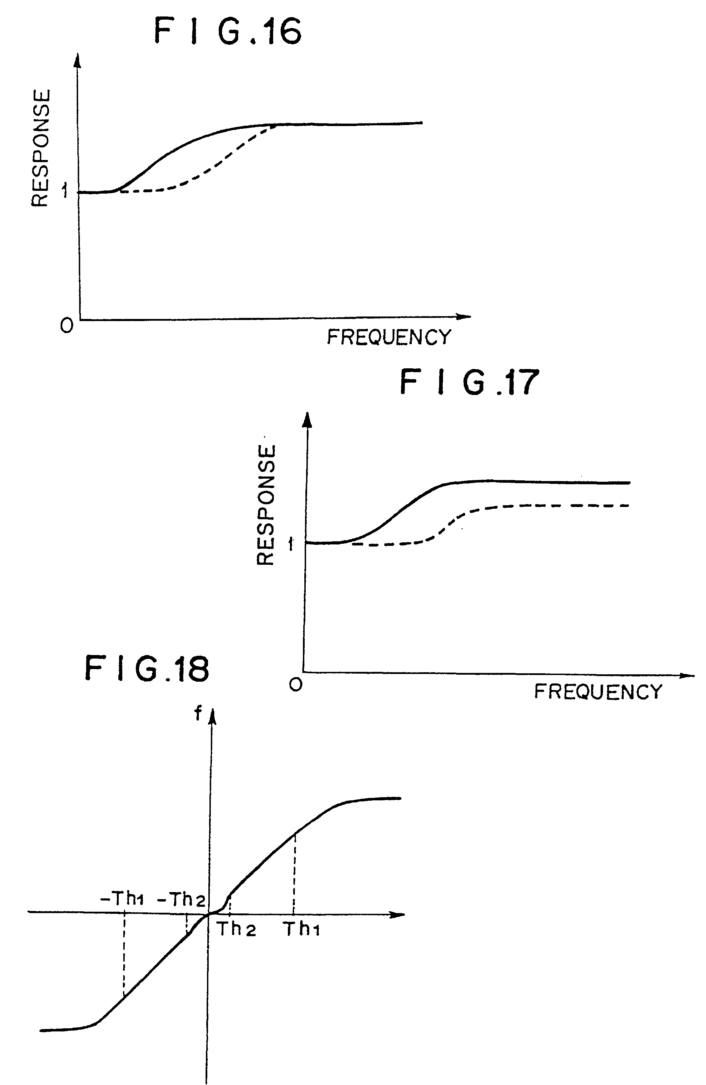

Thereafter, in the conversion means 3, each of the band-limited image signals is converted in accordance with the level of the band-limited image signal. The conversion of each band-limited image signal is carried out by a converter 22 by utilizing, for example, a function f shown in Figure 15. The function f has the characteristics such that the inclination of the function may be equal to 1 with respect to the band-limited image signal having the absolute value, which is smaller than a threshold value Th1, and such that the inclination of the function may be smaller than 1 with respect to the band-limited image signal having the absolute value, which is larger than the threshold value Th1. The same function may be utilized for the respective band-limited image signals, or different functions may be utilized for the respective band-limited image signals.

The band-limited image signals, which have been converted with the function f, are fed into an operation device 23, which is provided with the integration means 4 and the frequency emphasis processing means 5 described above. In the operation device 23, the processing is carried out in the manner described below. Firstly, the band-limited image signals, which have been converted with the function f, are integrated, and the integration signal is thereby obtained. In the frequency emphasis processing means 5, the integration signal is multiplied by an emphasis coefficient β, which has a value in accordance with the value of the original image signal Sorg. The resulting product is then added to the original image signal Sorg, and the processed image signal Sproc is thereby obtained.

The aforesaid processing carried out by the band-limited image signal forming means 2, the conversion means 3, the integration means 4, and the frequency emphasis processing means 5 may be represented by Formula (6) shown below.$\text{Sproc=Sorg+β(Sorg)·Fusm(Sorg,Sus1,Sus2,...,SusN)} \text{Fusm(Sorg,Sus1,Sus2,...,SusN)} \text{={f1(Sorg - Sus1)+f2(Sus1 - Sus2)+...} \text{+fk(Susk-1 - Susk)+...+fN(SusN-1 - SusN)}}$ wherein Sproc represents the image signal, in which the high frequency components have been emphasized, Sorg represents the original image signal, Susk (k=1 to N) represents the unsharp mask image signal, fk (k=1 to N) represents the function for converting the band-limited image signal, and *β*(Sorg) represents the emphasis coefficient determined in accordance with the original image signal.

By way of example, the processed image signal Sproc, which has been obtained in the manner described above, has the frequency response characteristics shown in Figure 16. Specifically, the band-limited image signals have the characteristics such that, in a flat region in which the change in the image density of the original image is comparatively small, the absolute value of the signal value of each band-limited image signal may be small in each frequency band. On the other hand, as illustrated in Figure 52, in a region in the vicinity of an edge in the image, at which the image density changes sharply, in cases where the band-limited image signal is of a comparatively low frequency band, i.e. in cases where the size of the unsharp mask used for obtaining the unsharp image signal Susk is comparatively large, the edge in the image is contained in the unsharp mask, which is set for a picture element located in the vicinity of the edge. Therefore, in such cases, the band-limited image signal is affected by the edge, and the absolute value of the signal value of the band-limited image signal becomes comparatively large. In this manner, a portion, which does not constitute the edge in the image, is affected by the image density value of the edge, and an artifact, such as overshoot or undershoot, occurs at the edge portion in the image, which is obtained from the image processing.

Therefore, the band-limited image signal is converted with the aforesaid function f such that, in cases where the absolute value of the band-limited image signal is larger than the threshold value Th1, the absolute value may become small. The band-limited image signals having thus been converted are integrated, and the obtained integration signal is emphasized with the predetermined emphasis coefficient. The signal concerning the high frequency components, which is to be added to the original image signal Sorg, is thereby obtained.

Therefore, as illustrated in Figure 16, in the flat region in which no edge is located, the processed image signal Sproc has the frequency characteristics indicated by the solid line. Also, as indicated by the broken line in Figure 16, in the region in the vicinity of an edge, the processed image signal Sproc has the frequency characteristics such that the response with respect to a comparatively low frequency band may become low. Thus the same effects can be obtained as those obtained when the size of the unsharp mask for obtaining the unsharp image signal, i.e. Sus in Formula (1), is set to be smaller than the size of the actual unsharp mask in region in the vicinity of an edge.

In this manner, the band-limited image signal corresponding to the region in the vicinity of an edge and having a signal value, the absolute value of which is comparatively large, is converted into the signal, which has small influence upon the signal concerning the high frequency components to be added to the original image signal Sorg. Accordingly, in the region in the vicinity of an edge, at which the image density changes sharply, the influence of a signal, which causes an artifact to occur, can be weakened. As a result, an image having no artifact and having good image quality can be obtained from the processing.

In the embodiment described above, the processed image signal Sproc is obtained with Formula (6). Alternatively, the processed image signal Sproc may be obtained with Formula (7) shown below. Formula (6) and Formula (7) are different in the point described below. Specifically, in Formula (6), the band-limited image signal is obtained by subtracting the signals of two adjacent frequency bands from each other. On the other hand, in Formula (7), the band-limited image signal is obtained by subtracting each of the unsharp image signals Susk of all frequency bands from the original image signal Sorg. The processed image signal Sproc obtained with Formula (7) has the frequency characteristics shown in Figure 17. As illustrated in Figure 17, in the flat region in which no edge is located, the processed image signal Sproc has the frequency characteristics indicated by the solid line. Also, as indicated by the broken line in Figure 17, in the region in the vicinity of an edge, the processed image signal Sproc has the frequency characteristics such that the response with respect to a comparatively low frequency band may become low. Thus the same effects can be obtained as those obtained when the size of the unsharp mask for obtaining the unsharp image signal Susk is set to be smaller than the size of the actual unsharp mask in region in the vicinity of an edge. When the frequency characteristics indicated by the broken line in Figure 17 are compared with those in Figure 16, the response in Figure 17 becomes low over the entire frequency band. Therefore, in the frequency characteristics shown in Figure 17, the response becomes low also in the flat region, which is not located in the vicinity of an edge. Accordingly, the processed image signal Sproc should preferably be obtained with Formula (6). With Formula (6), the response in the flat region does not become low, and only the response in the region in the vicinity of an edge becomes low.$\text{Sproc=Sorg+β(Sorg)·Fusm(Sorg,Sus1,Sus2,...,SusN)} \text{Fusm(Sorg,Sus1,Sus2,...,SusN)} \text{=(1/N)·{f1(Sorg - Sus1)+f2(Sorg - Sus2)+...} \text{+fk(Sorg - Susk)+...+fN(Sorg - SusN)}}$ wherein Sproc represents the image signal, in which the high frequency components have been emphasized, Sorg represents the original image signal, Susk (k=1 to N) represents the unsharp mask image signal, fk (k=1 to N) represents the function for converting the band-limited image signal, and β (Sorg) represents the emphasis coefficient determined in accordance with the original image signal.

Also, in the embodiment described above, as illustrated in Figure 15, the function for converting the band-limited image signal is set such that, in cases where the absolute value of the band-limited image signal is larger than the threshold value Th1, the absolute value may become small. Alternatively, for example, as illustrated in Figure 18, the function for converting the band-limited image signal may be set such that, in cases where the absolute value of the band-limited image signal is larger than the threshold value Th1, the absolute value may become small, and such that, in cases where the absolute value of the band-limited image signal is smaller than a threshold value Th2, the absolute value may become small.

In this manner, a correction may be made such that, as the absolute value of the band-limited image signal becomes smaller than the threshold value Th2, which is smaller than the threshold value Th1, the absolute value of the band-limited image signal may be converted to a small value. In such cases, the response with respect to the components, which have a small absolute value of a signal value and may be considered as being noise in the image, can be rendered low. As a result, noise in the processed image can be reduced.

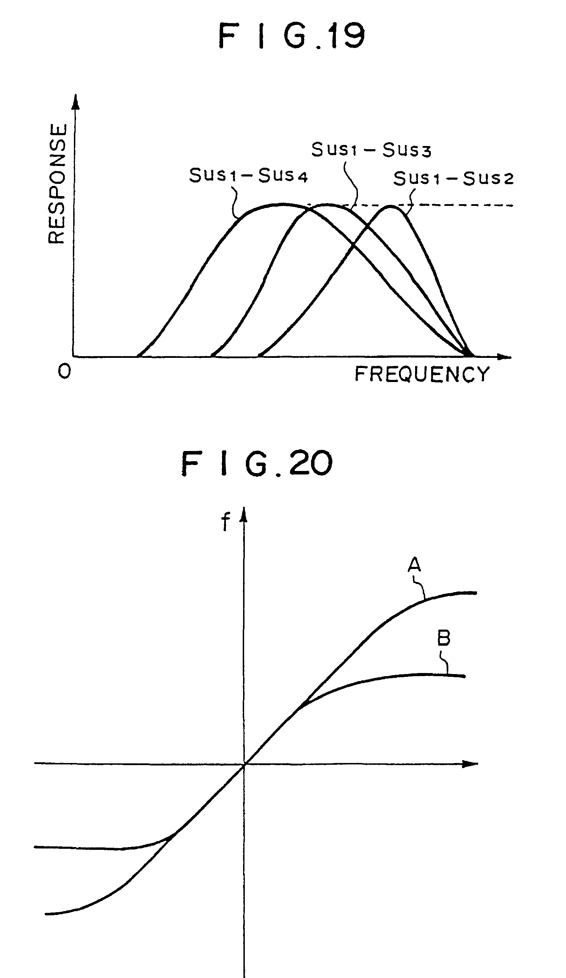

Further, in the embodiments described above, the processed image signal Sproc is obtained with Formula (6) or Formula (7). As another alternative, the processed image signal Sproc may be obtained with Formula (8) shown below. Formula (7) and Formula (8) are different in the point described below. Specifically, in Formula (7), the band-limited image signal is obtained by subtracting each of the unsharp image signals Susk of all frequency bands from the original image signal Sorg. On the other hand, in Formula (8), each of the unsharp image signals Susk, where k=2 to N, is subtracted from the unsharp image signal Sus1. The band-limited image signals in Formula (8) have the frequency characteristics shown in Figure 19. As illustrated in Figure 19, the processed image signal Sproc obtained with Formula (8) has the frequency characteristics such that the high frequency components may have been eliminated.

In the processing carried out with Formula (7), the high frequency components, which can be considered as being noise in the image, are also emphasized, and therefore noise becomes perceptible in the resulting processed image. On the other hand, as illustrated in Figure 19, in the processing carried out with Formula (8), the processed image signal Sproc can be obtained such that the high frequency components may have been eliminated. Therefore, noise is not emphasized, and a processed image having good image quality can be obtained.$\text{Sproc=Sorg+β(Sorg)·Fusm(Sus1,Sus2,...,SusN)} \text{Fusm(Sus1,Sus2,...,SusN)} \text{=(1/N)·{f2(Sus1 - Sus2)+f3(Sus1 - Sus3)+...} \text{+fk(Sus1 - Susk)+...+fN(Sus1 - SusN)}}$ wherein Sproc represents the image signal, in which the high frequency components have been emphasized, Sorg represents the original image signal, Susk (k=1 to N) represents the unsharp mask image signal, fk (k=2 to N) represents the function for converting the band-limited image signal, and *β*(Sorg) represents the emphasis coefficient determined in accordance with the original image signal.

As a further alternative, the processing may be carried out with Formula (9) shown below. In Formula (6) shown above, the band-limited image signal (Sorg - Sus1) is used. On the other hand, in Formula (9), the band-limited image signal (Sorg - Sus1) is not used. As a result, the highest frequency components shown in Figure 14 are eliminated. Therefore, as in the processing carried out with Formula (8), the processed image signal Sproc can be obtained such that the high frequency components may have been eliminated. Accordingly, noise is not emphasized, and a processed image having good image quality can be obtained.$\text{Sproc=Sorg+} \text{β} \text{(Sorg)·Fusm(Sus1,Sus2,...,SusN)} \text{Fusm(Sus1,Sus2,...,SusN)} \text{={f2(Sus1 - Sus2)+f3(Sus2 - Sus3)+...} \text{+fk(Susk-1 - Susk)+...+fN(SusN-1 - SusN)}}$ wherein Sproc represents the image signal, in which the high frequency components have been emphasized, Sorg represents the original image signal, Susk (k=1 to N) represents the unsharp mask image signal, fk (k=2 to N) represents the function for converting the band-limited image signal, and *β*(Sorg) represents the emphasis coefficient determined in accordance with the original image signal.

The frequency band, which is to be used in making a diagnosis, or the like, varies for different portions of the object, the images of which were recorded. For example, as for the images obtained with the double contrast image recording of the lungs and the stomach, the comparatively low frequency components should preferably be emphasized in the lung image, and the comparatively high frequency components should preferably be emphasized in the stomach image such that the patterns of the folds of the walls of the stomach may be viewed. As for images containing patterns of bones or metal members, such as artificial bones, it is necessary to prevent an artifact from occurring due to excessive emphasis of the edges of the bone patterns or the metal member patterns. However, as for the images, which do not contain edges, e.g. those of bones, such as mamma images, and in which an artifact will not occur easily, if the emphasis of frequency components is carried out in the same manner as that for the images containing bone patterns, the image portions, which is to be used in making a diagnosis, will become difficult to view. Therefore, the shape of the function f shown in Figure 15 should preferably be altered in accordance with the portion of the object, the image of which was recorded, or the frequency bands of the band-limited image signals.

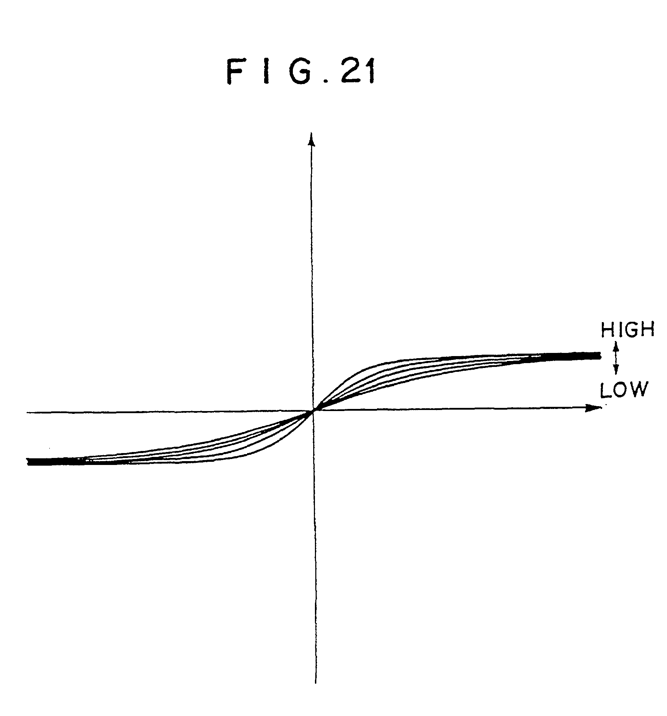

For example, as illustrated in Figure 20, as for the image containing bone patterns, the function f should preferably be set as indicated by B such that the high frequency components of the band-limited image signals may be restricted, and an artifact may be prevented from occurring at an edge. As for the image containing no bone pattern, such as a mamma image, the function f should preferably be set as indicated by A, and the converting process should preferably be carried out such that the high frequency components of the band-limited image signals may also be emphasized, and the absolute values of the band-limited image signals may become large over approximately the entire frequency band.

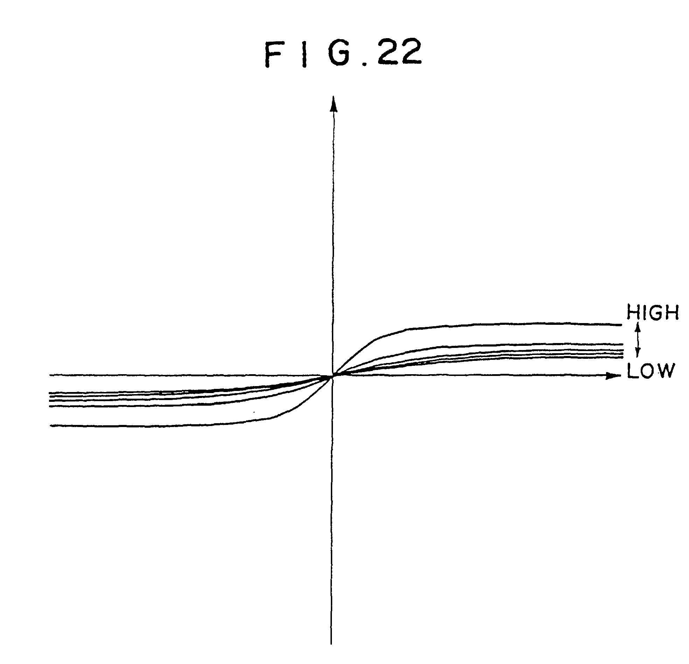

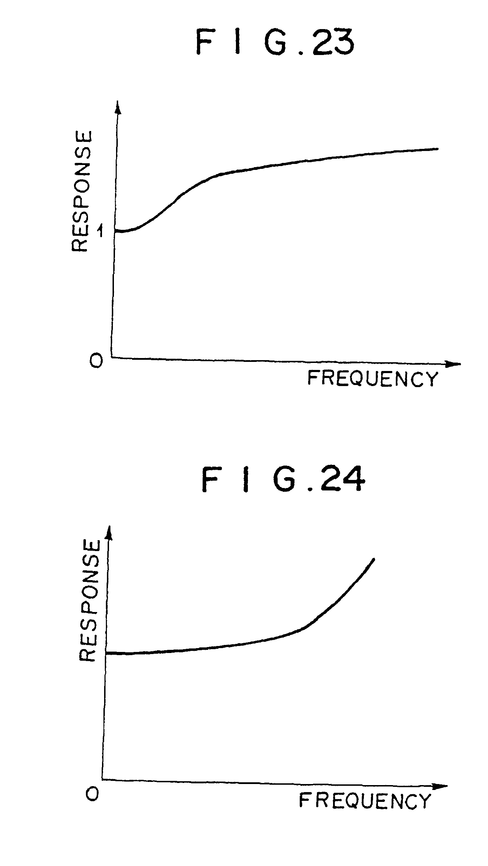

As for a chest image, the band-limited image signals should preferably be emphasized over the entire frequency band, and therefore the function f should preferably be altered as shown in Figure 21 in accordance with the frequency bands of the band-limited image signals. As for the double contrast image of the stomach, the high frequency components of the band-limited image signals should preferably be emphasized, and the low frequency components should preferably be restricted. Therefore, the function f should preferably be altered as shown in Figure 22 in accordance with the frequency bands of the band-limited image signals. Figure 23 shows the frequency characteristics of the processed image signal Sproc, which is obtained by converting the band-limited image signals in accordance with the functions f shown in Figure 21. Figure 24 shows the frequency characteristics of the processed image signal Sproc, which is obtained by converting the band-limited image signals in accordance with the functions f shown in Figure 22. As illustrated in Figure 23, as for the chest image, the response is emphasized over approximately the entire frequency band. Also, as illustrated in Figure 24, as for the double contrast image of the stomach, the response with respect to the high frequency band is emphasized to a higher extent than the response with respect to the other frequency bands.

As described above, as for the chest image, the processing should preferably be carried out such that the response may be emphasized over the entire frequency band. In such cases, the lung field patterns becomes perceptible. Also, as for the double contrast image of the stomach, the processing should preferably be carried out such that the response with respect to the high frequency band may be emphasized. In such cases, the patterns of the folds of the walls of the stomach becomes perceptible. Also, in cases where the processing is carried out such that the absolute values of the band-limited image signals may be changed in accordance with the frequency bands of the band-limited image signals or the portion of the object, the image of which was recorded, an image having good image quality in accordance with the portion of the object, the image of which was recorded, or the frequency bands can be obtained.

The conversion of the band-limited image signals in the conversion means 3 may be carried out regardless of the aforesaid threshold value Th1 and in accordance with a plurality of functions f1 to fN, which vary for different frequency bands, such that the absolute value of each band-limited image signal may be converted to a value, which is not larger than the absolute value of the band-limited image signal and is determined in accordance with the absolute value of the band-limited image signal. As the functions f1 to fN, a combination of appropriate functions should preferably be set in accordance with the characteristics of the image processing which is to be achieved.

In the embodiment which is free from the threshold value, the processed image signal Sproc can be adjusted, such that it may have arbitrary frequency characteristics, by varying the functions, which are used in the conversion means 3, for different frequency bands. Therefore, the frequency characteristics of the processed image signal Sproc can be adjusted in accordance with the conditions, which are required for the images to be processed in the respective apparatuses described above.

Effects obtained by varying the functions for different frequency bands will be described hereinbelow. Figures 29A, 29B, 29C, and 29D are explanatory views showing the problems encountered with the conventional technique, in which the same function is employed as the functions f1 to fN, i.e. in which the band-limited image signals of all frequency bands are converted with the same converting method. In Figures 29A, 29B, 29C, and 29D, the processing in the vicinity of an edge, at which the image density changes sharply, is illustrated in steps. Figure 29A shows a step-like profile of the original image signal and the profiles of the unsharp image signals having been formed from the original image signal. Figure 29B shows the profiles of the band-limited image signals with respect to the signals shown in Figure 29A. Figure 29C shows the profiles of the converted image signals. Figure 29D shows the profile of the signal obtained by integrating the converted image signals.

As illustrated in Figure 29D, ordinarily, in the signal obtained by integrating the converted image signals, unnatural joints are formed at the boundaries among the frequency bands. The unnatural joints cause a streak-like artifact to occur. In order for such problems to be prevented, the converted image signals must be formed by considering such that the boundaries among the frequency bands may join in a pattern as natural as possible. However, in cases where the function is set to be uniform, arbitrary conversion, in which the influence of the boundaries among the frequency bands is taken into consideration, cannot be carried out on the respective band-limited image signals. As a result, the streak-like artifact cannot be prevented from occurring. On the other hand, in the embodiment of the image processing apparatus in accordance with the present invention, different functions are used for different frequency bands, and the functions are set by considering the boundaries among the frequency bands. In this manner, the streak-like artifact is prevented from occurring.

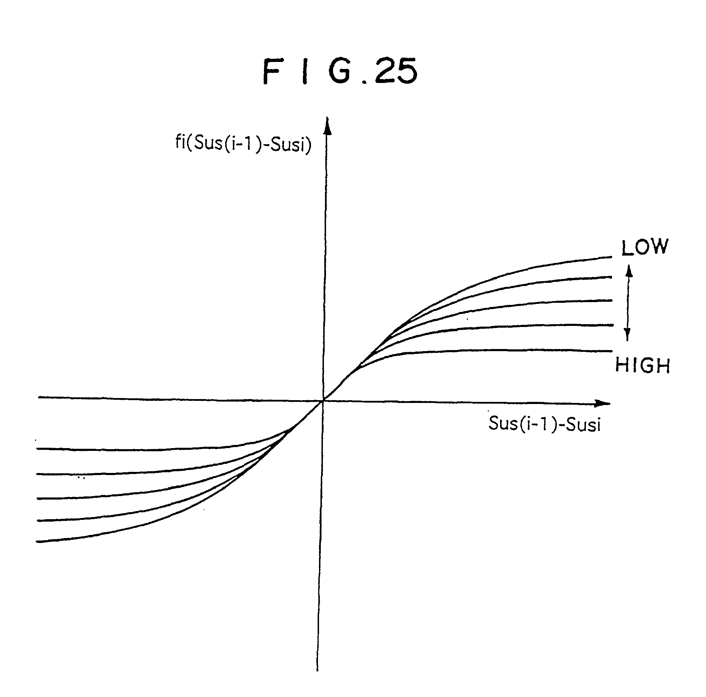

Examples of the functions varying for different frequency bands will be described hereinbelow. Figure 25 shows examples of the functions used for the formation of the band-limited image signals. In Figure 25, the value of the band-limited image signal to be processed is plotted on the horizontal axis, and the value obtained by processing the band-limited image signal is plotted on the vertical axis. Each of the functions illustrated in Figure 25 converts the band-limited image signal such that the absolute value of the band-limited image signal may be converted to a value, which is not larger than the absolute value of the band-limited image signal and is determined in accordance with the absolute value of the band-limited image signal. Also, each of the functions carries out the conversion such that, as for the band-limited image signal, the absolute value of which is larger than a predetermined value, the value of the converted image signal may become approximately equal to a predetermined level. In a function for processing a high frequency band, the aforesaid predetermined value is set to be smaller than those in the other functions.

In other words, the functions have the characteristics such that each function may pass through the origin, such that the inclination of the function may be equal to at most 1 regardless of the value of the band-limited image signal processed with the function, and such that the inclination of the function may become equal to 0 or may converge to 0 as the absolute value of the signal value of the band-limited image signal processed with the function becomes large. The functions also have the characteristics such that, in a function for processing a high frequency band, the absolute value of the processed signal value, which absolute value is associated with the point in the function where the inclination of the function becomes equal to 0 or a predetermined value close to 0, may take a smaller value than those in the other functions.

The functions shown in Figure 25 carry out the conversion such that a band-limited image signal having a large amplitude may be restricted, and such that the degree of restriction of a band-limited image signal of a high frequency band may be higher than the degree of restriction of a band-limited image signal of a low frequency band. Such conversion is carried out by considering the feature in that the high frequency components contained in an edge in an actual radiation image have a smaller amplitude than the amplitude of low frequency components. Specifically, even at a very sharp edge in an actual radiation image, the signal does not take a definite step-like profile illustrated in Figure 30A, but the amplitude of the high frequency components becomes smaller than the amplitude of the low frequency components as illustrated in Figure 30B. Therefore, in accordance with the amplitude of the respective frequency components, as for a band-limited image signal having a high frequency, the restriction should preferably be carried out starting with a small amplitude. The functions shown in Figure 25 can achieve such restriction.

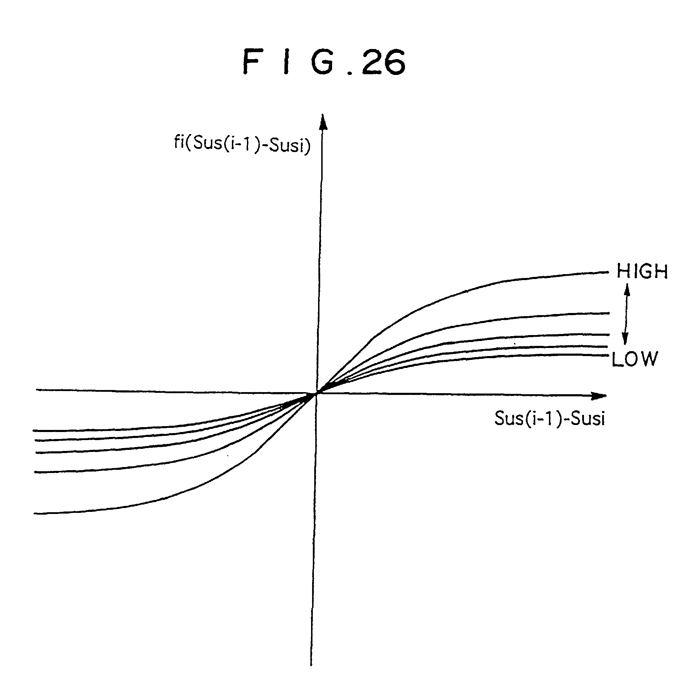

Functions shown in Figure 26 will be described hereinbelow. Each of the functions illustrated in Figure 26 converts the band-limited image signal such that the absolute value of the band-limited image signal may be converted to a value, which is not larger than the absolute value of the band-limited image signal and is determined in accordance with the absolute value of the band-limited image signal. In a function for processing a low frequency band, the absolute value of the converted image signal, that is obtained when the band-limited image signal having a signal value, the absolute value of which falls within a predetermined range close to 0, is converted, takes a value smaller than those in the other functions.

In other words, the functions have the characteristics such that each function may pass through the origin, and such that the inclination of the function may be equal to at most 1 regardless of the value of the band-limited image signal processed with the function. The functions also have the characteristics such that, in a function for processing a low frequency band, the inclination of the function in the region, in which the absolute value of the band-limited image signal is close to 0, may be smaller than those in the other functions.

These functions have the effects described below. Specifically, when the integration signal shown in Figure 29D, which has been obtained by integrating the converted image signals, is added to the original image signal Sorg, the joint between the original image signal Sorg and the integration signal can be formed in a natural pattern. More specifically, the rise of the signal can be rendered natural.

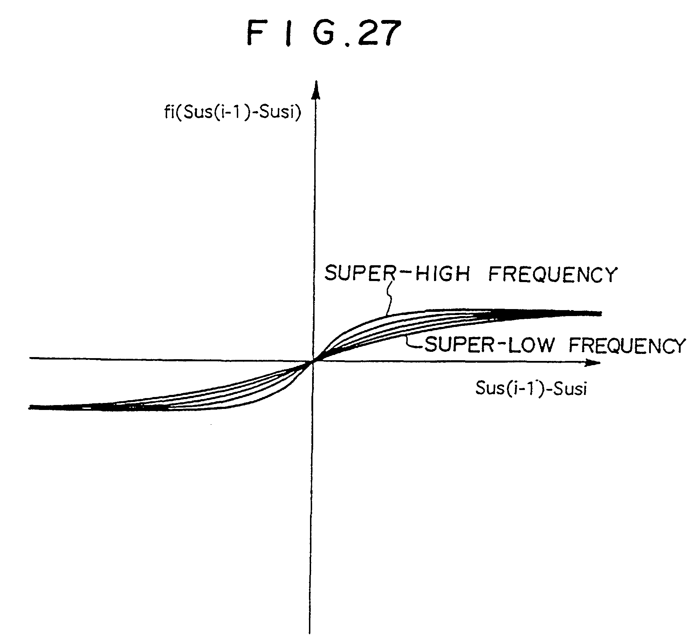

Figure 27 is a graph showing examples of functions, which have both of the characteristics of the functions shown in Figure 25 and the characteristics of the functions shown in Figure 26. With the functions shown in Figure 27, both of the effects of the functions shown in Figure 25 and the effects of the functions shown in Figure 26 can be obtained.

As described above, with the embodiments of the image processing method and apparatus in accordance with the present invention, the functions used for the respective frequency bands are varied in accordance with the characteristics of the image processing which is to be achieved, and the frequency characteristics of the entire frequency band can be adjusted appropriately. Figures 28A-1, 28B-1, 28C-1 and Figures 28A-2, 28B-2, 28C-2 show examples of the effects obtained with the embodiments of the image processing method and apparatus in accordance with the present invention. Figures 28A-1, 28B-1, and 28C-1 show the frequency characteristics of the signals of the respective frequency bands having been formed by the embodiments of the image processing apparatus in accordance with the present invention. Figures 28A-2, 28B-2, and 28C-2 show the frequency characteristics with respect to the entire frequency band, which correspond respectively to Figures 28A-1, 28B-1, and 28C-1. The frequency characteristics shown in Figures 28A-1 and 28A-2 are obtained when a function having an inclination of 1 is set for all of the frequency bands. The frequency characteristics shown in Figures 28B-1 and 28B-2 are obtained when the inclination of the function is set to be small for a low frequency band. The frequency characteristics shown in Figures 28C-1 and 28C-2 are obtained when the inclination of the function is set to be 1 for a specific frequency band and is set to be smaller than 1 for the other frequency bands such that band pass frequency characteristics may be obtained as a whole. The example shown in Figures 28C-1 and 28C-2 is useful when, for example, only the information of a specific frequency band is to be obtained.

In the aforesaid embodiments wherein the signal value larger than the aforesaid threshold value is restricted, and in the aforesaid embodiments wherein the entire signal value is restricted regardless of a threshold value, the converting process carried out by the conversion means 3 may be varied in accordance with the value of the emphasis coefficient β. The effects obtained in such cases will be described hereinbelow by taking the processing with functions, which are free from the threshold value, as an example.

Specifically, in cases where the value of the emphasis coefficient β is comparatively small, as the functions f1 to fN, the functions shown in Figure 31 are used. Also, in cases where the value of the emphasis coefficient β is large, as the functions f1 to fN, the functions shown in Figure 32 are used. In Figures 31 and 32, "high" represents the function used for the conversion of a band-limited image signal of a high frequency band, and "low" represents the function used for the conversion of a band-limited image signal of a low frequency band.

The functions shown in Figures 31 and 32 restrict each band-limited image signal such that it may become smaller than the absolute value of the band-limited image signal. In this embodiment, as will be understood when Figures 31 and 32 are compared with each other, the combination of the functions is defined such that, as the value of the emphasis coefficient β becomes large, the difference between the degree of restriction, which is carried out with the function for processing a high frequency band, and the degree of restriction, which is carried out with the function for processing a low frequency band, may become large. Specifically, the function for processing the high frequency band is kept the same regardless of the value of the emphasis coefficient β, and the degree of restriction, which is carried out with the function for processing the low frequency band, is set to be high as the value of the emphasis coefficient β becomes large. Alternatively, the function for processing the low frequency band is kept the same regardless of the value of the emphasis coefficient β, and the degree of restriction, which is carried out with the function for processing the high frequency band, may be changed. As another alternative, all of the functions may be changed such that the difference in the degree of restriction may become large.

Figure 33 shows the response of the image signal, in which the high frequency components have been emphasized with the combination of the functions shown in Figure 31. Figure 34 shows the response of the image signal, in which the high frequency components have been emphasized with the combination of the functions shown in Figure 32. From Figures 33 and 34, it will be found that, in cases where the value of the emphasis coefficient β is large, only the degree of emphasis of the high frequency components becomes high, and the degree of emphasis of the low frequency components is kept approximately the same as when the value of the emphasis coefficient β is small.

In cases where the combination of the functions is determined regardless of the emphasis coefficient β, if the value of the emphasis coefficient is set to be large, the degree of emphasis will become high for all of the frequency bands. In general, the value of the emphasis coefficient is set to be large such that the high frequency components carrying a small amount of information may be emphasized. However, in such cases, the low frequency components are also emphasized. As a result, the level of contrast becomes very high, and an artifact will occur. On the other hand, in cases where the combination of the functions is set as shown in Figure 32 such that, even if the value of the emphasis coefficient β is set to be large, the degree of emphasis of the low frequency components may not change very much, an artifact can be prevented from occurring.

In Figure 31, a single set of functions are shown which may be used when the value of the emphasis coefficient β is small. Also, in Figure 32, a single set of functions are shown which may be used when the value of the emphasis coefficient β is large. However, the examples shown in Figures 31 and 32 do not mean that only two sets of the functions are used, but merely illustrate how the characteristics of the functions may be changed in accordance with a change in the value of the emphasis coefficient β. Therefore, it is also possible to classify the extent of the change in the value of the emphasis coefficient β into several different levels, and to determine a set of functions in accordance with each of the classified levels. In cases where such levels are set finely, an image having better image quality can be obtained.

In the embodiment described above, the non-linear functions are determined on the basis of the consideration in that the value of the emphasis coefficient is set to be large in order for only the high frequency components to be emphasized. However, the effects, which should be obtained from the changing of the value of the emphasis coefficient, are not limited to the emphasis of the high frequency components. Therefore, as the non-linear functions, various functions may be utilized in accordance with the effects, which are to be obtained. In the aforesaid embodiment, as the non-linear functions, sets of the plurality of non-linear functions varying for different frequency bands are employed. However, the effects of the image processing apparatus in accordance with the present invention can also be obtained when a single same non-linear function is employed for all of the frequency bands, depending upon the effects, which are to be obtained from the changing of the value of the emphasis coefficient.

A different embodiment of the image processing method and apparatus in accordance with the present invention will be described hereinbelow. In this embodiment, the processes carried out by the unsharp image signal forming means 1, the band-limited image signal forming means 2, the integration means 4, and the frequency emphasis processing means 5 are the same as those in the aforesaid embodiment shown in Figure 12. Therefore, only the process carried out by the conversion means 3 will be described hereinbelow.

Figure 35 is a block diagram showing this embodiment of the image processing apparatus in accordance with the present invention. As in the aforesaid embodiment, the band-limited image signals are formed from the original image signal Sorg and the plurality of the unsharp image signals Susk, which have been formed by the unsharp image signal forming means 1. Each of the band-limited image signals is obtained from the subtracter 21, which subtracts the unsharp image signals Susk of two adjacent frequency bands (as for the original image signal Sorg, Sorg and Sus1) from each other. Specifically, the values of Sorg - Sus1, Sus1 - Sus2, ..., SusN-1 - SusN are calculated successively, and the plurality of the band-limited image signals are thereby obtained. In this embodiment, for example, as for the band-limited image signal Sus1 - Sus2, the signal Sus2 - Sus3 is employed as the corresponding auxiliary image signal. Therefore, a single means substantially serves as the band-limited image signal forming means and an auxiliary image signal forming means. Specifically, the signal, which has been formed by the band-limited image signal forming means, is processed as the band-limited image signal and is also processed as the auxiliary image signal corresponding to the adjacent band-limited image signal.

Thereafter, each of the band-limited image signals having thus been obtained is converted in the conversion means 3. The conversion is carried out on each band-limited image signal by using the converter 22 and a converter 24 shown in Figure 35. In the converter'22, the converting process is carried out by using one of the functions f1 to fN for the respective frequency bands, and a restricted image signal is thereby obtained. In the converter 24, a converting process is carried out by using a function g, and a magnification ratio signal is thereby obtained. In a multiplier 25, the restricted image signal is multiplied by the magnification ratio signal. The conversion is carried out in this manner. In such cases, as illustrated in Figure 35, the signals of two adjacent frequency bands are multiplied by each other. For example, the restricted image signal, which has been obtained by converting the band-limited image signal Sus1 - Sus2, and the magnification ratio signal, which has been obtained by converting the auxiliary image signal Sus2 - Sus3, are multiplied by each other. The converter 22 for carrying out the conversion with the function fk corresponds to a restricted image signal forming means. The converter 24 for carrying out the conversion with the function g corresponds to a magnification ratio signal forming means. Also, the multiplier 25 for multiplying the output signals, which have been obtained from the converters 22 and 24, by each other corresponds to a multiplication means.

The functions f1 to fN may be identical with one another or may be different from one another. They may be set arbitrarily in accordance with the characteristics of the image processing which is to be carried out. In this embodiment, as the functions f1 to fN, the functions are used, each of which restricts the band-limited image signal such that it may become smaller than the absolute value of the band-limited image signal, and which vary for different frequency bands. By way of example, the functions shown in Figure 25 are used.

As the function g, for example, a function shown in Figure 36 may be used. With the function g shown in Figure 36, the auxiliary image signal is converted such that a converted value close to 1 may be obtained when the absolute value of the auxiliary image signal is small and such that, as the absolute value of the auxiliary image signal becomes large, a converted value close to 0 may be obtained. In Figure 36, K represents the minimum value of the absolute value of the auxiliary image signal among the values, for which the converted values become equal to 0.

The converted image signals, which have been obtained from the conversion means 3, are fed into the operation device 23, which is provided with the integration means 4 and the frequency emphasis processing means 5. In the operation device 23, the processing is carried out in the manner described below. Firstly, the plurality of the converted image signals are integrated, and the integration signal is thereby obtained. The integration signal is multiplied by an emphasis coefficient β, which has a value determined in accordance with the value of the original image signal Sorg. The resulting product is then added to the original image signal Sorg, and the processed image signal Sproc is thereby obtained. This process and the other processes described above may be represented by Formula (10) shown below.$\text{Sproc=Sorg+β(Sorg)·Fusm(Sorg,Sus1,Sus2,...,SusN)} \text{Fusm(Sorg,Sus1,Sus2,...,SusN)} \text{={f1(Sorg - Sus1)·g(Sus1 - Sus2)} \text{+f2(Sus1 - Sus2)·g(Sus2 - Sus3)+...} \text{+fk(Susk-1 - Susk)·g(Susk - Susk+1)+...} \text{+fN(SusN-1 - SusN)·g(SusN - SusN+1)}}$ wherein Sproc represents the image signal, in which the high frequency components have been emphasized, Sorg represents the original image signal, Susk (k=1 to N+1) represents the unsharp mask image signal, fk (k=1 to N) represents the function for converting the band-limited image signal and thereby obtaining the restricted image signal, g represents the function for converting the auxiliary image signal and thereby obtaining the magnification ratio signal, and *β*(Sorg) represents the emphasis coefficient determined in accordance with the original image signal.

Figures 37A, 37B, 37C, 37D, and 37E show the effects obtained when an image signal corresponding to a region in the vicinity of an edge in the image is processed in the embodiment of Figure 35. Figure 37A shows a step-like profile of the original image signal, which corresponds to the region in the vicinity of an edge in the image, and the profiles of the unsharp image signals having been formed from the original image signal. Figure 37B shows the profile of the band-limited image signal with respect to the signals shown in Figure 37A. Figure 37C shows the profile of the auxiliary image signal containing the signal of the frequency band, which is lower by a single level than the frequency band of the band-limited image signal shown in Figure 37B. Figure 37D shows the profile of the magnification ratio signal, which is obtained when the auxiliary image signal shown in Figure 37C is processed with the function g. Figure 37E shows the profile of the processed signal, which is obtained when the restricted image signal having been obtained by processing the band-limited image signal shown in Figure 37B with the function f is multiplied by the magnification ratio signal shown in Figure 37D. The value K shown in Figure 37C is identical with the value K shown in Figure 36. It is illustrated that, when the value of the auxiliary image signal shown in Figure 37C becomes equal to K, the value of the magnification ratio signal shown in Figure 37D becomes equal to 0. If the band-limited image signal shown in Figure 37B is converted merely such that its absolute value may become small, the shape of the peak of the signal will become smooth, but the rise portion of the signal will be kept sharp. On the other hand, in the processed signal shown in Figure 37E, its rise portion is smooth. In cases where the rise portion of each band-limited image signal is thus rendered smooth, a step-like artifact can be prevented from occurring at the boundaries among the frequency bands in the signal, which is obtained by integrating the band-limited image signals.

The auxiliary image signals, which are processed with the function g, are not limited to those described above. In a different embodiment of the image processing apparatus in accordance with the present invention, the image processing is carried out with Formula (11) shown below.$\text{Sproc=Sorg+} \text{β} \text{(Sorg)·Fusm(Sorg,Sus1,Sus2,...,SusN)} \text{Fusm(Sorg,Sus1,Sus2,...,SusN)} \text{={f1(Sorg - Sus1)·g(Sorg - Sus2)} \text{+f2(Sus1 - Sus2)·g(Sorg - Sus3)+...} \text{+fk(Susk-1 - Susk)·g(Sorg - Susk+1)+...} \text{+fN(SusN-1 - SusN)·g(Sorg - SusN+1)}}$ wherein Sproc represents the image signal, in which the high frequency components have been emphasized, Sorg represents the original image signal, Susk (k=1 to N+1) represents the unsharp mask image signal, fk (k=1 to N) represents the function for converting the band-limited image signal and thereby obtaining the restricted image signal, g represents the function for converting the auxiliary image signal and thereby obtaining the magnification ratio signal, and *β*(Sorg) represents the emphasis coefficient determined in accordance with the original image signal.

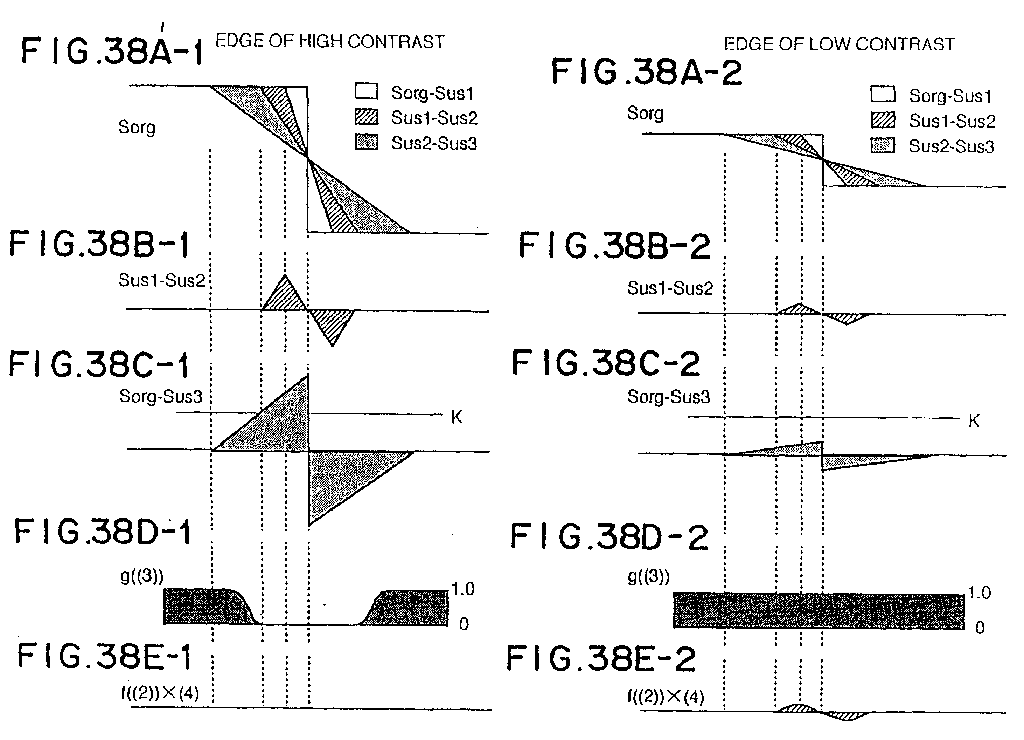

Figures 38A-1, 38B-1, 38C-1, 38D-1, and 38E-1 show the effects obtained when an image signal corresponding to a region in the vicinity of an edge in the image, which edge has a high level of contrast, is processed in the embodiment utilizing Formula (11). Figure 38A-1 shows a step-like profile of the original image signal, which corresponds to the region in the vicinity of an edge in the image, and the profiles of the unsharp image signals having been formed from the original image signal. Figure 38B-1 shows the profile of the band-limited image signal with respect to the signals shown in Figure 38A-1. Figure 38C-1 shows the profile of the auxiliary image signal containing the signal of the frequency band, which is lower by a single level than the frequency band of the band-limited image signal shown in Figure 38B-1. Figure 38D-1 shows the profile of the magnification ratio signal, which is obtained when the auxiliary image signal shown in Figure 38C-1 is processed with the function g. Figure 38E-1 shows the profile of the processed image signal, which is obtained when the restricted image signal having been obtained by processing the band-limited image signal shown in Figure 38B-1 with the function f is multiplied by the magnification ratio signal shown in Figure 38D-1. Figures 38A-2, 38B-2, 38C-2, 38D-2, and 38E-2 show the effects obtained when an image signal corresponding to a region in the vicinity of an edge in the image, which edge has a low level of contrast, is processed in the embodiment utilizing Formula (11). Figures 38A-2, 38B-2, 38C-2, 38D-2, and 38E-2 are the views respectively similar to Figures 38A-1, 38B-1, 38C-1, 38D-1, and 38E-1. As illustrated in these figures, in cases where the value of Sorg - Susk is used as the value to be processed with the function g, the signal obtained from the conversion becomes small as for the edge having a high level of contrast. As for the edge having a high level of contrast, the signal obtained from the conversion has a level close to the level of the original band-limited image signal.

The signals obtained from the conversion are then integrated, and the integration signal thus obtained is added to the original image signal Sorg for the purposes of emphasis. In such cases, the effects can be obtained such that the edge having a high level of contrast may not be emphasized strongly, and the edge having a low level of contrast is emphasized more strongly than the edge having the high level of contrast.

The two kinds of the formulas have the effects described above. Various modifications are possible as for the functions f and g and how the band-limited image signal, which is to be processed with the function g, is formed.

A further different embodiment of the image processing method and apparatus in accordance with the present invention will be described hereinbelow. In this embodiment, the processes carried out by the unsharp image signal forming means 1, the band-limited image signal forming means 2, the integration means 4, and the frequency emphasis processing means 5 are the same as those in the aforesaid embodiment shown in Figure 12. Therefore, only the process carried out by the conversion means 3 will be described hereinbelow.

Figure 39 is a block diagram showing this embodiment of the image processing apparatus in accordance with the present invention. As in the aforesaid embodiment, the band-limited image signals are formed from the original image signal Sorg and the plurality of the unsharp image signals Susk, which have been formed by the unsharp image signal forming means 1. Each of the band-limited image signals is obtained from the subtracter 21, which subtracts the unsharp image signals Susk of two adjacent frequency bands (as for the original image signal Sorg, Sorg and Sus1) from each other. Specifically, the values of Sorg - Sus1, Sus1 - Sus2, ..., SusN-1 - SusN are calculated successively, and the plurality of the band-limited image signals are thereby obtained.

Thereafter, each of the band-limited image signals having thus been obtained is converted in the conversion means 3. As illustrated in Figure 39, in the conversion means 3, a band-limited image signal to be converted, which is of a certain frequency band, and a signal (i.e., an auxiliary image signal), which has been obtained by converting a low frequency side band-limited image signal of a frequency band, that is lower by a single level than the frequency band of the band-limited image signal to be converted, with a function g in the converter 24, are added to each other. In this manner, a composite band-limited image signal is obtained. The composite band-limited image signal having been obtained from the addition is then converted with a function fk in the converter 22. The converter 24 for carrying out the conversion with the function g corresponds to an auxiliary image signal forming means, and an adder 26 corresponds to a composite band-limited image signal forming means.

As the function g, for example, the function shown in Figure 40 may be employed. The function g shown in Figure 40 has the characteristics such that the function may pass through the origin, such that the inclination of the function at the origin may be equal to approximately 0, such that the inclination of the function may increase gradually as the value to be processed becomes large, and such that the inclination of the function may ultimately become equal to approximately 1. Specifically, with this function, the degree of restriction is set to be high when the level of the signal to be processed is low. Also, as the level of the signal to be processed becomes high, the degree of restriction is set to be low. In the processing described above, the portion of this function, at which the inclination increases gradually from the origin, affects the wave form of the rise portion of the auxiliary image signal. Specifically, in cases where the conversion is carried out with this function, a sharp rise portion can be rendered smooth. The level of the actual band-limited image signal is limited, and therefore any of functions, the inclination of which increases gradually from 0 in the region in the vicinity of the origin, may be employed as the function g. For example, a function shown in Figure 41 may also be employed. In this embodiment, signal amplification is not carried out, and therefore the inclination of the function is set to be at most 1. However, the effects of the present invention are obtained from the gradual increase of the inclination of the function in the region in the vicinity of the origin. Therefore, in so far as the inclination of the function in the region in the vicinity of the origin increases gradually, the inclination of the function need not necessarily be limited to at most 1.

The functions f1 to fN, which are used in this embodiment, may be identical with one another or may be different from one another. They may be set arbitrarily in accordance with the characteristics of the image processing which is to be carried out. In this embodiment, as the functions f1 to fN, by way of example, the functions shown in Figure 25 are used.

The converted image signals, which have been obtained from the conversion means 3, are fed into the operation device 23, which is provided with the integration means 4 and the frequency emphasis processing means 5. In the operation device 23, the processing is carried out in the manner described below. Firstly, the plurality of the converted image signals are integrated, and the integration signal is thereby obtained. The integration signal is multiplied by an emphasis coefficient β, which has a value determined in accordance with the value of the original image signal Sorg. The resulting product is then added to the original image signal Sorg, and the processed image signal Sproc is thereby obtained. This process and the other processes described above may be represented by Formula (12) shown below.$\text{Sproc=Sorg+β(Sorg)·Fusm(Sorg,Sus1,Sus2,...,SusN)} \text{Fusm(Sorg,Sus1,Sus2,...,SusN)} \text{=[f1{(Sorg - Sus1)+g(Sus1 - Sus2)}} \text{+f2{(Sus1 - Sus2)+g(Sus2 - Sus3)}+...} \text{+fk{(Susk-1 - Susk)+g(Susk - Susk+1)}+...} \text{+fN{(SusN-1 - SusN)+g(SusN - SusN+1)}]}$ wherein Sproc represents the image signal, in which the high frequency components have been emphasized, Sorg represents the original image signal, Susk (k=1 to N+1) represents the unsharp mask image signal, fk (k=1 to N) represents the function for converting the composite band-limited image signal, g represents the function for converting the band-limited image signal and thereby obtaining the auxiliary image signal, and β(Sorg) represents the emphasis coefficient determined in accordance with the original image signal.

Figures 42A, 42B, 42C, 42D, 42E, and 42F show the effects obtained when an image signal corresponding to a region in the vicinity of an edge in the image is processed in the embodiment of Figure 39. Figure 42A shows a step-like profile of the original image signal, which corresponds to the region in the vicinity of an edge in the image, and the profiles of the unsharp image signals having been formed from the original image signal. Figures 42B 42C show the profiles of the band-limited image signals with respect to the signals shown in Figure 42A. In cases where the band-limited image signal shown in Figure 42B is taken as the band-limited image signal to be converted, the band-limited image signal shown in Figure 42C is taken as the low frequency side band-limited image signal. Figure 42D shows the profile of the auxiliary image signal, which is obtained when the low frequency side band-limited image signal shown in Figure 42C is processed with the function g. Figure 42E shows the profile of the composite band-limited image signal, which is obtained by adding the band-limited image signal to be converted, that is shown in Figure 42B, and the auxiliary image signal, which is shown in Figure 42D, to each other. Figure 42F shows the profile of the converted image signal, which is obtained by processing the composite band-limited image signal of Figure 42E with the function f. If the band-limited image signal shown in Figure 42B is converted merely such that its absolute value may become small, the shape of the peak of the signal will become smooth, but the rise portion of the signal will be kept sharp. On the other hand, in the converted image signal of Figure 42F, its rise portion is smooth. In cases where the rise portion of each band-limited image signal is thus rendered smooth, a step-like artifact can be prevented from occurring at the boundaries among the frequency bands in the signal, which is obtained by integrating the band-limited image signals.

In this embodiment, various modifications are possible as for, for example, the functions f and g.

In cases where a dynamic range compressing process, not forming part of the claimed invention, and the frequency emphasis processing are carried out simultaneously, the unsharp image signals Susk can be utilized commonly. Therefore, the time required to carry out the operations can be kept shorter and the processing can be carried out more efficiently than when the dynamic range compressing process and the frequency emphasis processing are carried independently.

Also, in cases where a dynamic range compressing process and the frequency emphasis processing are carried out simultaneously, the influence of the comparatively low frequency components of the original image is large in the dynamic range compressing process, and the influence of the comparatively high frequency components of the original image is large in the frequency emphasis processing. Therefore, in cases where the dynamic range compressing process is carried out, of the plurality of the unsharp image signals Susk, the unsharp image signals Susk of the comparatively low frequency bands may be utilized. Also, in cases where the frequency emphasis processing is carried out, of the plurality of the unsharp image signals Susk, the unsharp image signals Susk of the comparatively high frequency bands may be utilized. In this manner, the unsharp image signals Susk of different frequency bands may be used in a dynamic range compressing process and the frequency emphasis processing.

In the aforesaid embodiments of the multi-resolution transforming process, the frequency emphasis processing and the interpolating operation process is carried out by using the filter of the Gaussian signal. Alternatively, the interpolating operation process may be carried out on the filtering-processed image by using the B spline interpolating operation. How the B spline interpolating operation process is carried out will be described hereinbelow.

The B spline interpolating operation is an interpolating operation technique for obtaining an interpolation image signal representing a secondary image, in which the sharpness is comparatively low and which is smooth. In the B spline interpolating operation, the spline interpolating function need not pass through the original sampling points (picture elements), and it is necessary that the first-order differential coefficient and the second-order differential coefficient {represented by f"(X)} of the spline interpolating function are continuous between adjacent sections.

Specifically, in Formula (20),${\text{f}}_{\text{k}} {\text{(x) =A}}_{\text{k}} {\text{x}}^{\text{3}} {\text{+B}}_{\text{k}} {\text{x}}^{\text{2}} {\text{+C}}_{\text{k}} {\text{x+D}}_{\text{k}}$ wherein Bₖ is a coefficient used as an aid in facilitating the explanation and does not represent the filtering-processed image signal, the conditions shown below should be satisfied.${\text{f}}_{\text{k}} {\text{'(X}}_{\text{k}} {\text{)=f}}_{\text{k-1}} {\text{'(X}}_{\text{k}} \text{)}$${\text{f}}_{\text{k}} {\text{'(X}}_{\text{k+1}} {\text{)=f}}_{\text{k+1}} {\text{'(X}}_{\text{k+1}} \text{)}$${\text{f}}_{\text{k}} {\text{"(X}}_{\text{k}} {\text{)=f}}_{\text{k-1}} {\text{"(X}}_{\text{k}} \text{)}$${\text{f}}_{\text{k}} {\text{"(X}}_{\text{k+1}} {\text{)=f}}_{\text{k+1}} {\text{"(X}}_{\text{k+1}} \text{)}$ Also, it is necessary for the first-order differential coefficient at the picture element Xₖ to satisfy the condition with respect to the picture elements Xₖ₋₁ and Xₖ₊₁, which are located before and after the picture element Xₖ, in that the first-order differential coefficient at the picture element Xₖ should coincide with the gradient (Yₖ₊₁-Yₖ₋₁)/(Xₖ₊₁-Xₖ₋₁) of the image signal components Yₖ₋₁ and Yₖ₊₁ representing the picture elements Xₖ₋₁ and Xₖ₊₁. Therefore, it is necessary for Formula (25) to be satisfied.${\text{f}}_{\text{k}} {\text{'(X}}_{\text{k}} {\text{)=(Y}}_{\text{k+1}} {\text{-Y}}_{\text{k-1}} {\text{)/(X}}_{\text{k+1}} {\text{-X}}_{\text{k-1}} \text{)}$

Further, it is necessary for the first-order differential coefficient at the picture element Xₖ₊₁ to satisfy the condition with respect to the picture elements Xₖ and Xₖ₊₂, which are located before and after the picture element Xₖ₊₁, in that the first-order differential coefficient at the picture element Xₖ₊₁ should coincide with the gradient (Yₖ₊₂-Yₖ)/(Xₖ₊₂-Xₖ) of the image signal components Yₖ and Yₖ₊₂ representing the picture elements Xₖ and Xₖ₊₂. Therefore, it is necessary for Formula (26) to be satisfied.${\text{f}}_{\text{k}} {\text{'(X}}_{\text{k+1}} {\text{)=(Y}}_{\text{k+2}} {\text{-Y}}_{\text{k}} {\text{)/(X}}_{\text{k+2}} {\text{-X}}_{\text{k}} \text{)}$

In general, the function f(X) may be approximately represented by Formula (27).${\text{f(X)=f(0)+f'(0)X+{f"(0)/2}X}}^{\text{2}}$

It is herein assumed that the interval (i.e., the lattice interval) of each of sections Xₖ₋₂∼Xₖ₋₁, Xₖ₋₁∼Xₖ, Xₖ∼ Xₖ₊₁, and Xₖ₊₁∼Xₖ₊₂ is equal to 1, and the position of the interpolation point Xₚ, which is taken from the picture element Xₖ toward the picture element Xₖ₊₁, is represented by t (0≦t≦1). In such cases, from Formulas (21), (22), (23), (24), and (27), the formulas shown below obtain.${\text{f}}_{\text{k}} {\text{'(0)=C}}_{\text{k}} {\text{=(Y}}_{\text{k+1}} {\text{-Y}}_{\text{k-1}} \text{)/2}$${\text{f}}_{\text{k}} {\text{'(1)=3A}}_{\text{k}} {\text{+2B}}_{\text{k}} {\text{+C}}_{\text{k}} {\text{=(Y}}_{\text{k+2}} {\text{-Y}}_{\text{k}} \text{)/2}$${\text{f}}_{\text{k}} {\text{"(0)=Y}}_{\text{k+1}} {\text{-2Y}}_{\text{k}} {\text{+Y}}_{\text{k-1}} \text{=2B}$

Therefore, the formulas shown below obtain.${\text{A}}_{\text{k}} {\text{=(Y}}_{\text{k+2}} {\text{-3Y}}_{\text{k+1}} {\text{+3Y}}_{\text{k}} {\text{-Y}}_{\text{k-1}} \text{)/6}$${\text{B}}_{\text{k}} {\text{=(Y}}_{\text{k+1}} {\text{-2Y}}_{\text{k}} {\text{+Y}}_{\text{k-1}} \text{)/2}$${\text{C}}_{\text{k}} {\text{=(Y}}_{\text{k+1}} {\text{-Y}}_{\text{k-1}} \text{)/2}$

Since Dₖ is unknown, it is represented by the formula${\text{D}}_{\text{k}} {\text{=(D}}_{\text{1}} {\text{Y}}_{\text{k+2}} {\text{+D}}_{\text{2}} {\text{Y}}_{\text{k+1}} {\text{+D}}_{\text{3}} {\text{Y}}_{\text{k}} {\text{+D}}_{\text{4}} {\text{Y}}_{\text{k-1}} \text{)/6}$

As described above, the variable conversion of X=t is carried out, and therefore the spline interpolating function fₖ(x) is represented by the formula shown below.${\text{f}}_{\text{k}} {\text{(x)=f}}_{\text{k}} \text{(t)}$ Therefore,${\text{f}}_{\text{k}} {\text{(t)={(Y}}_{\text{k+2}} {\text{-3Y}}_{\text{k+1}} {\text{+3Y}}_{\text{k}} {\text{-Y}}_{\text{k-1}} {\text{)/6}t}}^{\text{3}} {\text{+{(Y}}_{\text{k+1}} {\text{-2Y}}_{\text{k}} {\text{+Y}}_{\text{k-1}} {\text{)/2}t}}^{\text{2}} {\text{+ {(Y}}_{\text{k+1}} {\text{-Y}}_{\text{k-1}} \text{)/2}t} {\text{+ (D}}_{\text{1}} {\text{Y}}_{\text{k+2}} {\text{+D}}_{\text{2}} {\text{Y}}_{\text{k+1}} {\text{+D}}_{\text{3}} {\text{Y}}_{\text{k}} {\text{+D}}_{\text{4}} {\text{Y}}_{\text{k-1}} \text{)/ 6}$ Arranging this formula with respect to the image signal components Yₖ₋₁, Yₖ, Yₖ₊₁, and Yₖ₊₂ yields Formula (28).${\text{f}}_{\text{k}} {\text{(t)={(-t}}^{\text{3}} {\text{+3t}}^{\text{2}} {\text{-3t+D}}_{\text{4}} {\text{)/6}Y}}_{\text{k-1}} {\text{+{(3t}}^{\text{3}} {\text{-6t}}^{\text{2}} {\text{+D}}_{\text{3}} {\text{)/6}Y}}_{\text{k}} {\text{+{ (-3t}}^{\text{3}} {\text{+3t}}^{\text{2}} {\text{+3t+D}}_{\text{2}} {\text{)/6}Y}}_{\text{k+1}} {\text{+{(t}}^{\text{3}} {\text{+D}}_{\text{1}} {\text{)/6}Y}}_{\text{k+2}}$

If t is set to be t=1, the formula shown below will obtain.${\text{f}}_{\text{k}} {\text{(1)={(D}}_{\text{4}} {\text{-1)/6}Y}}_{\text{k-1}} {\text{+{(D}}_{\text{3}} {\text{-3)/6}Y}}_{\text{k}} {\text{+{(D}}_{\text{2}} {\text{+3)/6}Y}}_{\text{k+1}} {\text{+{(D}}_{\text{1}} {\text{+1)/6}Y}}_{\text{k+2}}$

As for the section Xₖ₊₁∼Xₖ₊₂, Formula (29) obtains.${\text{f}}_{\text{k+1}} {\text{(t)={(-t}}^{\text{3}} {\text{+3t}}^{\text{2}} {\text{-3t+D}}_{\text{4}} {\text{)/6)Y}}_{\text{k}} {\text{+{(3t}}^{\text{3}} {\text{-6t}}^{\text{2}} {\text{+D}}_{\text{3}} {\text{)/6}Y}}_{\text{k+1}} {\text{+{(-3t}}^{\text{3}} {\text{+3t}}^{\text{2}} {\text{+3t+D}}_{\text{2}} {\text{)/6}Y}}_{\text{k+2}} {\text{+{(t}}^{\text{3}} {\text{+D}}_{\text{1}} {\text{)6}Y}}_{\text{k+3}}$

If t is set to be t=0, the formula shown below will obtain.${\text{f}}_{\text{k+1}} {\text{(0)=(D}}_{\text{4}} {\text{/6)Y}}_{\text{k}} {\text{+(D}}_{\text{3}} {\text{/6)Y}}_{\text{k+1}} {\text{+ (D}}_{\text{2}} {\text{/6)Y}}_{\text{k+2}} {\text{+(D}}_{\text{1}} {\text{/6)Y}}_{\text{k+3}}$

From the continuity condition {fₖ(1)=fₖ₊₁(0)} and the condition in that the coefficients corresponding to the respective filtering-processed image signal components are equal to each other, D₄-1=0, D₃-3=D₄, D₂+3=D₃, D₁+1=D₂, and D₁=0. Therefore,${\text{D}}_{\text{k}} {\text{=(Y}}_{\text{k+1}} {\text{+4Y}}_{\text{k}} {\text{+Y}}_{\text{k-1}} \text{)/6}$

Accordingly, Formula (30) obtains.${\text{Y}}_{\text{p}} {\text{=f}}_{\text{k}} {\text{(t)={(-t}}^{\text{3}} {\text{+3t}}^{\text{2}} {\text{-3t+1)/6}Y}}_{\text{k-1}} {\text{+{(3t}}^{\text{3}} {\text{-6t}}^{\text{2}} {\text{+4)/6}Y}}_{\text{k}} {\text{+{(-3t}}^{\text{3}} {\text{+3t}}^{\text{2}} {\text{+3t+1)/6}Y}}_{\text{k+1}} {\text{+(t}}^{\text{3}} {\text{/6)Y}}_{\text{k+2}}$

Therefore, the interpolation coefficients bₖ₋₁, bₖ, bₖ₊₁, and bₖ₊₂, which respectively correspond to the filtering-processed image signal components Yₖ₋₁, Yₖ, Yₖ₊₁, and Yₖ₊₂, may be represented by the formulas shown below.${\text{b}}_{\text{k-1}} {\text{=(-t}}^{\text{3}} {\text{+3t}}^{\text{2}} \text{-3t+1)/ 6}$${\text{b}}_{\text{k}} {\text{=(3t}}^{\text{3}} {\text{-6t}}^{\text{2}} \text{+4)/6}$${\text{b}}_{\text{k+1}} {\text{=(-3t}}^{\text{3}} {\text{+3t}}^{\text{2}} \text{+3t+1)/6}$${\text{b}}_{\text{k+2}} {\text{=t}}^{\text{3}} \text{/6}$

The operations described above are repeated for the sections Xₖ₋₂∼Xₖ₋₁, Xₖ₋₁∼Xₖ, Xₖ∼Xₖ₊₁, and Xₖ₊₁∼Xₖ₊₂. In this manner, an interpolation image signal can be obtained, which is made up of image signal components occurring at intervals different from those of the image signal components of the entire filtering-processed image signal.

Therefore, in cases where the B spline interpolating operation process is carried out on each of the filtering-processed image signals Bk, the unsharp image signals Susk corresponding respectively to the filtering-processed image signals Bk can be obtained.

Also, in the embodiments described above, the filtering process is carried out with respect to the image signal components of the original image signal Sorg, which represent the picture elements located at every second row and every second column in the array of picture elements of the original image. The interpolating operation is then carried out. The process is carried out successively, and the unsharp image signals Susk are thereby obtained. Alternatively, the filtering process may be carried out on the original image signal Sorg by using a plurality of unsharp masks having different sizes, and the unsharp image signals Susk having different frequency response characteristics may thereby be obtained.

Further, the frequency emphasis processing in the embodiments described above is also applicable when the frequency emphasis processing is carried out on a flow pattern, which occurs in the image obtained with the tomographic image recording operation. The embodiment, wherein the frequency emphasis processing is carried out, is also applicable to the image obtained with the tomographic image recording operation. In this manner, the flow pattern can be eliminated, and an artifact can be prevented from occurring at the region in the vicinity of an edge in the image.

Specifically, the image processing method for eliminating the flow pattern, which occurs when the tomographic image recording operation is carried out, by carrying out the image processing with unsharp masks is proposed in, for example, Japanese Unexamined Patent Publication No. 3(1991)-276265. In such cases, the problems occur in that an artifact occurs in the region in the vicinity of an edge, at which the image density changes sharply. In such cases, in order for the flow pattern to be eliminated, the unsharp image signals Susk are obtained by using a one-dimensional unsharp mask. Specifically, when the unsharp image signals having different frequency response characteristics are obtained in the embodiments described above, the filtering process with the one-dimensional unsharp mask for eliminating the flow pattern may be carried out. The band-limited image signals may then be obtained in accordance with the thus obtained filtering-processed image signals. In cases where the absolute value of each band-limited image signal is comparatively large, the band-limited image signal may be converted such that its absolute value may become small. The subsequent processes may then be carried out. In this manner, the flow pattern can be eliminated, and an image free from any artifact and having good image quality can be obtained.

Also, together with the process using the one-dimensional unsharp mask for the elimination of the flow pattern, the aforesaid process using the two-dimensional unsharp mask or the process, in which the processing is carried out with the one-dimensional unsharp mask in two-dimensional directions, may be carried out. In such cases, the flow pattern can be eliminated from the original image, and the occurrence of the artifact in the region in the vicinity of an edge can be reduced even further. Therefore, a processed image having good image quality can be obtained.

Further, as described above, in the frequency emphasis processing, the converting process carried out on the band-limited image signals may be varied for different portions of the object, the images of which were recorded. The idea of the changing of the process in accordance with the portion of the object, the image of which was recorded, is applicable to every embodiment.

## Claims

1. An image processing method, wherein a signal concerning high frequency components of an original image is added to an original image signal, which represents the original image, and the high frequency components of the original image are thereby emphasized, the method comprising the steps of:
i) forming a plurality of unsharp mask image signals, which have different frequency response characteristics, from the original image signal,
ii) forming a plurality of band-limited image signals, each of which represents one of signals falling within a plurality of different frequency bands of the original image signal, from the original image signal and the plurality of said unsharp mask image signals, or from the plurality of said unsharp mask image signals,
iii) carrying out a converting process on at least a single band-limited image signal, which is among the plurality of said band-limited image signals, such that at least a portion of the band-limited image signal may become small, a plurality of converted image signals being thereby formed, and
iv) integrating the plurality of said converted image signals, whereby the signal concerning the high frequency components of the original image, which signal is to be added to the original image signal, is obtained.

2. An image processing method as defined in Claim 1 wherein the formation of the plurality of said converted image signals is carried out by converting a band-limited image signal having a signal value, the absolute value of which is larger than a predetermined threshold value, such that the absolute value of the signal value of the band-limited image signal, which absolute value is larger than the predetermined threshold value, may be converted to a small value.

3. An image processing method as defined in Claim 2 wherein the formation of the plurality of said converted image signals is carried out by converting a band-limited image signal such that, as the absolute value of the signal value of the band-limited image signal becomes larger than the predetermined threshold value, the absolute value of the signal value of the band-limited image signal may be converted to a small value, and such that, as the absolute value of the signal value of the band-limited image signal becomes smaller than a different threshold value, which is smaller than the predetermined threshold value, the absolute value of the signal value of the band-limited image signal may be converted to a small value.

4. An image processing method as defined in Claim 2 wherein the formation of the plurality of said converted image signals is carried out by converting a band-limited image signal such that the level of the absolute value of the signal value of the band-limited image signal may be changed in accordance with the frequency band of the band-limited image signal.

5. An image processing method as defined in Claim 3 wherein the formation of the plurality of said converted image signals is carried out by converting a band-limited image signal such that the level of the absolute value of the signal value of the band-limited image signal may be changed in accordance with the frequency band of the band-limited image signal.

6. An image processing method as defined in Claim 1 wherein the formation of the plurality of said converted image signals is carried out by converting a band-limited image signal in accordance with one of a plurality of functions, which vary for different frequency bands, such that the absolute value of the signal value of the band-limited image signal may be converted to a value, which is not larger than said absolute value and is determined in accordance with said absolute value.

7. An image processing method as defined in Claim 6 wherein each of the functions, which are used for the formation of said converted image signals, converts a band-limited image signal having a signal value, the absolute value of which is larger than a predetermined value, such that the value of the converted image signal may become approximately equal to a predetermined level, and wherein the functions are set such that, in a function for processing a high frequency band, said predetermined value is set to be smaller than those in the other functions.

8. An image processing method as defined in Claim 6 or 7 wherein the functions, which are used for the formation of said converted image signals, are set such that, in a function for processing a low frequency band, the absolute value of the converted image signal, that is obtained when the band-limited image signal having a signal value, the absolute value of which falls within a predetermined range close to 0, is converted, may take a value smaller than those in the other functions.

9. An image processing method as defined in Claim 1 or 2 or 6 wherein the formation of said band-limited image signals, the formation of said converted image signals, the formation of the signal concerning the high frequency components, and the addition of the signal concerning the high frequency components to the original image signal are carried out with the formula:$\text{Sproc=Sorg+β(Sorg)·Fusm(Sorg,Sus1,Sus2,...,SusN)} \text{Fusm(Sorg,Sus1,Sus2,...,SusN)} \text{={f1(Sorg - Sus1)+f2(Sus1 - Sus2)+...} \text{+fk(Susk-1 - Susk)+...+fN(SusN-1 - SusN)}}$ wherein Sproc represents the image signal, in which the high frequency components have been emphasized, Sorg represents the original image signal, Susk (k=1 to N) represents the unsharp mask image signal, fk (k=1 to N) represents the function for converting the band-limited image signal, and *β*(Sorg) represents the emphasis coefficient determined in accordance with the original image signal.

10. An image processing method as defined in Claim 1, 2 or 6 wherein the formation of said band-limited image signals, the formation of said converted, image signals, the formation of the signal concerning the high frequency components, and the addition of the signal concerning the high frequency components to the original image signal are carried out with the formula:$\text{Sproc=Sorg+β(Sorg)·Fusm(Sorg,Sus1,Sus2,...,SusN)} \text{Fusm(Sorg,Sus1,Sus2,...,SusN)} \text{=(1/N)·{f1(Sorg - Sus1)+f2(Sorg - Sus2)+...} \text{+fk(Sorg - Susk)+...+fN(Sorg - SusN)}}$ wherein Sproc represents the image signal, in which the high frequency components have been emphasized, Sorg represents the original image signal, Susk (k=1 to N) represents the unsharp mask image signal, fk (k=1 to N) represents the function for converting the band-limited image signal, and *β*(Sorg) represents the emphasis coefficient determined in accordance with the original image signal.

11. An image processing method as defined in Claim 1 or 2 wherein the formation of said band-limited image signals, the formation of said converted image signals, the formation of the signal concerning the high frequency components, and the addition of the signal concerning the high frequency components to the original image signal are carried out with the formula:$\text{Sproc=Sorg+β(Sorg)·Fusm(Sus1,Sus2,...,SusN)} \text{Fusm(Sus1,Sus2,...,SusN)} \text{={f2(Sus1 - Sus2)+f3(Sus2 - Sus3)+...} \text{+fk(Susk-1 - Susk)+...+fN(SusN-1 - SusN)}}$ wherein Sproc represents the image signal, in which the high frequency components have been emphasized, Sorg represents the original image signal, Susk (k=1 to N) represents the unsharp mask image signal, fk (k=2 to N) represents the function for converting the band-limited image signal, and *β*(Sorg) represents the emphasis coefficient determined in accordance with the original image signal.

12. An image processing method as defined in Claim 1 or 2 wherein the formation of said band-limited image signals, the formation of said converted image signals, the formation of the signal concerning the high frequency components, and the addition of the signal concerning the high frequency components to the original image signal are carried out with the formula:$\text{Sproc=Sorg+β(Sorg)·Fusm(Sus1,Sus2,...,SusN)} \text{Fusm(Sus1,Sus2,...,SusN)} \text{=(1/N)·{f2(Sus1 - Sus2)+f3(Sus1 - Sus3)+...} \text{+fk(Sus1 - Susk)+...+fN(Sus1 - SusN)}}$ wherein Sproc represents the image signal, in which the high frequency components have been emphasized, Sorg represents the original image signal, Susk (k=1 to N) represents the unsharp mask image signal, fk (k=2 to N) represents the function for converting the band-limited image signal, and β(Sorg) represents the emphasis coefficient determined in accordance with the original image signal.

13. An image processing method as defined in any of Claims 1, 2, 6 and 9 to 12 wherein the formation of the plurality of said converted image signals is carried out by conducting a converting process on a band-limited image signal in accordance with the value of an emphasis coefficient, which is used for the emphasis.

14. An image processing method as defined in Claim 13 wherein said converting process varies for different frequency bands and is carried out such that, as for a band-limited image signal of a low frequency band, the band-limited image signal may be restricted strongly, and such that, as the value of said emphasis coefficient becomes large, the difference between the degree of restriction of a band-limited image signal of a high frequency band and the degree of restriction of a band-limited image signal of a low frequency band may become large.

15. An image processing method as defined in Claim 1 wherein the formation of the plurality of said converted image signals is carried out by:
converting a band-limited image signal such that the absolute value of the signal value of the band-limited image signal may be converted to a value, which is not larger than said absolute value and is determined in accordance with said absolute value, a restricted image signal being thereby obtained,
forming an auxiliary image signal, which contains a signal of a frequency band lower than the frequency band of the band-limited image signal having been used for the formation of said restricted image signal, said auxiliary image signal being formed from the original image signal and the plurality of said unsharp mask image signals,
converting said auxiliary image signal such that, as the absolute value of the signal value of said auxiliary image signal becomes small, said absolute value may be converted to a value close to 1, and such that, as the absolute value of the signal value of said auxiliary image signal becomes large, said absolute value may be converted to a value close to 0, a magnification ratio signal corresponding to said restricted image signal being thereby obtained, and
multiplying said restricted image signal by said magnification ratio signal, which corresponds to said restricted image signal.

16. An image processing method as defined in Claim 1 or 15 wherein the formation of said band-limited image signals, the formation of said converted image signals, the formation of the signal concerning the high frequency components, and the addition of the signal concerning the high frequency components to the original image signal are carried out the formula:$\text{Sproc=Sorg+β(Sorg) ·Fusm(Sorg,Sus1,Sus2, ..., SusN)} \text{Fusm(Sorg,Sus1,Sus2,...,SusN)} \text{={f1(Sorg - Sus1)·g(Sus1 - Sus2)} \text{+f2(Sus1 - Sus2)·g(Sus2 - Sus3)+...} \text{+fk(Susk-1 - Susk)·g(Susk - Susk+1)+...} \text{+fN(SusN-1 - SusN)·g(SusN - SusN+1)}}$ wherein Sproc represents the image signal, in which the high frequency components have been emphasized, Sorg represents the original image signal, Susk (k=1 to N+1) represents the unsharp mask image signal, fk (k=1 to N) represents the function for converting the band-limited image signal and thereby obtaining the restricted image signal, g represents the function for converting the auxiliary image signal and thereby obtaining the magnification ratio signal, and *β*(Sorg) represents the emphasis coefficient determined in accordance with the original image signal.

17. An image processing method as defined in Claim 1 or 15 wherein the formation of said band-limited image signals, the formation of said converted image signals, the formation of the signal concerning the high frequency components, and the addition of the signal concerning the high frequency components to the original image signal are carried out the formula:$\text{Sproc=Sorg+β(Sorg)·Fusm(Sorg,Sus1,Sus2,...,SusN)} \text{Fusm(Sorg,Sus1,Sus2,...,SusN)} \text{={f1(Sorg - Sus1)·g(Sorg - Sus2)} \text{+f2(Sus1 - Sus2)·g(Sorg - Sus3)+...} \text{+fk(Susk-1 - Susk)·g(Sorg - Susk+1)+...} \text{+fN(SusN-1 - SusN)·g(Sorg - SusN+1)}}$ wherein Sproc represents the image signal, in which the high frequency components have been emphasized, Sorg represents the original image signal, Susk (k=1 to N+1) represents the unsharp mask image signal, fk (k=1 to N) represents the function for converting the band-limited image signal and thereby obtaining the restricted image signal, g represents the function for converting the auxiliary image signal and thereby obtaining the magnification ratio signal, and *β*(Sorg) represents the emphasis coefficient determined in accordance with the original image signal.

18. An image processing method as defined in Claim 1 wherein the formation of the plurality of said converted image signals is carried out by:
converting a low frequency side band-limited image signal, which is of a frequency band lower than the frequency band of a band-limited image signal to be converted, with a non-linear function, an auxiliary image signal for said band-limited image signal to be converted being thereby obtained, said non-linear function having the characteristics such that the function may pass through an origin, such that the inclination of the function at the origin may be equal to approximately 0, and such that the inclination of the function may increase gradually as the value to be processed becomes large,
adding said auxiliary image signal to said band-limited image signal to be converted, a composite band-limited image signal being thereby obtained, and
converting said composite band-limited image signal such that the absolute value of the signal value of said composite band-limited image signal may be converted to a value, which is not larger than said absolute value and is determined in accordance with said absolute value.

19. An image processing method as defined in Claim 1 or 18 wherein the formation of said band-limited image signals, the formation of said converted image signals, the formation of the signal concerning the high frequency components, and the addition of the signal concerning the high frequency components to the original image signal are carried out the formula:$\text{Sproc=Sorg+β(Sorg)·Fusm(Sorg,Sus1,Sus2,...,SusN)} \text{Fusm(Sorg,Sus1,Sus2,...,SusN)} \text{=[f1((Sorg - Sus1)+g(Sus1 - Sus2)}} \text{+f2((Sus1 - Sus2)+g(Sus2 - Sus3)}+...} \text{+fk{(Susk-1 - Susk)+g(Susk - Susk+1)}+...} \text{+fN{(SusN-1 - SusN)+g(SusN - SusN+1)}]}$ wherein Sproc represents the image signal, in which the high frequency components have been emphasized, Sorg represents the original image signal, Susk (k=1 to N+1) represents the unsharp mask image signal, fk (k=1 to N) represents the function for converting the composite band-limited image signal, g represents the function for converting the band-limited image signal and thereby obtaining the auxiliary image signal, and *β* (Sorg) represents the emphasis coefficient determined in accordance with the original image signal.

20. An image processing method as defined in any of Claims 1, 2, 6, 9 to 12 and 15 wherein the formation of the plurality of said converted image signals is carried out by converting a band-limited image signal in accordance with the portion of an object, the image of which was recorded as the original image.

21. An image processing method as defined in any of Claim 16-19 wherein the formation of the plurality of said converted image signals is carried out by converting a band-limited image signal in accordance with the portion of an object, the image of which was recorded as the original image.

22. An image processing method as defined in any of Claims 1, 2, 6, 9 to 12 and 15 to 20 wherein the original image has been obtained from a tomographic image recording operation and contains a flow pattern, and the formation of the plurality of said unsharp mask image signals is carried out by conducting unsharp mask processing on the original image signal by using a one-dimensional unsharp mask extending along the direction of said flow pattern.

23. An image processing apparatus, wherein a signal concerning high frequency components of an original image is added to an original image signal, which represents the original image, and the high frequency components of the original image are thereby emphasized, the apparatus comprising:
i) an unsharp mask image signal forming means for forming a plurality of unsharp mask image signals, which have different frequency response characteristics, from the original image signal,
ii) a band-limited image signal forming means for forming a plurality of band-limited image signals, each of which represents one of signals falling within a plurality of different frequency bands of the original image signal, from the original image signal and the plurality of said unsharp mask image signals, or from the plurality of said unsharp mask image signals,
iii) a conversion means for carrying out a converting process on at least a single band-limited image signal, which is among the plurality of said band-limited image signals, such that at least a portion of the band-limited image signal may become small, and thereby forming a plurality of converted image signals, and
iv) a frequency emphasis processing means for integrating the plurality of said converted image signals, and thereby obtaining the signal concerning the high frequency components of the original image, which signal is to be added to the original image signal.

24. An image processing apparatus as defined in Claim 23 wherein said conversion means forms the plurality of said converted image signals by converting a band-limited image signal having a signal value, the absolute value of which is larger than a predetermined threshold value, such that the absolute value of the signal value of the band-limited image signal, which absolute value is larger than the predetermined threshold value, may be converted to a small value.

25. An image processing apparatus as defined in Claim 24 wherein said conversion means forms the plurality of said converted image signals by converting a band-limited image signal such that, as the absolute value of the signal value of the band-limited image signal becomes larger than the predetermined threshold value, the absolute value of the signal value of the band-limited image signal may be converted to a small value, and such that, as the absolute value of the signal value of the band-limited image signal becomes smaller than a different threshold value, which is smaller than the predetermined threshold value, the absolute value of the signal value of the band-limited image signal may be converted to a small value.

26. An image processing apparatus as defined in Claim 24 or 25 wherein said conversion means forms the plurality of said converted image signals by converting a band-limited image signal such that the level of the absolute value of the signal value of the band-limited image signal may be changed in accordance with the frequency band of the band-limited image signal.

27. An image processing apparatus, as defined in Claim 23 wherein said conversion means forms the plurality of said converted image signals by converting a band-limited image signal in accordance with one of a plurality of functions, which vary for different frequency bands, such that the absolute value of the signal value of the band-limited image signal may be converted to a value, which is not larger than said absolute value and is determined in accordance with said absolute value.

28. An image processing apparatus as defined in Claim 27 wherein each of the functions, which are used for the formation of said converted image signals, converts a band-limited image signal having a signal value, the absolute value of which is larger than a predetermined value, such that the value of the converted image signal may become approximately equal to a predetermined level, and wherein the functions are set such that, in a function for processing a high frequency band, said predetermined value is set to be smaller than those in the other functions.

29. An image processing apparatus as defined in Claim 27 or 28 wherein the functions, which are used for the formation of said converted image signals, are set such that, in a function for processing a low frequency band, the absolute value of the converted image signal, that is obtained when the band-limited image signal having a signal value, the absolute value of which falls within a predetermined range close to 0, is converted, may take a value smaller than those in the other functions.

30. An image processing apparatus as defined in Claim 23, 24 or 27 wherein the formation of said band-limited image signals, the formation of said converted image signals, the formation of the signal concerning the high frequency components, and the addition of the signal concerning the high frequency components to the original image signal are carried out with the formula:$\text{Sproc=Sorg+β(Sorg)·Fusm(Sorg,Sus1,Sus2,...,SusN)} \text{Fusm(Sorg,Sus1,Sus2,...,SusN)} \text{={f1(Sorg - Sus1)+f2(Sus1 - Sus2)+...} \text{+fk(Susk-1 - Susk)+...+fN(SusN-1 - SusN)}}$ wherein Sproc represents the image signal, in which the high frequency components have been emphasized, Sorg represents the original image signal, Susk (k=1 to N) represents the unsharp mask image signal, fk (k=1 to N) represents the function for converting the band-limited image signal, and *β*(Sorg) represents the emphasis coefficient determined in accordance with the original image signal.

31. An image processing apparatus as defined in Claim 23 or 24 or 27 wherein the formation of said band-limited image signals, the formation of said converted image signals, the formation of the signal concerning the high frequency components, and the addition of the signal concerning the high frequency components to the original image signal are carried out with the formula:$\text{Sproc=Sorg+β(Sorg)·Fusm(Sorg,Sus1,Sus2,...,SusN)} \text{Fusm(Sorg,Sus1,Sus2,...,SusN)} \text{= (1/N)·{f1(Sorg - Sus1)+f2(Sorg - Sus2)+...} \text{+fk(Sorg - Susk)+...+fN(Sorg - SusN)}}$ wherein Sproc represents the image signal, in which the high frequency components have been emphasized, Sorg represents the original image signal, Susk (k=1 to N) represents the unsharp mask image signal, fk (k=1 to N) represents the function for converting the band-limited image signal, and β(Sorg) represents the emphasis coefficient determined in accordance with the original image signal.

32. An image processing apparatus as defined in Claim 23 or 24 wherein the formation of said band-limited image signals, the formation of said converted image signals, the formation of the signal concerning the high frequency components, and the addition of the signal concerning the high frequency components to the original image signal are carried out with the formula:$\text{Sproc=Sorg+β(Sorg)·Fusm(Sus1,Sus2,...,SusN)} \text{Fusm(Sus1,Sus2,...,SusN)} \text{={f2(Sus1 - Sus2)+f3(Sus2 - Sus3)+...} \text{+fk(Susk-1 - Susk)+...+fN(SusN-1 - SusN)}}$ wherein Sproc represents the image signal, in which the high frequency components have been emphasized, Sorg represents the original image signal, Susk (k=1 to N) represents the unsharp mask image signal, fk (k=2 to N) represents the function for converting the band-limited image signal, and β(Sorg) represents the emphasis coefficient determined in accordance with the original image signal.

33. An image processing apparatus as defined in Claim 23 or 24 wherein the formation of said band-limited image signals, the formation of said converted image signals, the formation of the signal concerning the high frequency components, and the addition of the signal concerning the high frequency components to the original image signal are carried out with the formula:$\text{Sproc=Sorg+β(Sorg)·Fusm(Sus1,Sus2,...,SusN)} \text{Fusm(Sus1,Sus2,...,SusN)} \text{=(1/N)·{f2(Sus1 - Sus2)+f3(Sus1 - Sus3)+...} \text{+fk(Sus1 - Susk)+...+fN(Sus1 - SusN)}}$ wherein Sproc represents the image signal, in which the high frequency components have been emphasized, Sorg represents the original image signal, Susk (k=1 to N) represents the unsharp mask image signal, fk (k=2 to N) represents the function for converting the band-limited image signal, and β(Sorg) represents the emphasis coefficient determined in accordance with the original image signal.

34. An image processing apparatus as defined in any of Claims 23, 24, 27 and 30 to 33 wherein said conversion means forms the plurality of said converted image signals by conducting a converting process on a band-limited image signal in accordance with the value of an emphasis coefficient, which is used for the emphasis.

35. An image processing apparatus as defined in Claim 34 wherein said converting process varies for different frequency bands and is carried out such that, as for a band-limited image signal of a low frequency band, the band-limited image signal may be restricted strongly, and such that, as the value of said emphasis coefficient becomes large, the difference between the degree of restriction of a band-limited image signal of a high frequency band and the degree of restriction of a band-limited image signal of a low frequency band may become large.

36. An image processing apparatus as defined in. Claim 23 wherein said conversion means comprises:
a restricted image signal forming means for converting a band-limited image signal such that the absolute value of the signal value of the band-limited image signal may be converted to a value, which is not larger than said absolute value and is determined in accordance with said absolute value, and thereby obtaining a restricted image signal,
an auxiliary image signal forming means for forming an auxiliary image signal, which contains a signal of a frequency band lower than the frequency band of the band-limited image signal having been used for the formation of said restricted image signal, said auxiliary image signal being formed from the original image signal and the plurality of said unsharp mask image signals,
a magnification ratio signal forming means for converting said auxiliary image signal such that, as the absolute value of the signal value of said auxiliary image signal becomes small, said absolute value may be converted to a value close to 1, and such that, as the absolute value of the signal value of said auxiliary image signal becomes large, said absolute value may be converted to a value close to 0, and thereby obtaining a magnification ratio signal corresponding to said restricted image signal, and
a multiplication means for multiplying said restricted image signal by said magnification ratio signal, which corresponds to said restricted image signal.

37. An image processing apparatus as defined in Claim 23 wherein the formation of said band-limited image signals, the formation of said converted image signals, the formation of the signal concerning the high frequency components, and the addition of the signal concerning the high frequency components to the original image signal are carried out the formula:$\text{Sproc=Sorg+β(Sorg)·Fusm(Sorg,Sus1,Sus2,...,SusN),...,SusN)} \text{Fusm(Sorg,Sus1,Sus2,...,SusN)} \text{- ={f1(Sorg - Sus1)·g(Sus1 - Sus2)} \text{+f2(Sus1 - Sus2)·g(Sus2 - Sus3)+...} \text{+fk(Susk-1 - Susk)·g(Susk - Susk+1)+...} \text{+fN(SusN-1 - SusN)·g(SusN - SusN+1)}}$ wherein Sproc represents the image signal, in which the high frequency components have been emphasized, Sorg represents the original image signal, Susk (k=1 to N+1) represents the unsharp mask image signal, fk (k=1 to N) represents the function for converting the band-limited image signal and thereby obtaining the restricted image signal, g represents the function for converting the auxiliary image signal and thereby obtaining the magnification ratio signal, and β (Sorg) represents the emphasis coefficient determined in accordance with the original image signal.

38. An image processing apparatus as defined in Claim 23 or 36 wherein the formation of said band-limited image signals, the formation of said converted image signals, the formation of the signal concerning the high frequency components, and the addition of the signal concerning the high frequency components to the original image signal are carried out the formula:$\text{Sproc=Sorg+β(Sorg)·Fusm(Sorg,Sus1,Sus2,...,SusN)} \text{Fusm(Sorg,Sus1,Sus2,...,SusN)} \text{={f1(Sorg - Sus1)·g(Sorg - Sus2)} \text{+f2(Sus1 Sus2)·g(Sorg - Sus3)+...} \text{+fk(Susk-1 - Susk)·g(Sorg - Susk+1)+...} \text{+fN(SusN-1 - SusN)·g(Sorg - SusN+1)}}$ wherein Sproc represents the image signal, in which the high frequency components have been emphasized, Sorg represents the original image signal, Susk (k=1 to N+1) represents the unsharp mask image signal, fk (k=1 to N) represents the function for converting the band-limited image signal and thereby obtaining the restricted image signal, g represents the function for converting the auxiliary image signal and thereby obtaining the magnification ratio signal, and β(Sorg) represents the emphasis coefficient determined in accordance with the original image signal.

39. An image processing apparatus as defined in Claim 23 wherein said conversion means comprises:
an auxiliary image signal forming means for converting a low frequency side band-limited image signal, which is of a frequency band lower than the frequency band of a band-limited image signal to be converted, with a non-linear function, and thereby obtaining an auxiliary image signal for said band-limited image signal to be converted, said non-linear function having the characteristics such that the function may pass through an origin, such that the inclination of the function at the origin may be equal to approximately 0, and such that the inclination of the function may increase gradually as the value to be processed becomes large,
a composite band-limited image signal forming means for adding said auxiliary image signal to said band-limited image signal to be converted, and thereby obtaining a composite band-limited image signal, and
a converted image signal forming means for converting said composite band-limited image signal such that the absolute value of the signal value of said composite band-limited image signal may be converted to a value, which is not larger than said absolute value and is determined in accordance with said absolute value, and thereby obtaining a converted image signal.

40. An image processing apparatus as defined in Claim 23 or 39 wherein the formation of said band-limited image signals, the formation of said converted image signals, the formation of the signal concerning the high frequency components, and the addition of the signal concerning the high frequency components to the original image signal are carried out the formula:$\text{Sproc=Sorg+β(Sorg)·Fusm(Sorg,Sus1,Sus2,...,SusN)} \text{Fusm(Sorg,Sus1,Sus2,...,SusN)} \text{=[f1{(Sorg - Sus1)+g(Sus1 - Sus2)}} \text{+f2{(Sus1 - Sus2)+g(Sus2 - Sus3)}+...} \text{+fk{(Susk-1 - Susk)+g(Susk - Susk+1)}+...} \text{+fN((SusN-1 - SusN)+g(SusN - SusN+1)}]}$ wherein Sproc represents the image signal, in which the high frequency components have been emphasized, Sorg represents the original image signal, Susk (k=1 to N+1) represents the unsharp mask image signal, fk (k=1 to N) represents the function for converting the composite band-limited image signal, g represents the function for converting the band-limited image signal and thereby obtaining the auxiliary image signal, and β(Sorg) represents the emphasis coefficient determined in accordance with the original image signal.

41. An image processing apparatus as defined in any of Claims 23, 24 or 27 wherein said conversion means forms the plurality of said converted image signals by converting a band-limited image signal in accordance with the portion of an object, the image of which was recorded as the original image.

42. An image processing apparatus as defined in Claim 30 or 31 wherein said conversion means forms said plurality of converted image signals by converting a band-limited image signal in accordance with the portion of an object, the image of which was recorded as the original image.

43. An image processing apparatus as defined in Claim 32 wherein said conversion means forms the plurality of said converted image signals by converting a band-limited image signal in accordance with the portion of an object, the image of which was recorded as the original image.

44. An image processing apparatus as defined in Claim 33 wherein said conversion means forms said plurality of converted image signals by converting a band-limited image signal in accordance with the portion of an object, the image of which was recorded as the original image.

45. An image processing apparatus as defined in any of Claims 36 to 40 wherein said conversion means forms the plurality of said converted image signals by converting a band-limited image signal in accordance with the portion of an object, the image of which was recorded as the original image.

46. An image processing apparatus as defined in any of Claims 23, 24, 27, 30 to 33 and 36 to 41 wherein the original image has been obtained from a tomographic image recording operation and contains a flow pattern, and said unsharp mask image signal forming means forms the plurality of said unsharp mask image signals by conducting unsharp mask processing on the original image signal by using a one-dimensional unsharp mask extending along the direction of said flow pattern.

## Patentansprüche

1. Bildverarbeitungsverfahren, bei dem ein Signal von hochfrequenten Komponenten eines Originalbildes auf ein Originalbildsignal addiert wird, welches für das Originalbild steht, und die hochfrequenten Komponenten des Originalbildes hierdurch hervorgehoben werden, umfassend folgende Schritte:
i) Bilden einer Mehrzahl von Unschärfemasken-Bildsignalen, die verschiedene Frequenzgänge haben, aus dem Originalbildsignal,
ii) Bilden einer Mehrzahl von bandbegrenzten Bildsignalen, von denen jedes eines der Signale darstellt, die in mehrere verschiedene Frequenzbänder des Originalbildsignals fallen, aus dem Originalbildsignal und den mehreren Unschärfemasken-Bildsignalen, oder aus den mehreren Unschärfemasken-Bildsignalen,
iii) Durchführen eines Umwandlungsprozesses bezüglich mindestens eines einzigen bandbegrenzten Bildsignals unter den mehreren bandbegrenzten Bildsignalen, so daß zumindest ein Teil des bandbegrenzten Bildsignals klein werden kann, um hierdurch mehrere umgewandelte Bildsignale zu bilden, und
iv) Integrieren der mehreren umgewandelten Bildsignale, wodurch das Signal der hochfrequenten Komponenten des Originalbildes, welches auf das Originalbildsignal zu addieren ist, erhalten wird.

2. Verfahren nach Anspruch 1, bei dem die Bildung der mehreren umgewandelten Bildsignale dadurch ausgeführt wird, daß ein bandbegrenztes Bildsignal mit einem Signalwert, dessen Absolutwert größer als ein vorbestimmter Schwellenwert ist, derart umgewandelt wird, daß der Absolutwert des Signalwerts des bandbegrenzten Bildsignals, welcher größer als der vorbestimmte Schwellenwert ist, in einen kleinen Wert umgewandelt werden kann.

3. Verfahren nach Anspruch 2, bei dem die Bildung der mehreren umgewandelten Bildsignale dadurch durchgeführt wird, daß ein bandbegrenztes Bildsignal derart umgewandelt wird, daß, wenn der Absolutwert des Signalwerts des bandbegrenzten Bildsignals größer als der vorbestimmte Schwellenwert wird, der Absolutwert des Signalwerts des bandbegrenzten Bildsignals in einen kleinen Wert umgewandelt werden kann, und derart, daß, wenn der Absolutwert des Signalwerts des bandbegrenzten Bildsignals kleiner als ein anderer Schwellenwert wird, der kleiner ist als der vorbestimmte Schwellenwert, der Absolutwert des Signalwerts des bandbegrenzten Bildsignals in einen kleinen Wert umgewandelt werden kann.

4. Verfahren nach Anspruch 2, bei dem die Bildung der mehreren umgewandelten Bildsignale dadurch durchgeführt wird, daß ein bandbegrenztes Bildsignal derart umgewandelt wird, daß der Pegel des Absolutwerts des Signalwerts des bandbegrenzten Bildsignals entsprechend dem Frequenzband des bandbegrenzten Bildsignals geändert werden kann.

5. Verfahren nach Anspruch 3, bei dem die Bildung der mehreren umgewandelten Signale dadurch durchgeführt wird, daß ein bandbegrenztes Bildsignal derart umgewandelt wird, daß der Pegel des Absolutwerts des Signalwerts des bandbegrenzten Bildsignals entsprechend dem Frequenzband des bandbegrenzten Bildsignals geändert werden kann.

6. Verfahren nach Anspruch 1, bei dem die Bildung der mehreren umgewandelten Signale dadurch durchgeführt wird, daß ein bandbegrenztes Bildsignal entsprechend einer aus einer Mehrzahl von Funktionen umgewandelt wird, die für unterschiedliche Frequenzbänder variieren, so daß der Absolutwert des Signalwerts des bandbegrenzten Bildsignals in einen Wert umgewandelt werden kann, der nicht größer als der Absolutwert ist und sich entsprechend dem Absolutwert bestimmt.

7. Verfahren nach Anspruch 6, bei dem jede der Funktionen, die zur Bildung der umgewandelten Signale verwendet werden, ein bandbegrenztes Signal mit einem Signalwert, dessen Absolutwert größer als ein vorbestimmter Wert ist, derart umwandelt, daß der Wert des umgewandelten Bildsignals etwa einem vorbestimmten Pegel gleichkommt, wobei die Funktionen derart eingerichtet werden, daß in einer Funktion zum Verarbeiten eines hochfrequenten Bandes der vorbestimmte Wert kleiner eingestellt wird als jene in den anderen Funktionen.

8. Verfahren nach Anspruch 6 oder 7, bei dem die Funktionen, die zur Bildung der umgewandelten Bildsignale verwendet werden, derart eingerichtet werden, daß in einer Funktion zum Verarbeiten eines niederfrequenten Bandes der Absolutwert des umgewandelten Bildsignals, der erhalten wird, wenn das bandbegrenzte Bildsignal einen kleinen Wert hat, dessen Absolutwert in einen vorbestimmten Bereich in der Nähe von 0 fällt, umgewandelt wird, einen Wert kleiner als jene der anderen Funktionen annehmen kann.

9. Verfahren nach Anspruch 1 oder 2 oder 6, bei dem die Bildung der bandbegrenzten Bildsignale, die Bildung der umgewandelten Bildsignale, die Bildung des Signals der hochfrequenten Komponenten und die Addition des Signals der hochfrequenten Komponenten des Originalbildsignals gemäß folgender Formel ausgeführt werden:$\text{Sproc = Sorg + β(Sorg) • Fusm(Sorg, Sus1, Sus2, ..., SusN)} \text{Fusm(Sorg, Sus1, Sus2, ..., SusN)} \text{= {f1(Sorg - Sus1) + f2(Sus1 - Sus2) + ...} \text{+ fk(Susk-1 - Susk) + ... + fN(SusN-1 - SusN)}}$ wobei Sproc das Bildsignal bedeutet, in welchem die hochfrequenten Komponenten hervorgehoben wurden, Sorg das Originalbildsignal ist, Susk (k=1 bis N) das Unschärfemasken-Bildsignal bedeutet, fk (k=1 bis N) die Funktion zum Umwandeln des bandbegrenzten Bildsignals bedeutet, und β(Sorg) den Hervorhebungskoeffizienten darstellt, der sich entsprechend dem Originalbildsignal bestimmt.

10. Verfahren nach Anspruch 1, 2 oder 6, bei dem die Bildung der bandbegrenzten Bildsignale, die Bildung der umgewandelten Bildsignale, die Bildung des Signals der hochfrequenten Komponenten und die Addition des Signals der hochfrequenten Komponenten des Originalbildsignals gemäß folgender Formel ausgeführt werden:$\text{Sproc = Sorg + β(Sorg) • Fusm(Sorg, Sus1, Sus2, ..., SusN)} \text{Fusm(Sorg, Sus1, Sus2, ..., SusN)} \text{= (1/N)•{f1(Sorg - Sus1) + f2(Sus1 - Sus2) + ...} \text{+ fk(Sorg - Susk) + ... + fN(Sorg - SusN)}}$ wobei Sproc das Bildsignal bedeutet, in welchem die hochfrequenten Komponenten hervorgehoben wurden, Sorg das Originalbildsignal ist, Susk (k=1 bis N) das Unschärfemasken-Bildsignal bedeutet, fk (k=1 bis N) die Funktion zum Umwandeln des bandbegrenzten Bildsignals bedeutet, und β(Sorg) den Hervorhebungskoeffizienten darstellt, der sich entsprechend dem Originalbildsignal bestimmt.

11. Verfahren nach Anspruch 1 oder 2, bei dem die Bildung der bandbegrenzten Bildsignale, die Bildung der umgewandelten Bildsignale, die Bildung des Signals der hochfrequenten Komponenten und die Addition des Signals der hochfrequenten Komponenten des Originalbildsignals gemäß folgender Formel ausgeführt werden:$\text{Sproc = Sorg + β(Sorg) • Fusm(Sus1, Sus2, ..., SusN)} \text{Fusm(Sus1, Sus2, ..., SusN)} \text{= {f2(Sus1 - Sus2) + f3(Sus2 - Sus3) + ...} \text{+ fk(Susk-1 - Susk) + ... + fN(SusN-1 - SusN)}}$ wobei Sproc das Bildsignal bedeutet, in welchem die hochfrequenten Komponenten hervorgehoben wurden, Sorg das Originalbildsignal ist, Susk (k=1 bis N) das Unschärfemasken-Bildsignal bedeutet, fk (k=1 bis N) die Funktion zum Umwandeln des bandbegrenzten Bildsignals bedeutet, und β(Sorg) den Hervorhebungskoeffizienten darstellt, der sich entsprechend dem Originalbildsignal bestimmt.

12. Verfahren nach Anspruch 1 oder 2, bei dem die Bildung der bandbegrenzten Bildsignale, die'Bildung der umgewandelten Bildsignale, die Bildung des Signals der hochfrequenten Komponenten und die Addition des Signals der hochfrequenten Komponenten des Originalbildsignals gemäß folgender Formel ausgeführt werden:$\text{Sproc = Sorg + β(Sorg) • Fusm(Sus1, Sus2, ..., SusN)} \text{Fusm(Sus1, Sus2, ..., SusN)} \text{= (1/N) • {f2(Sus1 - Sus2) + f3(Sus1 - Sus3) + ...} \text{+ fk(Sus1 - Susk) + ... + fN(Sus1 - SusN)}}$ wobei Sproc das Bildsignal bedeutet, in welchem die hochfrequenten Komponenten hervorgehoben wurden, Sorg das Originalbildsignal ist, Susk (k=1 bis N) das Unschärfemasken-Bildsignal bedeutet, fk (k=1 bis N) die Funktion zum Umwandeln des bandbegrenzten Bildsignals bedeutet, und β(Sorg) den Hervorhebungskoeffizienten darstellt, der sich entsprechend dem Originalbildsignal bestimmt.

13. Verfahren nach einem der Ansprüche 1, 2, 6 und 9 bis 12, bei dem die Bildung der mehreren umgewandelten Bildsignale dadurch durchgeführt wird, daß ein Umwandlungsprozeß bezüglich eines bandbegrenzten Bildsignals entsprechend dem Wert eines Hervorhebungskoeffizienten durchgeführt wird, der für die Hervorhebung verwendet wird.

14. Verfahren nach Anspruch 13, bei dem der Umwandlungsprozeß für verschiedene Frequenzbänder variiert und derart durchgeführt wird, daß für ein bandbegrenztes Signal eines niederfrequenten Bandes das bandbegrenzte Bildsignal stark beschränkt werden kann, und derart, daß, wenn der Wert des Hervorhebungskoeffizienten groß wird, die Differenz zwischen dem Maß der Beschränkung des bandbegrenzten Signals eines hochfrequenten Bandes und dem, Maß der Begrenzung eines bandbegrenzten Signals eines niederfrequenten Bandes groß werden kann.

15. Verfahren nach Anspruch 1, bei dem die Bildung der mehreren umgewandelten Bildsignale folgendermaßen durchgeführt wird:
Umwandeln eines bandbegrenzten Bildsignals derart, daß der Absolutwert des Signals des bandbegrenzten Bildsignals in einen Wert umgewandelt werden kann, der nicht größer ist als der Absolutwert, und sich entsprechend dem Absolutwert bestimmt, wodurch ein beschränktes Bildsignal erhalten wird,
Bilden eines Hilfsbildsignals, welches ein Signal eines Frequenzbands enthält, das niedriger ist als das Frequenzband des bandbegrenzten Bildsignals, welches zur Bildung des beschränkten Bildsignals verwendet wird, wobei das Hilfsbildsignal aus dem Originalbildsignal und den mehreren Unschärfemäsken-Bildsignalen gebildet wird,
Umwandeln des Hilfsbildsignals in der Weise, daß, wenn der Absolutwert des Signalwerts des Hilfsbildsignals klein wird, der Absolutwert in einen Wert in der Nähe von 1 umgewandelt werden kann, und derart, daß, wenn der Absolutwert des Signalwerts des Hilfsbildsignals groß wird, der Absolutwert in einen Wert in der Nähe von 0 umgewandelt werden kann, wodurch ein Vergrößerungsverhältnissignal entsprechend dem beschränkten Bildsignal erhalten wird, und
Multiplizieren des beschränkten Bildsignals mit dem Vergrößerungsverhältnissignal, welches dem beschränkten Bildsignal entspricht.

16. Verfahren nach Anspruch 1 oder 15, bei dem die Bildung der bandbegrenzten Bildsignale, die Bildung der umgewandelten Bildsignale, die Bildung der Signale der hochfrequenten Komponenten und die Addition des Signals der hochfrequenten Komponenten auf das Originalbildsignal entsprechend folgender Formel durchgeführt werden:$\text{Sproc = Sorg + β(Sorg) • Fusm(Sorg, Sus1, Sus2, ..., SusN)} \text{Fusm(Sorg, Sus1, Sus2, ..., SusN)} \text{= {f1(Sorg - Sus1) • g(Sus1 - Sus2)} \text{+ f2(Sus1 - Süs2) • g(Sus2 - Sus3)+ ...} \text{+ fk(Susk-1 - Susk) • g(Susk - Susk+1)}+ ...} \text{+ fN(SusN-1 - SusN) • g(SusN - SusN+1)}}$ wobei Sproc das Bildsignal ist, in welchem die hochfrequenten Komponenten hervorgehoben wurden, Sorg das Originalbildsignal ist, Susk (k=1 bis N+1) das Unschärfemasken-Bildsignal bedeutet, fk (k=1 bis N) die Funktion zum Umwandeln des bandbegrenzten Bildsignals, um das beschränkte Bildsignal zu erhalten, darstellt, g die Funktion zum Umwandeln des Hilfsbildsignals, um dadurch das Vergrößerungsverhältnissignal zu gewinnen, bedeutet, und β(Sorg) den Hervorhebungskoeffizienten darstellt, der entsprechend dem Originalbildsignal bestimmt wird.

17. Verfahren nach Anspruch 1 oder 15, bei dem die Bildung der bandbegrenzten Bildsignale, die Bildung der umgewandelten Bildsignale, die Bildung der Signale der hochfrequenten Komponenten und die Addition des Signals der hochfrequenten Komponenten auf das Originalbildsignal entsprechend folgender Formel durchgeführt werden:$\text{Sproc = Sorg + β(Sorg) • Fusm(Sorg, Sus1, Sus2, ..., SusN)} \text{Fusm(Sorg, Sus1, Sus2, ..., SusN)} \text{= {f1(Sorg - Sus1) • Sus1) • g(Sorg - g(Sorg - Sus2)} \text{+ f2(Sus1 - Sus2) • g(Sorg - Sus3)+ ...} \text{+ fk(Susk-1 - Susk) • g(Sorg - Susk+1)}+ ...} \text{+ fN(SusN-1 - SusN) • g(Sorg - SusN+1)}}$ wobei Sproc das Bildsignal ist, in welchem die hochfrequenten Komponenten hervorgehoben wurden, Sorg das Originalbildsignal ist, Susk (k=1 bis N+1) das Unschärfemasken-Bildsignal bedeutet, fk (k=1 bis N) die Funktion zum Umwandeln des bandbegrenzten Bildsignals, um das beschränkte Bildsignal zu erhalten, darstellt, g die Funktion zum Umwandeln des Hilfsbildsignals, um dadurch das Vergrößerungsverhältnissignal zu gewinnen, bedeutet, und β(Sorg) den Hervorhebungskoeffizienten darstellt, der entsprechend dem Originalbildsignal bestimmt wird.

18. Verfahren nach Anspruch 1, bei dem die Bildung der mehreren umgewandelten Bildsignale folgendermaßen durchgeführt wird:
Umwandeln eines auf der niederfrequenten Seite angesiedelten bandbegrenzten Bildsignals, dessen Frequenzband unterhalb des Frequenzbandes des umzuwandelnden bandbegrenzten Bildsignals liegt, mit einer nicht-linearen Funktion, um dadurch ein Hilfsbildsignal für das umzuwandelnde bandbegrenzte Bildsignal zu erhalten, wobei die nicht-lineare Funktion eine derartige Charakteristik hat, daß die Funktion durch einen Ursprung verlaufen kann, daß die Steigung der Funktion im Ursprung annähernd den Wert 0 annehmen kann, und daß die Steigung der Funktion allmählich zunehmen kann, wenn der zu verarbeitende Wert groß wird,
Addieren des Hilfsbildsignals auf das umzuwandelnde bandbegrenzte Bildsignal, um dadurch ein zusammengesetztes bandbegrenztes Bildsignal zu erhalten, und
Umwandeln des zusammengesetzten bandbegrenzten Bildsignals derart, daß der Absolutwert des Signalwerts des zusammengesetzten bandbegrenzten Bildsignals in einen Wert umgewandelt werden kann, der nicht größer ist als der Absolutwert und sich entsprechend dem Absolutwert bestimmt.

19. Verfahren nach Anspruch 1 oder 18, bei dem die Bildung der bandbegrenzten Bildsignale, die Bildung der umgewandelten Bildsignale, die Bildung des Signals der hochfrequenten Komponenten und die Addition des Signals der hochfrequenten Komponenten auf das Originalbildsignal entsprechend folgender Formel durchgeführt werden:$\text{Sproc = Sorg + β(Sorg) • Fusm(Sorg, Sus1, Sus2, ..., SusN)} \text{Fusm(Sorg, Sus1, Sus2, ..., SusN)} \text{= [f1{(Sorg - Sus1) + g(Sus1 - Sus2)}} \text{+ f2{(Sus1 - Sus2) + g(Sus2 - Sus3)}+ ...} \text{+ fk{(Susk-1 - Susk) + g(Susk - Susk+1)}+ ...} \text{+ fN{(SusN-1 - SusN) + g(SusN - SusN+1)}]}$ wobei Sproc das Bildsignal ist, in welchem die hochfrequenten Komponenten hervorgehoben wurden, Sorg das Originalbildsignal ist, Susk (k=1 bis N+1) das Unschärfemasken-Bildsignal bedeutet, fk (k=1 bis N) die Funktion zum Umwandeln des zusammengesetzten bandbegrenzten Bildsignals bedeutet, g die Funktion zum Umwandeln des bandbegrenzten Bildsignals, um dadurch das Hilfsbildsignal zu erhalten, bedeutet, und β(Sorg) den Hervorhebungskoeffizienten darstellt, der entsprechend dem Originalbildsignal bestimmt wird.

20. Verfahren nach einem der Ansprüche 1, 2, 6, 9 bis 12 und 15, bei dem die Bildung der mehreren umgewandelten Bildsignale dadurch durchgeführt wird, daß ein bandbegrenztes Bildsignal entsprechend dem Bereich eines Objekts umgewandelt wird, dessen Bild als das Originalbild aufgezeichnet wurde.

21. Verfahren nach einem der Ansprüche 16 bis 19, bei dem die Bildung der mehreren umgewandelten Bildsignale dadurch durchgeführt wird, daß ein bandbegrenztes Bildsignal entsprechend dem Bereich eines Objekts umgewandelt wird, dessen Bild als Originalbild aufgezeichnet wurde.

22. Verfahren nach einem der Ansprüche 1, 2, 6, 9 bis 12 und 15 bis 20, bei dem das Originalbild durch einen Tomographiebild-Aufzeichnungsvorgang gewonnen wurde und ein Strömungsmuster enthält, und die Bildung der mehreren Unschärfemasken-Bildsignale dadurch durchgeführt wird, daß eine Unschärfemaskenverarbeitung bezüglich des Originalbildsignals unter Verwendung einer eindimensionalen Unschärfemaske durchgeführt wird, die sich in Richtung des Strömungsmusters erstreckt.

23. Bildverarbeitungsvorrichtung, bei der ein Signal von hochfrequenten Komponenten eines Originalbildes auf ein Originalbildsignal addiert wird, welches ein Originalbild repräsentiert, und die hochfrequenten Komponenten des Originalbildes hierdurch hervorgehoben werden, umfassend folgende Merkmale:
i) eine Unschärfemasken-Bildsignal-Bildungseinrichtung zum Bilden mehrerer Unschärfemasken-Bildsignale mit unterschiedlichen Frequenzgängen aus dem Originalbildsignal,
ii) eine Bandbegrenztes-Bildsignal-Bildungseinrichtung zum Bilden mehrerer bandbegrenzter Bildsignale, die jeweils eines von Signalen repräsentieren, die in mehrere verschiedene Frequenzbänder des Originalbildsignals fallen, aus dem Originalbildsignal und den mehreren Unschärfemasken-Bildsignalen oder aus den mehreren Unschärfemasken-Bildsignalen,
iii) eine Umwandlungseinrichtung zum Durchführen eines Umwandlungsprozesses bezüglich mindestens einem einzigen bandbegrenzten Bildsignal unter den mehreren bandbegrenzten Bildsignalen in der Weise, daß zumindest ein Teil des bandbegrenzten Bildsignals klein werden kann, um dadurch mehrere umgewandelte Bildsignale zu bilden, und
iv) eine Frequenzhervorhebungs-Verarbeitungseinrichtung zum Integrieren der mehreren umgewandelten Bildsignale, und um dadurch das Signal bezüglich der hochfrequenten Komponenten des Originalbildes zu erhalten, welches auf das Originalbildsignal zu addieren ist.

24. Vorrichtung nach Anspruch 23, bei der die Umwandlungseinrichtung die mehreren umgewandelten Bildsignale dadurch bildet, daß sie ein bandbegrenztes Bildsignal mit einem Signalwert, dessen Absolutwert größer als ein vorbestimmter Schwellenwert ist, derart umwandelt, daß der Absolutwert des Signalwerts des bandbegrenzten Bildsignals, welcher größer als der vorbestimmte Schwellenwert ist, in einen kleinen Wert umgewandelt werden kann.

25. Vorrichtung nach Anspruch 24, bei der die Umwandlungseinrichtung die mehreren umgewandelten Bildsignale dadurch bildet, daß sie ein bandbegrenztes Bildsignal derart umwandelt, däß, wenn der Absolutwert des Signalwerts des bandbegrenzten Bildsignals größer als ein vorbestimmter Schwellenwert wird, der Absolutwert des Signalwerts des bandbegrenzten Bildsignals in einen kleinen Wert umgewandelt werden kann, und derart, daß, wenn der Absolutwert des Signalwerts des bandbegrehzten Bildsignals kleiner wird als ein anderer Schwellenwert, der kleiner als der vorbestimmte Schwellenwert ist, der Absolutwert des Signalwerts des bandbegrenzten Bildsignals in einen kleinen Wert umgewandelt werden kann.

26. Vorrichtung nach Anspruch 24 oder 25, bei der die Umwandlungseinrichtung die mehreren umgewandelten Bildsignale dadurch bildet, daß sie ein bandbegrenztes Bildsignal derart umwandelt, daß der Pegel des Absolutwerts des Signalwerts des bandbegrenzten Bildsignals entsprechend dem Frequenzband des bandbegrenzten Bildsignals geändert werden kann.

27. Vorrichtung nach Anspruch 23, bei der die Umwandlungseinrichtung die mehreren umgewandelten Bildsignale dadurch bildet, daß sie ein bandbegrenztes Bildsignal entsprechend einer aus einer Mehrzahl von Funktionen umwandelt, die für unterschiedliche Frequenzbänder variieren, demzufolge der Absolutwert des Signalwerts des bandbegrenzten Bildsignals in einen Wert umgewandelt werden kann, der nicht größer ist als der Absolutwert und der entsprechend dem Absolutwert bestimmt wird.

28. Vorrichtung nach Anspruch 27, bei der jede der Funktionen, die zur Bildung der umgewandelten Bildsignale verwendet werden, ein bandbegrenztes Bildsignal mit einem Signalwert, dessen Absolutwert größer als ein vorbestimmter Wert ist, derart umwandelt, daß der Wert des umgewandelten Bildsignals annähernd gleich einem vorbestimmten Pegel wird, wobei die Funktionen derart eingerichtet sind, daß in einer Funktion zum Verarbeiten eines hochfrequenten Bandes der vorbestimmte Wert kleiner eingestellt wird als jene der anderen Funktionen.

29. Vorrichtung nach Anspruch 27 oder 28, bei der die Funktionen, die zur Bildung der umgewandelten Bildsignale verwendet werden, derart eingerichtet werden, daß in einer Funktion zum Verarbeiten eines niederfrequenten Bandes der Absolutwert des umgewandelten Bildsignals, der erhalten wird, wenn letzteres einen Signalwert hat, dessen Absolutwert in einen vorbestimmten Bereich in der Nähe von 0 fällt, umgewandelt wird, einen Wert kleiner als jene der anderen Funktionen annehmen kann.

30. Vorrichtung nach Anspruch 23, 24 oder 27, bei der die Bildung der bandbegrenzten Bildsignale, die Bildung der umgewandelten Bildsignale, die Bildung des Signals der hochfrequenten Komponenten und die Addition des Signals der hochfrequenten Komponenten auf das Originalbildsignal entsprechend folgender Formel durchgeführt werden:$\text{Sproc = Sorg + β(Sorg) • Fusm(Sorg, Sus1, Sus2, ..., SusN)} \text{Fusm(Sorg, Sus1, Sus2, ..., SusN)} \text{= {f1(Sorg - Sus1) + f2(Sus1 - Sus2) + ...} \text{+ fk(Susk-1 - Susk) + ... + fN(SusN-1 - SusN)}}$ wobei Sproc das Bildsignal ist, in welchem die hochfrequenten Komponenten hervorgehoben wurden, Sorg das Originalbildsignal ist, Susk (k=1 bis N) das Unschärfemasken-Bildsignal bedeutet, fk (k=1 bis N) die Funktion zum Umwandeln des bandbegrenzten Bildsignals ist und β(Sorg) den Hervorhebungskoeffizienten darstellt, der entsprechend dem Originalbildsignal bestimmt wird.

31. Vorrichtung nach Anspruch 23 oder 24 oder 27, bei der die Bildung der bandbegrenzten Bildsignale, die Bildung der umgewandelten Bildsignale, die Bildung des Signals der hochfrequenten Komponenten und die Addition des Signals der hochfrequenten Komponenten auf das Originalbildsignal entsprechend folgender Formel durchgeführt werden:$\text{Sproc = Sorg + β(Sorg) • Fusm(Sorg, Sus1, Sus2, ..., SusN)} \text{Fusm(Sorg, Sus1, Sus2, ..., SusN)} \text{= (1/N)•{f1(Sorg - Sus1) + f2(Sorg - Sus2) + ...} \text{+ fk(Sorg - Susk) + ... + fN(Sorg - SusN)}}$ wobei Sproc das Bildsignal ist, in welchem die hochfrequenten Komponenten hervorgehoben wurden, Sorg das Originalbildsignal ist, Susk (k=1 bis N) das Unschärfemasken-Bildsignal bedeutet, fk (k=1 bis N) die Funktion zum Umwandeln des bandbegrenzten Bildsignals ist und β(Sorg) den Hervorhebungskoeffizienten darstellt, der entsprechend dem Originalbildsignal bestimmt wird.

32. Vorrichtung nach Anspruch 23 oder 24, bei der die Bildung der bandbegrenzten Bildsignale, die Bildung der umgewandelten Bildsignale, die Bildung des Signals der hochfrequenten Komponenten und die Addition des Signals der hochfrequenten Komponenten auf das Originalbildsignal entsprechend folgender Formel durchgeführt werden:$\text{Sproc = Sorg + β(Sorg) • Fusm(Sus1, Sus2, ..., SusN)} \text{Fusm(Sus1, Sus2, ..., SusN)} \text{= {f2(Sus1 - Sus2) + f3(Sus2 - Sus3) + ...} \text{+ fk(Susk-1 - Susk) + ... + fN(SusN-1 - SusN)}}$ wobei Sproc das Bildsignal ist, in welchem die hochfrequenten Komponenten hervorgehoben wurden, Sorg das Originalbildsignal ist, Susk (k=1 bis N) das Unschärfemasken-Bildsignal bedeutet, fk (k=1 bis N) die Funktion zum Umwandeln des bandbegrenzten Bildsignals ist und β(Sorg) den Hervorhebungskoeffizienten darstellt, der entsprechend dem Originalbildsignal bestimmt wird.

33. Vorrichtung nach Anspruch 23 oder 24, bei der die Bildung der bandbegrenzten Bildsignale, die Bildung der umgewandelten Bildsignale, die Bildung des Signals der hochfrequenten Komponenten und die Addition des Signals der hochfrequenten Komponenten auf das Originalbildsignal entsprechend folgender Formel durchgeführt werden:$\text{Sproc = Sorg + β(Sorg) • Fusm(Sus1, Sus2, ..., SusN)} \text{Fusm(Sus1, Sus2, ..., SusN)} \text{= (1/N) • {f2(Sus1 - Sus2) + f3(Sus1 - Sus3) + ...} \text{+ fk(Sus1 - Susk) + ... + fN(Sus1 - SusN)}}$ wobei Sproc das Bildsignal ist, in welchem die hochfrequenten Komponenten hervorgehoben wurden, Sorg das Originalbildsignal ist, Susk (k=1 bis N) das Unschärfemasken-Bildsignal bedeutet, fk (k=1 bis N) die Funktion zum Umwandeln des bandbegrenzten:Bildsignals ist und β(Sorg) den Hervorhebungskoeffizienten darstellt, der entsprechend dem Originalbildsignal bestimmt wird.

34. Vorrichtung nach einem der Ansprüche 23, 24, 27 und 30 bis 33, bei der die Umwandlungseinrichtung die mehreren umgewandelten Bildsignale dadurch bildet, daß sie einen Umwandlungsprozeß bezüglich eines bandbegrenzten Bildsignals entsprechend dem Wert eines Hervorhebungskoeffizienten durchführt, der für die Hervorhebung verwendet wird.

35. Vorrichtung nach Anspruch 34, bei der der Umwandlungsprozeß für verschiedene Frequenzbänder variiert und derart durchgeführt wird, daß für ein bandbegrenztes Signal eines niederfrequenten Bandes das bandbegrenzte Bildsignal stark beschränkt werden kann, und derart, daß, wenn der Wert des Hervorhebungskoeffizienten groß wird, die Differenz zwischen dem Maß der Beschränkung des bandbegrenzten Signals eines hochfrequenten Bandes und dem Maß der Begrenzung eines bandbegrenzten Signals eines niederfrequenten Bandes groß werden kann.

36. Vorrichtung nach Anspruch 23, bei der die Umwandlungseinrichtung aufweist:
eine Beschränktes-Bildsignal-Bildungseinrichtung zum Umwandeln des bandbegrenzten Bildsignals in der Weise, daß der Absolutwert des Signalwerts des bandbegrenzten Bildsignals in einen Wert umgewandelt werden kann, der nicht größer ist als der Absolutwert und sich entsprechend dem Absolutwert bestimmt, um dadurch ein beschränktes Bildsignal zu erhalten,
eine Hilfsbildsignal-Bildungseinrichtung zum Bilden eines Hilfsbildsignals, welches ein Signal eines Frequenzbandes unterhalb des Frequenzbands des bandbegrenzten Bildsignals enthält, welches zur Bildung des beschränkten Bildsignals verwendet wurde, wobei das Hilfsbildsignal aus dem Originalbildsignal und den mehreren Unschärfemasken-Bildsignalen gebildet wird,
eine Vergrößerungsverhältnissignal-Bildungseinrichtung zum Umwandeln des Hilfsbildsignals in der Weise, daß, wenn der Absolutwert des Signalwerts des Hilfsbildsignals klein wird, der Absolutwert in einen Wert in der Nähe von 1 umgewandelt werden kann, und derart, daß, wenn der Absolutwert des Signalwerts des Hilfsbildsignals groß wird, der Absolutwert in einen Wert in der Nähe von 0 umgewandelt werden kann, um dadurch ein Vergrößerungsverhältnissignal entsprechend dem beschränkten Bildsignal zu erhalten, und
eine Multipliziereinrichtung zum Multiplizieren des beschränkten Bildsignals durch das Vergrößerungsverhältnissignal, welches dem beschränkten Bildsignal entspricht.

37. Vorrichtung nach Anspruch 23, bei der die Bildung der bandbegrenzten Bildsignale, die Bildung der umgewandelten Bildsignale, die Bildung des Signals der hochfrequenten Komponenten und die Addition des Signals der hochfrequenten Komponenten auf das Originalbildsignal entsprechend folgender Formel durchgeführt werden:$\text{Sproc = Sorg + β(Sorg) • Fusm(Sorg, Sus1, Sus2, ..., SusN)} \text{Fusm(Sorg, Sus1, Sus2, ..., SusN)} \text{= {f1(Sorg - Sus1) • g(Sus1 - Sus2)} \text{+ f2(Sus1 - Sus2) • g(Sus2 - Sus3)+ ...} \text{+ fk(Susk-1 - Susk) • g(Susk - Susk+1)+ ...} \text{+ fN(SusN-1 - SusN) • g(SusN - SusN+1)}}$ wobei Sproc das Bildsignal ist, in welchem die hochfrequenten Komponenten hervorgehoben wurden, Sorg das Originalbildsignal ist, Susk (k=1 bis N+1) das Unschärfemasken-Bildsignal bedeutet, fk (k=1 bis N) die Funktion zum Umwandeln des bandbegrenzten Bildsignals darstellt, um das beschränkte Bildsignal zu erhalten, g die Funktion zum Umwandeln des Hilfsbildsignals, um dadurch das Vergrößerungsverhältnissignal zu gewinnen, bedeutet, und β(Sorg) den Hervorhebungskoeffizienten darstellt, der sich entsprechend dem Originalbildsignal bestimmt.

38. Vorrichtung nach Anspruch 23, oder 36, bei der die Bildung der bandbegrenzten Bildsignale, die Bildung der umgewandelten Bildsignale, die Bildung des Signals der hochfrequenten Komponenten und die Addition des Signals der hochfrequenten Komponenten auf das Originalbildsignal entsprechend folgender Formel durchgeführt werden:$\text{Sproc = Sorg + β(Sorg) • Fusm(Sorg, Sus1, Sus2, ..., SusN)} \text{Fusm(Sorg, Sus1, Sus2, ..., SusN)} \text{= {f1(Sorg - Sus1) • g(Sorg - Sus2)} \text{+ f2(Sus1 - Sus2) • g(Sorg - Sus3)+ ...} \text{+ fk(Susk-1 - Susk) • g(Sorg - Susk+1)+ ...} \text{+ fN(SusN-1 - SusN) • g(Sorg - SusN+1)}}$ wobei Sproc das Bildsignal ist, in welchem die hochfrequenten Komponenten hervorgehoben wurden, Sorg das Originalbildsignal ist, Susk (k=1 bis N+1) das Unschärfemasken-Bildsignal bedeutet, fk (k=1 bis N) die Funktion zum Umwandeln des bandbegrenzten Bildsignals darstellt, um das beschränkte Bildsignal zu erhalten, g die Funktion zum Umwandeln des Hilfsbildsignals, um dadurch das Vergrößerungsverhältnissignal zu gewinnen, bedeutet, und β(Sorg) den Hervorhebungskoeffizienten darstellt, der sich entsprechend dem Originalbildsignal bestimmt.

39. Vorrichtung nach Anspruch 23, bei der die Umwandlungseinrichtung aufweist:
eine Hilfsbildsignal-Bildungseinrichtung zum Umwandeln eines auf der niederfrequenten Seite liegenden bandbegrenzten Bildsignals, dessen Frequenzband unterhalb des Frequenzbandes des umzuwandelnden bandbegrenzten Bildsignals liegt, mit einer nicht-linearen Funktion, um dadurch ein Hilfsbildsignal für das umzuwandelnde bandbegrenzte Bildsignal zu erhalten, wobei die nicht-lineare Funktion eine derartige Charakteristik aufweist, daß die Funktion durch einen Ursprung verlaufen kann, daß die Steigung der Funktion im Ursprung etwa den Wert 0 haben kann, und daß die Steigung der Funktion allmählich zunehmen kann, wenn der zu verarbeitende Wert groß wird,
eine Zusammengesetztes-Bandbegrenztes-Bildsignal-Bildungseinrichtung zum Addieren des Hilfsbildsignals auf das umzuwandelnde bandbegrenzte Bildsignal, um dadurch ein zusammengesetztes bandbegrenztes Bildsignal zu erhalten, und
eine Umgewandeltes-Bildsignal-Bildungseinrichtung zum Umwandeln des zusammengesetzten bandbegrenzten Bildsignals in der Weise, daß der Absolutwert des Signalwerts des zusammengesetzten bandbegrenzten Bildsignals in einen Wert umgewandelt werden kann, der nicht größer ist als der Absolutwert und sich entsprechend dem Absolutwert bestimmt, um dadurch ein umgewandeltes Bildsignal zu erhalten.

40. Vorrichtung nach Anspruch 23 oder 39, bei der die Bildung der bandbegrenzten Bildsignale, die Bildung der umgewandelten Bildsignale, die Bildung des Signals der hochfrequenten Komponenten und die Addition des Signals der hochfrequenten Komponenten auf das Originalbildsignal entsprechend folgender Formel durchgeführt werden:$\text{Sproc = Sorg + β(Sorg) • Fusm(Sorg, Sus1, Sus2, ..., SusN)} \text{Fusm(Sorg, Sus1, Sus2, ..., SusN)} \text{= [f1{(Sorg - Sus1) + g(Sus1 - Sus2)} \text{+ f2(Sus1 - Sus2) + g(Sus2 - Sus3)}+ ...} \text{+ fk{(Susk-1 - Susk) + g(Susk - Susk+1)}+ ...} \text{+ fN{(SusN-1 - SusN) + g(SusN - SusN+1)}]}$ wobei Sproc das Bildsignal ist, in welchem die hochfrequenten Komponenten hervorgehoben wurden, Sorg das Originalbildsignal ist, Susk (k=1 bis N+1) das Unschärfemasken-Bildsignal bedeutet, fk (k=1 bis N) die Funktion zum Umwandeln des bandbegrenzten Bildsignals darstellt, um das beschränkte Bildsignal zu erhalten, g die Funktion zum Umwandeln des bandbegrenzten Signals und zum Gewinnen des Hilfsbildsignals ist und β(Sorg) den Hervorhebungskoeffizienten repräsentiert, der entsprechend dem Originalbildsignal bestimmt wird.

41. Vorrichtung nach einem der Ansprüche 23, 24 oder 27, bei dem die Umwandlungseinrichtung die mehreren umgewandelten Bildsignale dadurch bildet, daß sie ein bandbegrenztes Bildsignal entsprechend dem Bereich eines Objekts umwandelt, dessen Bild als Originalbild aufgezeichnet wurde.

42. Vorrichtung nach Anspruch 30 oder 31, bei der die Umwandlungseinrichtung die mehreren umgewandelten Bildsignale dadurch bildet, daß sie ein bandbegrenztes Bildsignal entsprechend dem Bereich eines Objekts umwandelt, dessen Bild als Originalbild aufgezeichnet wurde.

43. Vorrichtung nach Anspruch 32, bei der die Umwandlungseinrichtung die mehreren umgewandelten Bildsignale dadurch bildet, daß sie ein bandbegrenztes Bildsignal entsprechend dem Bereich eines Objekts umwandelt, dessen Bild als Originalbild aufgezeichnet wurde.

44. Vorrichtung nach Anspruch 33, bei der die Umwandlungseinrichtung die mehreren umgewandelten Bildsignale dadurch bildet, daß sie ein bandbegrenztes Bildsignal entsprechend dem Bereich eines Objekts umwandelt, dessen Bild als Originalbild aufgezeichnet wurde.

45. Vorrichtung nach einem der Ansprüche 36 bis 40, bei der die Umwandlungseinrichtung die mehreren umgewandelten Bildsignale dadurch bildet, daß sie ein bandbegrenztes Bildsignal entsprechend dem Bereich eines Objekts umwandelt, dessen Bild als Originalbild aufgezeichnet wurde.

46. Bildverarbeitungsvorrichtung nach einem der Ansprüche 23, 24, 27, 30 bis 33 und 36 bis 41, bei der das Originalbild erhalten wurde durch eine Tomographiebild-Aufzeichnung und ein Strömungsmuster enthält, wobei die Unschärfemasken-Bildsignal-Bildungseinrichtung die mehreren Unschärfemasken-Bildsignale dadurch bildet, daß sie eine Unschärfemaskenverarbeitung bezüglich des Originalbildsignals unter Verwendung einer eindimensionalen Unschärfemaske durchführt, die sich in der Richtung des Strömungsmusters erstreckt.

## Revendications

1. Un procédé de traitement d'image, dans lequel un signal concernant des composantes de fréquence élevée d'une image originale est ajouté à un signal d'image original, qui représente l'image originale, et les composantes de fréquence élevée de l'image originale sont ainsi accentuées, le procédé comprenant les étapes suivantes :
i) on forme à partir du signal d'image original une multiplicité de signaux d'images de masque non net, qui ont différentes caractéristiques de réponse en fréquence,
ii) on forme une multiplicité de signaux d'image à bande limitée, chacun d'eux représentant l'un de signaux tombant à l'intérieur d'une multiplicité de bandes de fréquence différentes du signal d'image original, à partir du signal d'image original et de la multiplicité de signaux d'image de masque non net, ou à partir de la multiplicité de signaux d'image de masque non net,
iii) on accomplit un processus de conversion sur au moins un seul signal d'image à bande limitée, qui fait partie de la multiplicité des signaux d'image à bande limitée, de façon qu'au moins une partie du signal d'image à bande limitée puisse devenir petite, une multiplicité de signaux d'image convertis étant ainsi formés, et
iv) on intègre la multiplicité des signaux d'image convertis, grâce à quoi on obtient le signal concernant les composantes de fréquence élevée de l'image originale, qui doit être ajouté au signal d'image original.

2. Un procédé de traitement d'image défini dans la revendication 1, dans lequel la formation de la multiplicité des signaux d'image convertis est accomplie en convertissant un signal d'image à bande limitée ayant une valeur de signal, dont la valeur absolue est plus grande qu'une valeur de seuil prédéterminée, de façon que la valeur absolue de la valeur de signal du signal d'image à bande limitée, cette valeur absolue étant plus grande que la valeur de seuil prédéterminée, puisse être convertie en une petite valeur.

3. Un procédé de traitement d'image défini dans la revendication 2, dans lequel la formation de la multiplicité des signaux d'image convertis est accomplie en convertissant un signal d'image à bande limitée de façon que lorsque la valeur absolue de la valeur de signal du signal d'image à bande limitée devient plus grande que la valeur de seuil prédéterminée, la valeur absolue de la valeur de signal du signal d'image à bande limitée puisse être convertie en une petite valeur, et de façon que lorsque la valeur absolue de la valeur de signal du signal d'image à bande limitée devient plus petite qu'une valeur de seuil différente, qui est plus petite que la valeur de seuil prédéterminée, la valeur absolue de la valeur de signal du signal d'image à bande limitée puisse être convertie en une petite valeur.

4. Un procédé de traitement d'image défini dans la revendication 2, dans lequel la formation de la multiplicité des signaux d'image convertis est accomplie en convertissant un signal d'image à bande limitée de façon que le niveau de la valeur absolue de la valeur de signal du signal d'image à bande limitée puisse être changé conformément à la bande de fréquence du signal d'image à bande limitée.

5. Un procédé de traitement d'image défini dans la revendication 3, dans lequel la formation de la multiplicité des signaux d'image convertis est accomplie en convertissant un signal d'image à bande limitée de façon que le niveau de la valeur absolue de la valeur de signal du signal d'image à bande limitée puisse être changé conformément à la bande de fréquence du signal d'image à bande limitée.

6. Un procédé de traitement d'image défini dans la revendication 1, dans lequel la formation de la multiplicité des signaux d'image convertis est accomplie en convertissant un signal d'image à bande limitée conformément à l'une d'une multiplicité de fonctions, qui varient pour différentes bandes de fréquence, de façon que la valeur absolue de la valeur de signal du signal d'image à bande limitée puisse être convertie en une valeur qui n'est pas plus grande que ladite valeur absolue et est déterminée conformément à ladite valeur absolue.

7. Un procédé de traitement d'image défini dans la revendication 6, dans lequel chacune des fonctions qui sont utilisées pour la formation des signaux d'image convertis convertit un signal d'image à bande limitée ayant une valeur de signal dont la valeur absolue est plus grande qu'une valeur prédéterminée, de façon que la valeur du signal d'image converti puisse devenir approximativement égale à un niveau prédéterminé, et dans lequel les fonctions sont fixées de façon que, dans une fonction pour traiter une bande de fréquence élevée, la valeur prédéterminée soit fixée de façon à être plus petite que celles dans les autres fonctions.

8. Un procédé de traitement d'image défini dans la revendication 6 ou 7, dans lequel les fonctions qui sont utilisées pour la formation des signaux d'image convertis, sont fixées de façon que, dans une fonction pour traiter une bande de fréquence basse, la valeur absolue du signal d'image converti, qui est obtenu lorsque le signal d'image à bande limitée ayant une valeur de signal dont la valeur absolue tombe à l'intérieur d'une plage prédéterminée proche de 0, est converti, puisse prendre une valeur plus petite que celles dans les autres fonctions.

9. Un procédé de traitement d'image défini dans la revendication 1 ou 2 ou 6, dans lequel la formation des signaux d'image à bande limitée, la formation des signaux d'image convertis, la formation du signal concernant les composantes de fréquence élevée, et l'ajout du signal concernant les composantes de fréquence élevée au signal d'image original, sont accomplis avec la formule :$\text{Sproc = Sorg + β(Sorg).Fusm(Sorg,Sus1,Sus2,...,SusN)} \text{Fusm(Sorg,Sus1,Sus2, ...,SusN)} \text{= {f1(Sorg - Sus1) + f2(Sus1 - Sus2) + ...} \text{+ fk(Susk-1 - Susk) + ... + fN(SusN-1 - SusN)}}$ dans laquelle Sproc représente le signal d'image dans lequel les composantes de fréquence élevée ont été accentuées, Sorg représente le signal d'image original, Susk (k = 1 à N) représente le signal d'image de masque non net, fk (k = 1 à N) représente la fonction pour convertir le signal d'image à bande limitée, et β(Sorg) représente le coefficient d'accentuation déterminé conformément au signal d'image original.

10. Un procédé de traitement d'image défini dans la revendication 1 ou 2 ou 6, dans lequel la formation des signaux d'image à bande limitée, la formation des signaux d'image convertis, la formation du signal concernant les composantes de fréquence élevée, et l'ajout du signal concernant les composantes de fréquence élevée au signal d'image original, sont accomplis avec la formule :$\text{Sproc = Sorg + β (Sorg).Fusm(Sorg,Sus1,Sus2,...,SusN)} \text{Fusm(Sorg,Sus1,Sus2, ...,SusN)} \text{= (1/N).{f1(Sorg - Sus1) + f2(Sorg - Sus2) + ...} \text{+ fk(Sorg - Susk) + ... + fN(Sorg - SusN)}}$ dans laquelle Sproc représente le signal d'image dans lequel les composantes de fréquence élevée ont été accentuées, Sorg représente le signal d'image original, Susk (k = 1 à N) représente le signal d'image de masque non net, fk (k = 1 à N) représente la fonction pour convertir le signal d'image à bande limitée, et β(Sorg) représente le coefficient d'accentuation déterminé conformément au signal d'image original.

11. Un procédé de traitement d'image défini dans la revendication 1 ou 2, dans lequel la formation des signaux d'image à bande limitée, la formation des signaux d'image convertis, la formation du signal concernant les composantes de fréquence élevée, et l'ajout du signal concernant les composantes de fréquence élevée au signal d'image original, sont accomplis avec la formule :$\text{Sproc = Sorg + β(Sorg).Fusm(Sorg,Sus1,Sus2,...,SusN)} \text{Fusm(Sus1,Sus2, ...,SusN)} \text{= {f2(Sus1 - Sus2) + f3(Sus2 - Sus3) + ...} \text{+ fk(Susk-1 - Susk) + ... + fN(SusN-1 - SusN)}}$ dans laquelle Sproc représente le signal d'image dans lequel les composantes de fréquence élevée ont été accentuées, Sorg représente le signal d'image original, Susk (k = 1 à N) représente le signal d'image de masque non net, fk (k = 2 à N) représente la fonction pour convertir le signal d'image à bande limitée, et β(Sorg) représente le coefficient d'accentuation déterminé conformément au signal d'image original.

12. Un procédé de traitement d'image défini dans la revendication 1 ou 2, dans lequel la formation des signaux d'image à bande limitée, la formation des signaux d'image convertis, la formation du signal concernant les composantes de fréquence élevée, et l'ajout du signal concernant les composantes de fréquence élevée au signal d'image original, sont accomplis avec la formule :$\text{Sproc = Sorg + β(Sorg).Fusm(Sorg,Sus1,Sus2,...,SusN)} \text{Fusm(Sus1,Sus2, ...,SusN)} \text{= (1/N).{f2(Sus1 - Sus2) + f3(Sus1 - Sus3) + ...} \text{+ fk(Sus1 - Susk) + ... + fN(Sus1 - SusN)}}$ dans laquelle Sproc représente le signal d'image dans lequel les composantes de fréquence élevée ont été accentuées, Sorg représente le signal d'image original, Susk (k = 1 à N) représente le signal d'image de masque non net, fk (k = 2 à N) représente la fonction pour convertir le signal d'image à bande limitée, et β(Sorg) représente le coefficient d'accentuation déterminé conformément au signal d'image original.

13. Un procédé de traitement d'image défini dans l'une quelconque des revendications 1,2, 6 et 9 à 12, dans lequel la formation de la multiplicité des signaux d'image convertis est accomplie en effectuant un processus de conversion sur un signal d'image à bande limitée conformément à la valeur d'un coefficient d'accentuation, qui est utilisé pour l'accentuation.

14. Un procédé de traitement d'image défini dans la revendication 13, dans lequel le processus de conversion varie pour différentes bandes de fréquence et est accompli de façon que, pour un signal d'image à bande limitée d'une bande de fréquence basse, le signal d'image à bande limitée puisse être fortement restreint, et de façon que lorsque la valeur du coefficient d'accentuation devient grande, la différence entre le degré de restriction d'un signal d'image à bande limitée d'une bande de fréquence élevée et le degré de restriction d'un signal d'image à bande limitée d'une bande de fréquence basse puisse devenir grande.

15. Un procédé de traitement d'image défini dans la revendication 1, dans lequel la formation de la multiplicité des signaux d'image convertis est accomplie en :
convertissant un signal d'image à bande limitée de façon que la valeur absolue de la valeur de signal du signal d'image à bande limitée puisse être convertie en une valeur qui n'est pas plus grande que ladite valeur absolue et est déterminée conformément à ladite valeur absolue, un signal d'image restreint étant ainsi obtenu,
formant un signal d'image auxiliaire, qui contient un signal d'une bande de fréquence inférieure à la bande de fréquence du signal d'image à bande limitée ayant été utilisé pour la formation du signal d'image restreint, ce signal d'image auxiliaire étant formé à partir du signal d'image original et de la multiplicité des signaux d'image de masque non net,
convertissant le signal d'image auxiliaire de façon que, lorsque la valeur absolue de la valeur de signal du signal d'image auxiliaire devient petite, ladite valeur absolue puisse être convertie en une valeur proche de 1, et de façon que lorsque la valeur absolue de la valeur de signal du signal d'image auxiliaire devient grande, ladite valeur absolue puisse être convertie en une valeur proche de 0, un signal de rapport d'agrandissement correspondant au signal d'image restreint étant ainsi obtenu, et
multipliant le signal d'image restreint par le signal de rapport d'agrandissement qui correspond au signal d'image restreint.

16. Un procédé de traitement d'image défini dans la revendication 1 ou 15, dans lequel la formation des signaux d'image à bande limitée, la formation des signaux d'image convertis, la formation du signal concernant les composantes de fréquence élevée, et l'ajout du signal concernant les composantes de fréquence élevée au signal d'image original, sont accomplis par la formule :$\text{Sproc = Sorg + P(Sorg).Fusm(Sorg,Sus1,Sus2,...,SusN)} \text{Fusm(Sorg,Sus1,Sus2, ...,SusN)} \text{= {f1(Sorg - Sus1) . g(Sus1 - Sus2)} \text{+ f2(Sus1 - Sus2) . g(Sus2 - Sus3) + ...} \text{+ fk(Susk-1 - Susk) . g(Susk - Susk+1) + ...} \text{+ fN(SusN-1 - SusN) . g(SusN - SusN+1)}}$ dans laquelle Sproc représente le signal d'image dans lequel les composantes de fréquence élevée ont été accentuées, Sorg représente le signal d'image original, Susk (k = 1 à N+1) représente le signal d'image de masque non net, fk (k = 1 à N) représente la fonction pour convertir le signal d'image à bande limitée, et obtenir ainsi le signal d'image restreint, g représente la fonction pour convertir le signal d'image auxiliaire et obtenir ainsi le signal de rapport d'agrandissement, et β(Sorg) représente le coefficient d'accentuation déterminé conformément au signal d'image original.

17. Un procédé de traitement d'image défini dans la revendication 1 ou 15, dans lequel la formation des signaux d'image à bande limitée, la formation des signaux d'image convertis, la formation du signal concernant les composantes de fréquence élevée, et l'ajout du signal concernant les composantes de fréquence élevée au signal d'image original, sont accomplis par la formule :$\text{Sproc = Sorg + β(Sorg).Fusm(Sorg,Sus1,Sus2,...,SusN)} \text{Fusm(Sorg,Sus1,Sus2, ...,SusN)} \text{= {f1 (Sorg - Sus1) . g(Sorg - Sus2)} \text{+ f2(Sus1 - Sus2) . g(Sorg - Sus3) + ...} \text{+ fk(Susk-1 - Susk) . g(Sorg - Susk+1) + ...} \text{+ fN(SusN-1 - SusN) . g(Sorg - SusN+1)}}$ dans laquelle Sproc représente le signal d'image dans lequel les composantes de fréquence élevée ont été accentuées, Sorg représente le signal d'image original, Susk (k = 1 à N+1) représente le signal d'image de masque non net, fk (k = 1 à N) représente la fonction pour convertir le signal d'image à bande limitée, et obtenir ainsi le signal d'image restreint, g représente la fonction pour convertir le signal d'image auxiliaire et obtenir ainsi le signal de rapport d'agrandissement, et β(Sorg) représente le coefficient d'accentuation déterminé conformément au signal d'image original.

18. Un procédé de traitement d'image défini dans la revendication 1, dans lequel la formation de la multiplicité des signaux d'image convertis est accomplie en :
convertissant avec une fonction non linéaire un signal d'image à bande limitée du côté des fréquences basses, qui a une bande de fréquence inférieure à la bande de fréquence d'un signal d'image à bande limitée à convertir, un signal d'image auxiliaire pour le signal d'image à bande limitée à convertir étant ainsi obtenu, cette fonction non linéaire ayant les caractéristiques selon lesquelles la fonction peut passer par une origine, la pente de la fonction à l'origine peut être approximativement égale à 0, et la pente de la fonction peut augmenter progressivement au fur et à mesure que la valeur à traiter devient grande,
ajoutant le signal d'image auxiliaire au signal d'image à bande limitée à convertir, un signal d'image à bande limitée composite étant ainsi obtenu, et
convertissant le signal d'image à bande limitée composite de façon que la valeur absolue de la valeur de signal du signal d'image à bande limitée composite puisse être convertie en une valeur qui n'est pas plus grande que ladite valeur absolue et est déterminée conformément à ladite valeur absolue.

19. Un procédé de traitement d'image défini dans la revendication 1 ou 18, dans lequel la formation des signaux d'image à bande limitée, la formation des signaux d'image convertis, la formation du signal concernant les composantes de fréquence élevée, et l'ajout du signal concernant les composantes de fréquence élevée au signal d'image original, sont accomplis par la formule :$\text{Sproc = Sorg + β(Sorg).Fusm(Sorg,Sus1,Sus2,...,SusN)} \text{Fusm(Sorg,Sus1,Sus2, ...,SusN)} \text{= [f1{(Sorg - Sus1) + g(Sus1 - Sus2)}} \text{+ f2{(Sus1 - Sus2) + g(Sus2 - Sus3)} + ...} \text{+ fk{(Susk-1 - Susk) +g (Susk - Susk+1)} + ...} \text{+ fN{(SusN-1 - SusN) + g(SusN - SusN+1)}]}$ dans laquelle Sproc représente le signal d'image dans lequel les composantes de fréquence élevée ont été accentuées, Sorg représente le signal d'image original, Susk (k = 1 à N+1) représente le signal d'image de masque non net, fk (k = 1 à N) représente la fonction pour convertir le signal d'image à bande limitée composite, g représente la fonction pour convertir le signal d'image à bande limitée et obtenir ainsi le signal d'image auxiliaire, et β(Sorg) représente le coefficient d'accentuation déterminé conformément au signal d'image original.

20. Un procédé de traitement d'image défini dans l'une quelconque des revendications 1, 2, 6, 9 à 12 et 15, dans lequel la formation de la multiplicité des signaux d'image convertis est accomplie en convertissant un signal d'image à bande limitée conformément à la partie d'un objet dont l'image a été enregistrée comme l'image originale.

21. Un procédé de traitement d'image défini dans l'une quelconque des revendications 16-19, dans lequel la formation de la multiplicité des signaux d'image convertis est accomplie en convertissant un signal d'image à bande limitée conformément à la partie d'un objet dont l'image a été enregistrée comme l'image originale.

22. Un procédé de traitement d'image défini dans l'une quelconque des revendications 1, 2, 6, 9 à 12 et 15 à 20, dans lequel l'image originale a été obtenue par une opération d'enregistrement d'image tomographique et contient une configuration de circulation, et la formation de la multiplicité des signaux d'image de masque non net est accomplie en effectuant un traitement de masque non net sur le signal d'image original en utilisant un masque non net unidimensionnel s'étendant dans la direction de la configuration de circulation.

23. Un appareil de traitement d'image, dans lequel un signal concernant des composantes de fréquence élevée d'une image originale est ajouté à un signal d'image original, qui représente l'image originale, et les composantes de fréquence élevée de l'image originale sont ainsi accentuées, l'appareil comprenant :
i) un moyen de formation de signal d'image de masque non net pour former à partir du signal d'image original une multiplicité de signaux d'images de masque non net qui ont différentes caractéristiques de réponse en fréquence,
ii) un moyen de formation de signal d'image à bande limitée pour former une multiplicité de signaux d'image à bande limitée, chacun d'eux représentant l'un de signaux tombant à l'intérieur d'une multiplicité de bandes de fréquence différentes du signal d'image original, à partir du signal d'image original et de la multiplicité des signaux d'image de masque non net, ou à partir de la multiplicité des signaux d'image de masque non net,
iii) un moyen de conversion pour accomplir un processus de conversion sur au moins un seul signal d'image à bande limitée, qui fait partie de la multiplicité des signaux d'image à bande limitée, de façon qu'au moins une partie du signal d'image à bande limitée puisse devenir petite, et pour former ainsi une multiplicité de signaux d'image convertis, et
iv) un moyen de traitement d'accentuation de fréquence pour intégrer la multiplicité des signaux d'image convertis, et obtenir ainsi un signal concernant les composantes de fréquence élevée de l'image originale, ce signal devant être ajouté au signal d'image original.

24. Un appareil de traitement d'image défini dans la revendication 23, dans lequel le moyen de conversion forme la multiplicité des signaux d'image convertis en convertissant un signal d'image à bande limitée ayant une valeur de signal dont la valeur absolue est plus grande qu'une valeur de seuil prédéterminée, de façon que la valeur absolue de la valeur de signal du signal d'image à bande limitée, cette valeur absolue étant plus grande que la valeur de seuil prédéterminée, puisse être convertie en une petite valeur.

25. Un appareil de traitement d'image défini dans la revendication 24, dans lequel le moyen de conversion forme la multiplicité des signaux d'image convertis en convertissant un signal d'image à bande limitée de façon que lorsque la valeur absolue de la valeur de signal du signal d'image à bande limitée devient plus grande que la valeur de seuil prédéterminée, la valeur absolue de la valeur de signal du signal d'image à bande limitée puisse être convertie en une petite valeur, et de façon que lorsque la valeur absolue de la valeur de signal du signal d'image à bande limitée devient plus petite qu'une valeur de seuil différente, qui est plus petite que la valeur de seuil prédéterminée, la valeur absolue de la valeur de signal du signal d'image à bande limitée puisse être convertie en une petite valeur.

26. Un appareil de traitement d'image défini dans la revendication 24 ou 25, dans lequel le moyen de conversion forme la multiplicité des signaux d'image convertis en convertissant un signal d'image à bande limitée de façon que le niveau de la valeur absolue de la valeur de signal du signal d'image à bande limitée puisse être changé conformément à la bande de fréquence du signal d'image à bande limitée.

27. Un appareil de traitement d'image défini dans la revendication 23, dans lequel le moyen de conversion forme la multiplicité des signaux d'image convertis en convertissant un signal d'image à bande limitée conformément à l'une d'une multiplicité de fonctions, qui varient pour différentes bandes de fréquence, de façon que la valeur absolue de la valeur de signal du signal d'image à bande limitée puisse être convertie en une valeur qui n'est pas plus grande que ladite valeur absolue et est déterminée conformément à ladite valeur absolue.

28. Un appareil de traitement d'image défini dans la revendication 27 , dans lequel chacune des fonctions qui sont utilisées pour la formation des signaux d'image convertis convertit un signal d'image à bande limitée, ayant une valeur de signal dont la valeur absolue est plus grande qu'une valeur prédéterminée, de façon que la valeur du signal d'image converti puisse devenir approximativement égale à un niveau prédéterminé, et dans lequel les fonctions sont fixées de façon que, dans une fonction pour traiter une bande de fréquence élevée, la valeur prédéterminée soit fixée de façon à être plus petite que celles dans les autres fonctions.

29. Un appareil de traitement d'image défini dans la revendication 27 ou 28, dans lequel les fonctions qui sont utilisées pour la formation des signaux d'image convertis sont fixées de façon que, dans une fonction pour traiter une bande de fréquence basse, la valeur absolue du signal d'image converti, qui est obtenu lorsque le signal d'image à bande limitée ayant une valeur de signal dont la valeur absolue tombe à l'intérieur d'une plage prédéterminée proche de 0, est converti, puisse prendre une valeur plus petite que celles dans les autres fonctions.

30. Un appareil de traitement d'image défini dans la revendication 23, 24 ou 27, dans lequel la formation des signaux d'image à bande limitée, la formation des signaux d'image convertis, la formation du signal concernant les composantes de fréquence élevée, et l'ajout du signal concernant les composantes de fréquence élevée au signal d'image original, sont accomplis avec la formule :$\text{Sproc = Sorg + β(Sorg).Fusm(Sorg,Sus1,Sus2,...,SusN)} \text{Fusm(Sorg,Sus1,Sus2, ...,SusN)} \text{= {f1(Sorg - Sus1) + f2(Sus1 - Sus2) + ...} \text{+ fk(Susk-1 - Susk) + ... + fN(SusN-1 - SusN)}}$ dans laquelle Sproc représente le signal d'image dans lequel les composantes de fréquence élevée ont été accentuées, Sorg représente le signal d'image original, Susk (k = 1 à N) représente le signal d'image de masque non net, fk (k = 1 à N) représente la fonction pour convertir le signal d'image à bande limitée, et β(Sorg) représente le coefficient d'accentuation déterminé conformément au signal d'image original.

31. Un appareil de traitement d'image défini dans la revendication 23 ou 24 ou 27, dans lequel la formation des signaux d'image à bande limitée, la formation des signaux d'image convertis, la formation du signal concernant les composantes de fréquence élevée, et l'ajout du signal concernant les composantes de fréquence élevée au signal d'image original, sont accomplis avec la formule :$\text{Sproc = Sorg + β (Sorg).Fusm(Sorg,Sus1,Sus2,...,SusN)} \text{Fusm(Sorg,Sus1,Sus2, ...,SusN)} \text{= (1/N).{f1(Sorg - Sus1) + f2(Sorg - Sus2) + ...} \text{+ fk(Sorg - Susk) + ... + fN(Sorg - SusN)}}$ dans laquelle Sproc représente le signal d'image dans lequel les composantes de fréquence élevée ont été accentuées, Sorg représente le signal d'image original, Susk (k = 1 à N) représente le signal d'image de masque non net, fk (k = 1 à N) représente la fonction pour convertir le signal d'image à bande limitée, et β(Sorg) représente le coefficient d'accentuation déterminé conformément au signal d'image original.

32. Un appareil de traitement d'image défini dans la revendication 23 ou 24, dans lequel la formation des signaux d'image à bande limitée, la formation des signaux d'image convertis, la formation du signal concernant les composantes de fréquence élevée, et l'ajout du signal concernant les composantes de fréquence élevée au signal d'image original, sont accomplis avec la formule :$\text{Sproc = Sorg + β(Sorg).Fusm(Sorg,Sus1,Sus2,...,SusN)} \text{Fusm(Sus1,Sus2, ...,SusN)} \text{= {f2(Sus1 - Sus2) + f3(Sus2 - Sus3) + ...} \text{+ fk(Susk-1 - Susk) + ... + fN(SusN-1 - SusN)}}$ dans laquelle Sproc représente le signal d'image dans lequel les composantes de fréquence élevée ont été accentuées, Sorg représente le signal d'image original, Susk (k = 1 à N) représente le signal d'image de masque non net, fk (k = 2 à N) représente la fonction pour convertir le signal d'image à bande limitée, et β(Sorg) représente le coefficient d'accentuation déterminé conformément au signal d'image original.

33. Un appareil de traitement d'image défini dans la revendication 23 ou 24, dans lequel la formation des signaux d'image à bande limitée, la formation des signaux d'image convertis, la formation du signal concernant les composantes de fréquence élevée, et l'ajout du signal concernant les composantes de fréquence élevée au signal d'image original, sont accomplis avec la formule :$\text{Sproc = Sorg + β(Sorg).Fusm(Sorg,Sus1,Sus2,...,SusN)} \text{Fusm(Sus1,Sus2, ...,SusN)} \text{= (1/N).{f2(Sus1 - Sus2) + f3(Sus1 - Sus3) + ...} \text{+ fk(Sus1 - Susk) + ... + fN(Sus1 - SusN)}}$ dans laquelle Sproc représente le signal d'image dans lequel les composantes de fréquence élevée ont été accentuées, Sorg représente le signal d'image original, Susk (k = 1 à N) représente le signal d'image de masque non net, fk (k = 2 à N) représente la fonction pour convertir le signal d'image à bande limitée, et β(Sorg) représente le coefficient d'accentuation déterminé conformément au signal d'image original.

34. Un appareil de traitement d'image défini dans l'une quelconque des revendications 23, 24, 27 et 30 à 33, dans lequel le moyen de conversion forme la multiplicité des signaux d'image convertis en effectuant un processus de conversion sur un signal d'image à bande limitée conformément à la valeur d'un coefficient d'accentuation qui est utilisé pour l'accentuation.

35. Un appareil de traitement d'image défini dans la revendication 34, dans lequel le processus de conversion varie pour différentes bandes de fréquence et est accompli de façon que pour un signal d'image à bande limitée d'une bande de fréquence basse, le signal d'image à bande limitée puisse être fortement restreint, et de façon que, lorsque la valeur du coefficient d'accentuation devient grande, la différence entre le degré de restriction d'un signal d'image à bande limitée d'une bande de fréquence élevée et le degré de restriction d'un signal d'image à bande limitée d'une bande de fréquence basse puisse devenir grande.

36. Un appareil de traitement d'image défini dans la revendication 23, dans lequel le moyen de conversion comprend :
un moyen de formation de signal d'image restreint pour convertir un signal d'image à bande limitée de façon que la valeur absolue de la valeur de signal du signal d'image à bande limitée puisse être convertie en une valeur qui n'est pas plus grande que ladite valeur absolue et est déterminée conformément à ladite valeur absolue, et pour obtenir ainsi un signal d'image restreint,
un moyen de formation de signal d'image auxiliaire pour former un signal d'image auxiliaire qui contient un signal d'une bande de fréquence inférieure à la bande de fréquence du signal d'image à bande limitée ayant été utilisé pour la formation du signal d'image restreint, ce signal d'image auxiliaire étant formé à partir du signal d'image original et de la multiplicité des signaux d'image de masque non net,
un moyen de formation de signal de rapport d'agrandissement, pour convertir le signal d'image auxiliaire de façon que, lorsque la valeur absolue de la valeur de signal du signal d'image auxiliaire devient petite, cette valeur absolue puisse être convertie en une valeur proche de 1, et de façon que lorsque la valeur absolue de la valeur de signal du signal d'image auxiliaire devient grande, cette valeur absolue puisse être convertie en une valeur proche de 0, et pour obtenir ainsi un signal de rapport d'agrandissement correspondant au signal d'image restreint, et
un moyen de multiplication pour multiplier le signal d'image restreint par le signal de rapport d'agrandissement qui correspond au signal d'image restreint.

37. Un appareil de traitement d'image défini dans la revendication 23, dans lequel la formation des signaux d'image à bande limitée, la formation des signaux d'image convertis, la formation du signal concernant les composantes de fréquence élevée, et l'ajout du signal concernant les composantes de fréquence élevée au signal d'image original, sont accomplis par la formule :$\text{Sproc = Sorg + β(Sorg).Fusm(Sorg,Sus1,Sus2,...,SusN)} \text{Fusm(Sorg,Sus1,Sus2, ...,SusN)} \text{= {f1 (Sorg - Sus1) . g(Sus1 - Sus2)} \text{+ f2(Sus1 - Sus2) . g(Sus2 - Sus3) + ...} \text{+ fk(Susk-1 - Susk) . g(Susk - Susk+1) + ...} \text{+ fN(SusN-1 - SusN) . (SusN - SusN+1)}}$ dans laquelle Sproc représente le signal d'image dans lequel les composantes de fréquence élevée ont été accentuées, Sorg représente le signal d'image original, Susk (k = 1 à N+1) représente le signal d'image de masque non net, fk (k = 1 à N) représente la fonction pour convertir le signal d'image à bande limitée, et obtenir ainsi le signal d'image restreint, g représente la fonction pour convertir le signal d'image auxiliaire et obtenir ainsi le signal de rapport d'agrandissement, et β(Sorg) représente le coefficient d'accentuation déterminé conformément au signal d'image original.

38. Un appareil de traitement d'image défini dans la revendication 23 ou 36, dans lequel la formation des signaux d'image à bande limitée, la formation des signaux d'image convertis, la formation du signal concernant les composantes de fréquence élevée, et l'ajout du signal concernant les composantes de fréquence élevée au signal d'image original, sont accomplis par la formule :$\text{Sproc = Sorg + β(Sorg).Fusm(Sorg,Sus1,Sus2,...,SusN)} \text{Fusm(Sorg,Sus1,Sus2, ...,SusN)} \text{= {f1(Sorg - Sus1) . g(Sorg - Sus2)} \text{+ f2(Sus1 - Sus2) . g(Sorg - Sus3) + ...} \text{+ fk(Susk-1 - Susk) . g(Sorg - Susk+1) + ...} \text{+ fN(SusN-1 - SusN) . g(Sorg - SusN+1)}}$ dans laquelle Sproc représente le signal d'image dans lequel les composantes de fréquence élevée ont été accentuées, Sorg représente le signal d'image original, Susk (k = 1 à N+1) représente le signal d'image de masque non net, fk (k = 1 à N) représente la fonction pour convertir le signal d'image à bande limitée, et obtenir ainsi le signal d'image restreint, g représente la fonction pour convertir le signal d'image auxiliaire et obtenir ainsi le signal de rapport d'agrandissement, et β(Sorg) représente le coefficient d'accentuation déterminé conformément au signal d'image original.

39. Un appareil de traitement d'image défini dans la revendication **23**, dans lequel le moyen de conversion comprend :
un moyen de formation de signal d'image auxiliaire pour convertir, avec une fonction non linéaire, un signal d'image à bande limitée du côté des fréquences basses, qui a une bande de fréquence inférieure à la bande de fréquence d'un signal d'image à bande limitée à convertir, et pour obtenir ainsi un signal d'image auxiliaire pour le signal d'image à bande limitée à convertir, la fonction non linéaire ayant les caractéristiques selon lesquelles la fonction peut passer par une origine, la pente de la fonction à l'origine peut être approximativement égale à 0, et la pente de la fonction peut augmenter progressivement au fur et à mesure que la valeur à traiter devient grande,
un moyen de formation de signal d'image à bande limitée composite, pour ajouter le signal d'image auxiliaire au signal d'image à bande limitée à convertir, et obtenir ainsi un signal d'image à bande limitée composite, et
un moyen de formation de signal d'image converti pour convertir le signal d'image à bande limitée composite de façon que la valeur absolue de la valeur de signal du signal d'image à bande limitée composite puisse être convertie en une valeur qui n'est pas plus grande que ladite valeur absolue et est déterminée conformément à ladite valeur absolue, et pour obtenir ainsi un signal d'image converti.

40. Un appareil de traitement d'image défini dans la revendication 23 ou 39, dans lequel la formation des signaux d'image à bande limitée, la formation des signaux d'image convertis, la formation du signal concernant les composantes de fréquence élevée, et l'ajout du signal concernant les composantes de fréquence élevée au signal d'image original, sont accomplis par la formule :$\text{Sproc = Sorg + β(Sorg).Fusm(Sorg,Sus1,Sus2,...,SusN)} \text{Fusm(Sorg,Sus1,Sus2, ...,SusN)} \text{= [f1{(Sorg - Sus1) + g(Sus1 - Sus2)}} \text{+ f2{(Sus1 - Sus2) + g(Sus2 - Sus3)} + ...} \text{+ fk{(Susk-1 - Susk) +g (Susk - Susk+1)} + ...} \text{+ fN{(SusN-1 - SusN) + g(SusN - SusN+1)}]}$ dans laquelle Sproc représente le signal d'image dans lequel les composantes de fréquence élevée ont été accentuées, Sorg représente le signal d'image original, Susk (k = 1 à N+1) représente le signal d'image de masque non net, fk (k = 1 à N) représente la fonction pour convertir le signal d'image à bande limitée composite, g représente la fonction pour convertir le signal d'image à bande limitée et obtenir ainsi le signal d'image auxiliaire, et β(Sorg) représente le coefficient d'accentuation déterminé conformément au signal d'image original.

41. Un appareil de traitement d'image défini dans l'une quelconque des revendications 23, 24 ou 27, dans lequel le moyen de conversion forme la multiplicité des signaux d'image convertis en convertissant un signal d'image à bande limitée conformément à la partie d'un objet dont l'image a été enregistrée comme l'image originale.

42. Un appareil de traitement d'image défini dans l'une quelconque des revendications 30 ou 31, dans lequel le moyen de conversion forme la multiplicité des signaux d'image convertis en convertissant un signal d'image à bande limitée conformément à la partie d'un objet dont l'image a été enregistrée comme l'image originale.

43. Un appareil de traitement d'image défini dans la revendication **32**, dans lequel le moyen de conversion forme la multiplicité des signaux d'image convertis en convertissant un signal d'image à bande limitée conformément à la partie d'un objet dont l'image a été enregistrée comme l'image originale.

44. Un appareil de traitement d'image défini dans la revendication 33, dans lequel le moyen de conversion forme la multiplicité des signaux d'image convertis en convertissant un signal d'image à bande limitée conformément à la partie d'un objet dont l'image a été enregistrée comme l'image originale.

45. Un appareil de traitement d'image défini dans l'une quelconque des revendications 36 à 40, dans lequel le moyen de conversion forme la multiplicité des signaux d'image convertis en convertissant un signal d'image à bande limitée conformément à la partie d'un objet dont l'image a été enregistrée comme l'image originale.

46. Un appareil de traitement d'image défini dans l'une quelconque des revendications 23, 24, 27, 30 à 33 et 36 à 41, dans lequel l'image originale a été obtenue par une opération d'enregistrement d'image tomographique et contient une configuration de circulation, et le moyen de formation de signal d'image de masque non net forme la multiplicité des signaux d'image de masque non net en effectuant un traitement de masque non net sur le signal d'image original, en utilisant un masque non net unidimensionnel s'étendant dans la direction de la configuration de circulation.
